# EUROPEAN PATENT APPLICATION

(11) **EP 4 765 442 A1**
(43) Date of publication of application: **24.06.2026**
(21) Application number: 24854111.2
(22) Date of filing: 23.07.2024
(51) Int. Cl.: H01M 50/522, H01G 2/02, H01G 4/228, H01G 11/12, H01G 11/76, H01M 50/503, H01M 50/505, H01M 50/526

(54) **BATTERY PACK**

(30) Priority: 14.08.2023 JP 2023132052
(71) Applicant: Vehicle Energy Japan Inc., Hitachinaka-shi, Ibaraki 312-8505 (JP)
(72) Inventor: ODA, Masanari, Hitachinaka-shi, Ibaraki 312-8505 (JP); KUBOTA, Osamu, Hitachinaka-shi, Ibaraki 312-8505 (JP); YAMANE, Teruki, Hitachinaka-shi, Ibaraki 312-8505 (JP); YAMASHITA, Kohei, Hitachinaka-shi, Ibaraki 312-8505 (JP); URAKI, Keiichi, Hitachinaka-shi, Ibaraki 312-8505 (JP); AIZAWA, Yasuyuki, Hitachinaka-shi, Ibaraki 312-8505 (JP); KOSAI, Koji, Hitachinaka-shi, Ibaraki 312-8505 (JP)
(74) Representative: Strehl & Partner mbB
(86) International application number: PCT/JP2024/026324
(87) International publication number: WO 2025/037520

(57) **Abstract**

A battery pack having a bus bar formed by favorable solid-phase bonding of two or more members is obtained.

A bus bar 320 has a first member 321 and a second member 322 having lower hardness than the first member 321. The first member 321 includes a first contact portion 321R in contact with the second member 322 in a lamination direction A, and a non-contact portion 321S continuous with the first contact portion and not in contact with the second member. The second member includes a second contact portion 322R in contact with the first contact portion of the first member in the lamination direction. The first contact portion and the second contact portion include a solid-phase bonding portion 320A. The non-contact portion of the first member is located closer to the second mounting portion 322P of the second member than the solid-phase bonding portion. A distal end 322e of the non-contact portion of the first member is inclined in a direction intersecting with the lamination direction and is separated from the second contact portion of the second member.

## Description

### Technical Field

The present invention relates to a battery pack.

### Background Art

Conventionally, a battery pack having a bus bar formed by solid-phase bonding of two or more members is known (see, for example, Patent Literature 1).

### Citation List

### Patent Literature

Patent Literature 1: Japanese Translation of PCT Application No. 2012-515418

### Summary of Invention

### Technical Problem

There is a demand for a bus bar formed by favorable solid-phase bonding of two or more members.

### Solution to Problem

A battery pack of a first embodiment of the present invention has a plurality of batteries, and a bus bar connected to one of the batteries and another of the batteries or connected to one of the batteries and connected to an external electrical device. The bus bar has a first member having conductivity, and a second member having conductivity, being laminated and bonded with the first member, and having lower hardness than the first member. The first member includes a first mounting portion mounted on an electrode terminal of the one battery or the electrical device, a first contact portion that is continuous with the first mounting portion and is in contact with the second member in a lamination direction, and a non-contact portion that is continuous with the first contact portion and is at least partially not in contact with the second member in the lamination direction. The second member includes a second mounting portion mounted on an electrode terminal of the another battery, and a second contact portion that is continuous with the second mounting portion and is in contact with the first contact portion of the first member in the lamination direction. The first contact portion of the first member and the second contact portion of the second member include a solid-phase bonding portion. For example, the first contact portion and the second contact portion include a solid-phase bonding portion solid-phase bonded in a direction that intersects with the lamination direction and includes at least a side where the first non-contact portion of the first member and the second non-contact portion of the second member are located. The non-contact portion of the first member is located closer to the second mounting portion of the second member than the solid-phase bonding portion. The bus bar includes at least one or more configurations of the following configuration (1), configuration (2), configuration (3), configuration (4), configuration (5) and configuration (6). In the configuration (1), at least a distal end of the non-contact portion of the first member is inclined with respect to a direction intersecting with the lamination direction and is separated from the second contact portion of the second member. In the configuration (2), the second member includes a bent portion that is bent from the second contact portion from one end toward the other end in the lamination direction between the second contact portion and the second mounting portion. At least the distal end of the non-contact portion of the first member is separated from the bent portion of the second member. In the configuration (3), the distal end of the non-contact portion of the first member includes a curved or inclined corner portion facing the second member in the lamination direction. A length of the corner portion of the first member along the lamination direction is 1/10 or more of a length of the non-contact portion of the first member along the lamination direction or 0.1 mm or more. In the configuration (4), the second member includes an inclined portion that is inclined from the second contact portion toward the direction intersecting with the lamination direction between the second contact portion and the second mounting portion. At least the distal end of the non-contact portion of the first member is separated from the inclined portion of the second member. In the configuration (5), the second member includes a recessed portion that is recessed in a direction apart from the non-contact portion of the first member with respect to the lamination direction between the second contact portion and the second mounting portion. At least the distal end of the non-contact portion of the first member is separated from the recessed portion of the second member. In the configuration (6), a pair of the non-contact portions of the first member are formed on both sides of the first contact portion of the first member. At least distal ends of the pair of non-contact portions of the first member are each separated from the second member.

A battery pack of a second embodiment of the present invention has a plurality of batteries, and a bus bar connected to one of the batteries and another of the batteries or connected to one of the batteries and connected to an external electrical device. The bus bar includes a first member having conductivity, and a second member having conductivity, being laminated and bonded with the first member, and being made of the same material as the first member. The first member includes a first mounting portion mounted on an electrode terminal of the one battery or the electrical device, a first contact portion that is continuous with the first mounting portion and is in contact with the second member in a lamination direction, and a first non-contact portion that is continuous with the first contact portion and is at least partially not in contact with the second member in the lamination direction. The second member includes a second mounting portion mounted on an electrode terminal of the another battery, a second contact portion that is continuous with the second mounting portion and is in contact with the first contact portion of the first member in the lamination direction, and a second non-contact portion that is continuous with the second contact portion and is at least partially not in contact with the first contact portion of the first member in the lamination direction. For example, the first contact portion and the second contact portion include a solid-phase bonding portion solid-phase bonded in a direction that intersects with the lamination direction and includes at least a side where the first non-contact portion of the first member and the second non-contact portion of the second member are located. The first contact portion of the first member and the second contact portion of the second member include a solid-phase bonding portion. The first non-contact portion of the first member is located closer to the second mounting portion of the second member than the solid-phase bonding portion. The second non-contact portion of the second member is located closer to the first mounting portion of the first member than the solid-phase bonding portion. The bus bar includes at least one or more configurations of the following configuration (1), configuration (2), configuration (3), configuration (4), configuration (5), and configuration (6) and at least one or more configurations of the following configuration (7), configuration (8), and configuration (9). In the configuration (1), at least a distal end of the first non-contact portion of the first member is inclined with respect to a direction intersecting with the lamination direction and is separated from the second contact portion of the second member. In the configuration (2), the second member includes a second bent portion that is bent along the lamination direction from the second contact portion between the second contact portion and the second mounting portion. For example, the first member may further have the solid-phase bonding portion formed at a place that does not overlap with the first mounting portion in the lamination direction. At least a distal end of the first non-contact portion of the first member is separated from the second bent portion of the second member. In the configuration (3), a distal end of the first non-contact portion of the first member includes a curved or inclined corner portion facing the second member in the lamination direction. The length of the corner portion of the first member along the lamination direction is 1/10 or more of the length of the first non-contact portion of the first member along the lamination direction or 0.1 mm or more. In the configuration (4), the second member includes a second inclined portion that is inclined from the second contact portion toward the direction intersecting with the lamination direction between the second contact portion and the second mounting portion. At least a distal end of the first non-contact portion of the first member is separated from the second inclined portion of the second member. In the configuration (5), the second member includes a recessed portion that is recessed in a direction apart from the first non-contact portion of the first member with respect to the lamination direction between the second contact portion and the second mounting portion. At least a distal end of the first non-contact portion of the first member is separated from the recessed portion of the second member. In the configuration (6), a pair of the non-contact portions of the first member are formed on both sides of the first contact portion of the first member. At least distal ends of the pair of non-contact portions of the first member are each separated from the second member. In the configuration (7), a distal end of the second non-contact portion of the second member includes a curved or inclined corner portion facing the first member in the lamination direction. The length of the corner portion of the second member along the lamination direction is 1/10 or more of the length of the second non-contact portion of the second member along the lamination direction or 0.1 mm or more. In the configuration (8), at least a distal end of the second non-contact portion of the second member is inclined with respect to the direction intersecting with the lamination direction and is separated from the first contact portion of the first member. In the configuration (9), the first member includes a recessed portion that is recessed in the direction apart from the second non-contact portion of the second member with respect to the lamination direction between the first contact portion and the first mounting portion. At least a distal end of the second non-contact portion of the second member is separated from the recessed portion of the first member.

A battery pack of a third embodiment of the present invention has a plurality of batteries, and a bus bar connected to one of the batteries and another of the batteries or connected to one of the batteries and connected to an external electrical device. The bus bar has a first member having conductivity, and a second member having conductivity, being laminated and bonded with the first member, and having lower hardness than the first member. The first member includes a first contact portion in contact with the second member in a lamination direction, and a non-contact portion that is annularly continuous with the first contact portion from the outside of the first contact portion on a surface of the first contact portion that intersects with the lamination direction and includes an annular portion that is not contact with the second member in the lamination direction. The second member includes a second contact portion that is in contact with the first contact portion of the first member in the lamination direction. The non-contact portion of the first member annularly surrounds the second contact portion of the second member on a surface intersecting with the lamination direction. The first contact portion of the first member and the second contact portion of the second member include a solid-phase bonding portion annularly solid-phase bonded on a surface intersecting with the lamination direction and along a region where the non-contact portion of the first member is located.

A battery pack according to a fourth embodiment of the present invention is a battery pack having a plurality of laminated batteries each including an electrode terminal and an electrode terminal of a first battery, an electrode terminal of a second battery electrically connected to the first battery, or a bus bar connected to an external electrical device. The bus bar has a first member having conductivity, a second member having conductivity, an overlapping portion in which the first member and the second member are partially overlapped, and a solid-phase bonding portion formed on the overlapping portion. The first member has a first mounting portion having a first mounting surface connected to any of the first battery or the electrical device and a first rear surface located on an opposite side of the first mounting surface, a first overlapping portion configuring the overlapping portion, and the solid-phase bonding portion formed on the first overlapping portion and disposed apart from the first rear surface. The second member has a second mounting portion having a second mounting surface connected to any of the second battery or the electrical device in a case where the first member is connected to the first battery or the first battery in a case where the first member is connected to the electrical device, and a second rear surface located on an opposite side of the second mounting surface, a second overlapping portion configuring the overlapping portion, and the solid-phase bonding portion formed on the second overlapping portion and disposed apart from the second rear surface. The first overlapping portion has a non-contact portion located apart from the second overlapping portion in an overlapping direction of the first overlapping portion and the second overlapping portion, and a distal end formed in the non-contact portion.

### Advantageous Effects of Invention

A battery pack having a bus bar formed by favorable solid-phase bonding of two or more members can be obtained.

### Brief Description of Drawings

[Fig. 1]

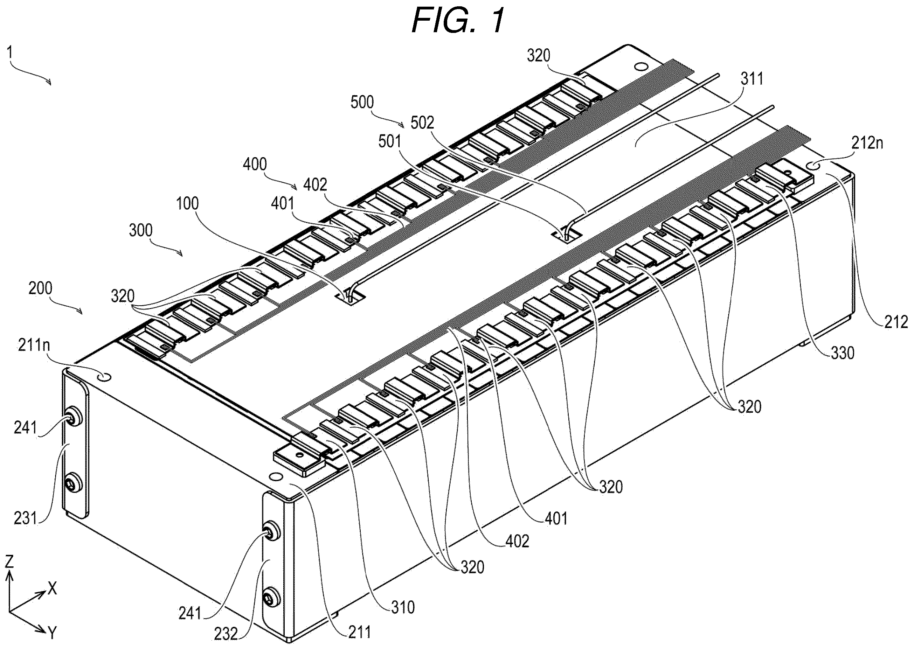

   Fig. 1 is a perspective view showing a battery pack 1 of a first embodiment.
[Fig. 2]

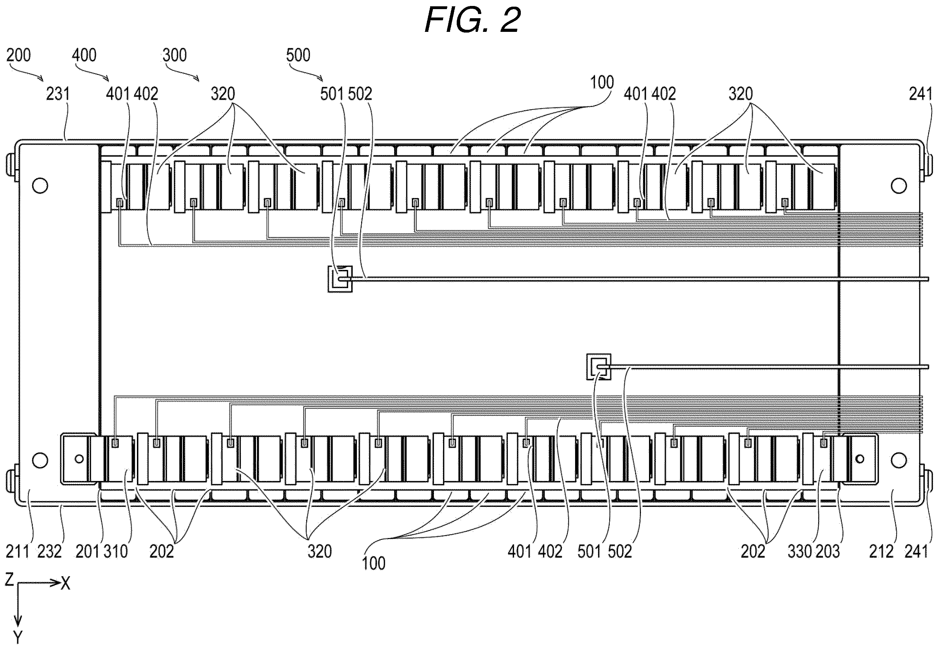

   Fig. 2 is a top view of the battery pack 1 of Fig. 1 with a bus bar holder 340 removed.
[Fig. 3]

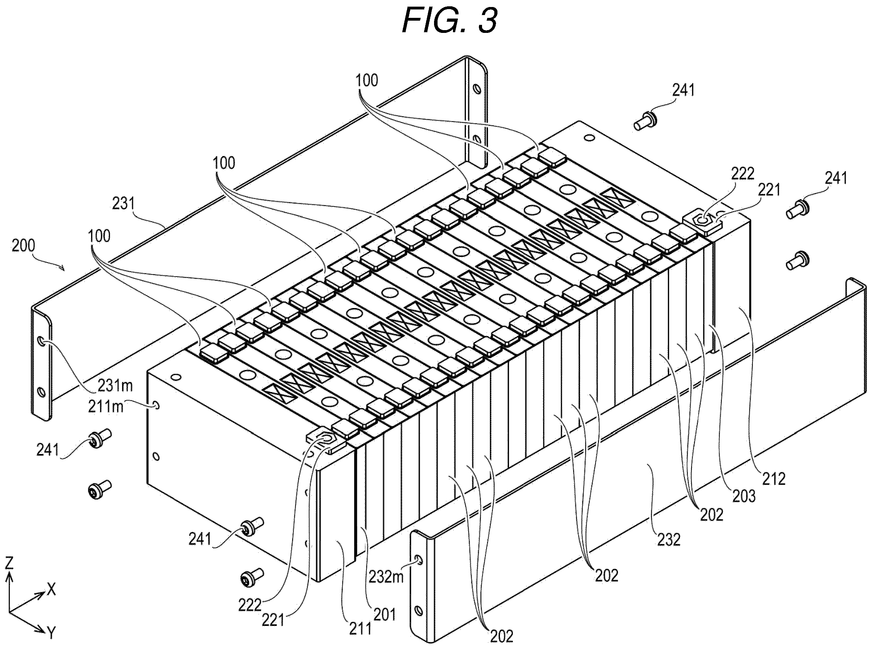

   Fig. 3 is a perspective view showing a plurality of batteries 100 and a holding unit 200 in a state where some of components of the holding unit 200 are disassembled in a width direction Y and a lamination direction X.
[Fig. 4]

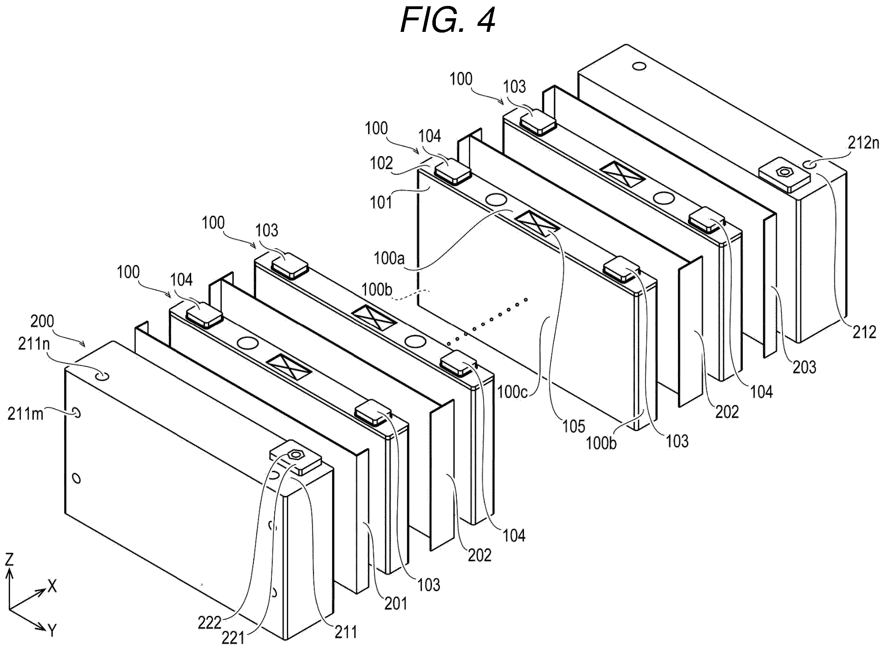

   Fig. 4 is a perspective view of Fig. 3 in a state where a first side plate 231, a second side plate 232, and fastening bolts 241 are removed, and components of the batteries 100 and the holding unit 200 are disassembled in the lamination direction X.
[Fig. 5]

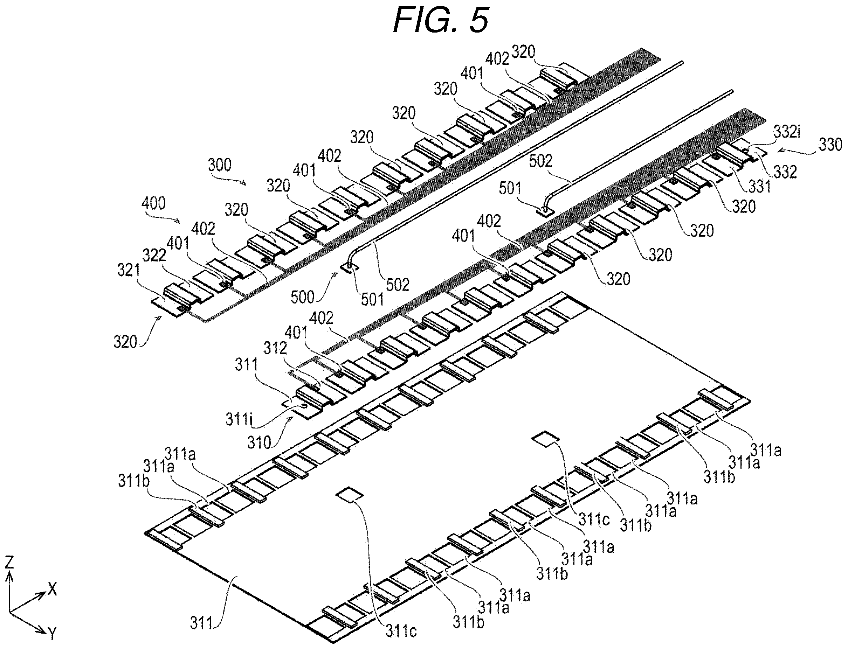

   Fig. 5 is a perspective view showing a bus bar unit 300, a voltage detection unit 400, and a temperature measurement unit 500.
[Fig. 6]

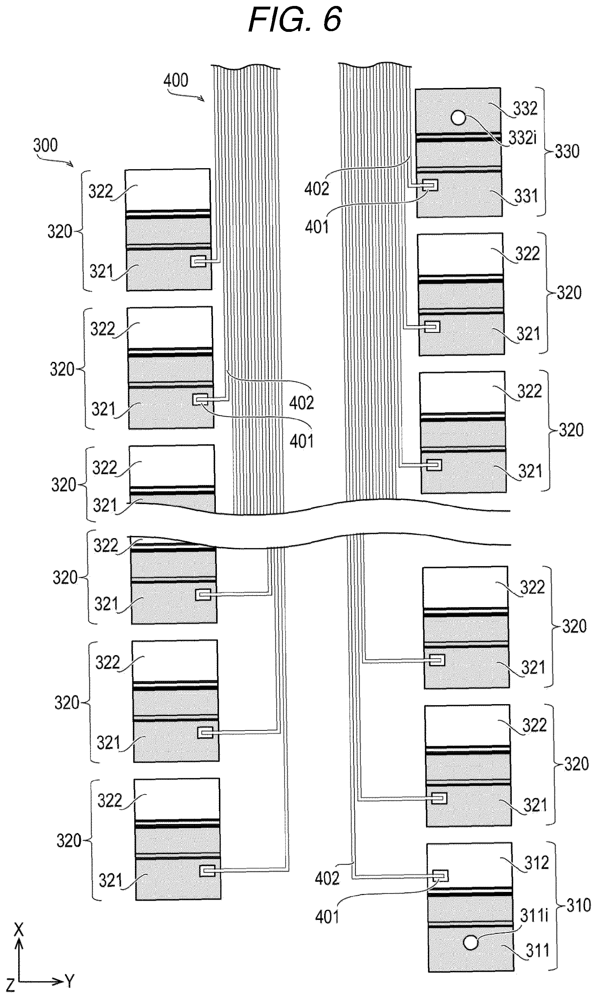

   Fig. 6 is a top view showing the bus bar unit 300 and the voltage detection unit 400.
[Fig. 7]

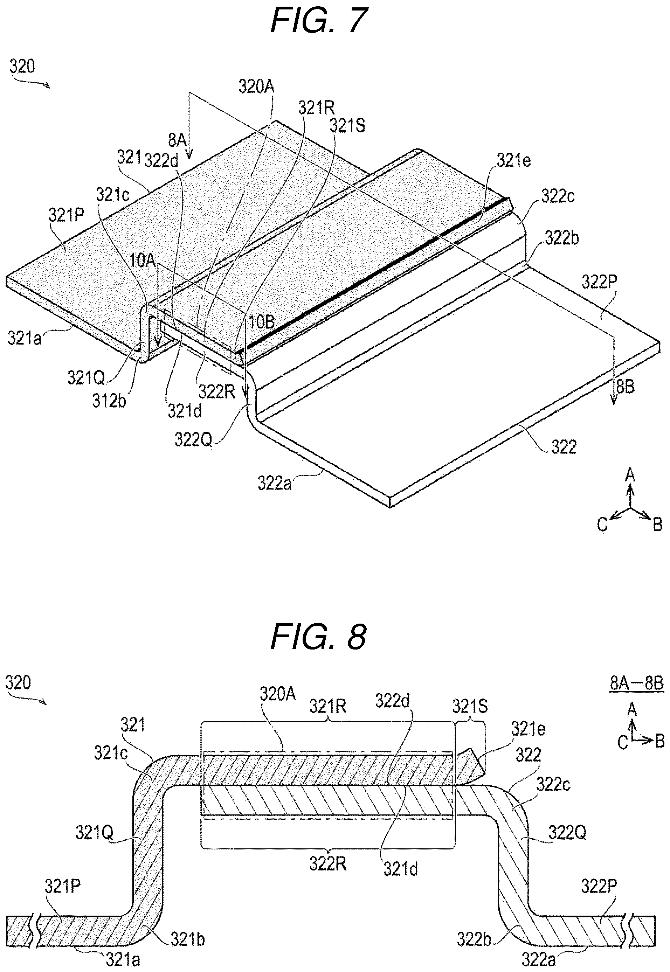

   Fig. 7 is a perspective view showing a bus bar 320 of the first embodiment.
[Fig. 8]
   Fig. 8 is a cross-sectional view showing the bus bar 320 of the first embodiment.
[Fig. 9]

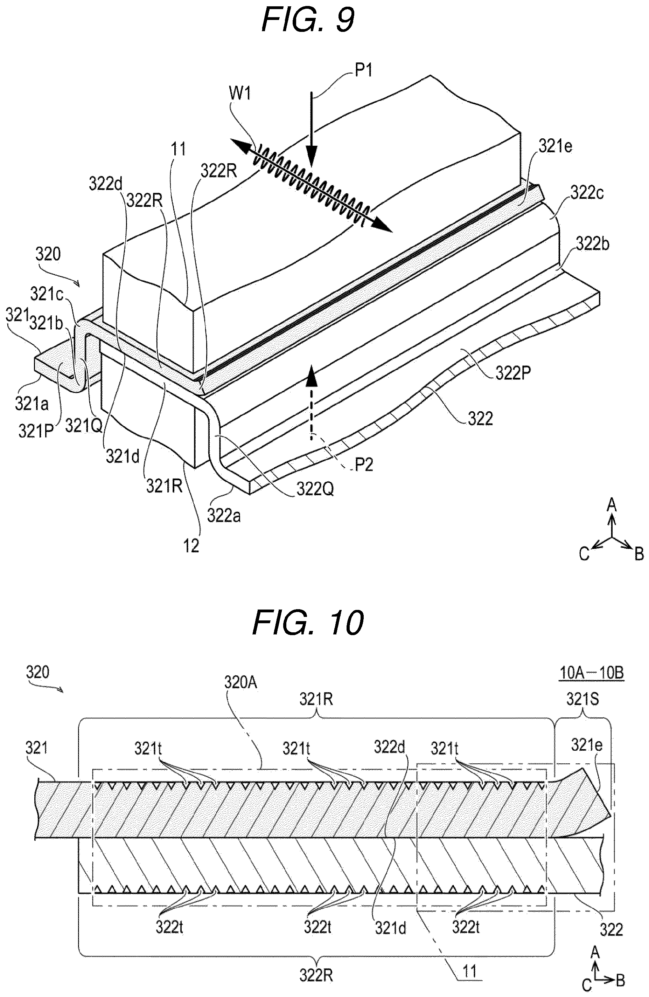

   Fig. 9 is a schematic view showing solid-phase bonding of the bus bar 320 of the first embodiment.
[Fig. 10]
   Fig. 10 is a cross-sectional view schematically showing a state where a first member 311 and a second member 322 of the bus bar 320 have been solid-phase bonded by ultrasonic waves.
[Fig. 11]

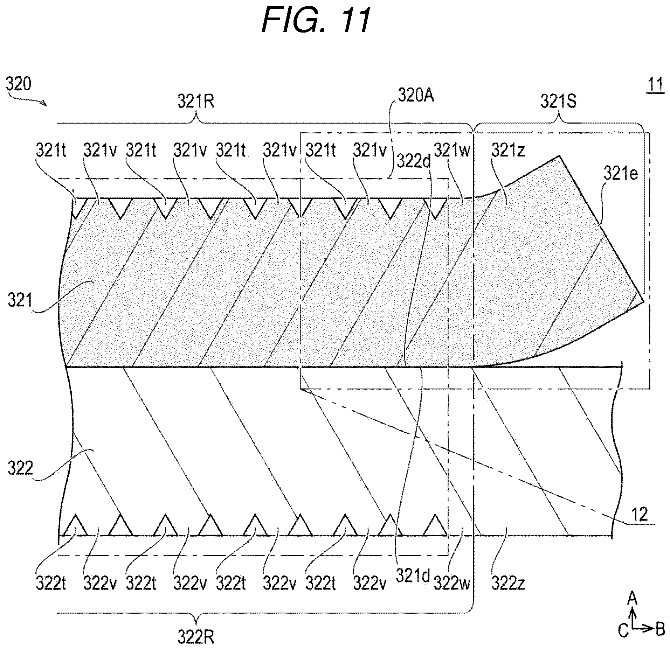

   Fig. 11 is a cross-sectional view showing a configuration of a region 11 in Fig. 10.
[Fig. 12]

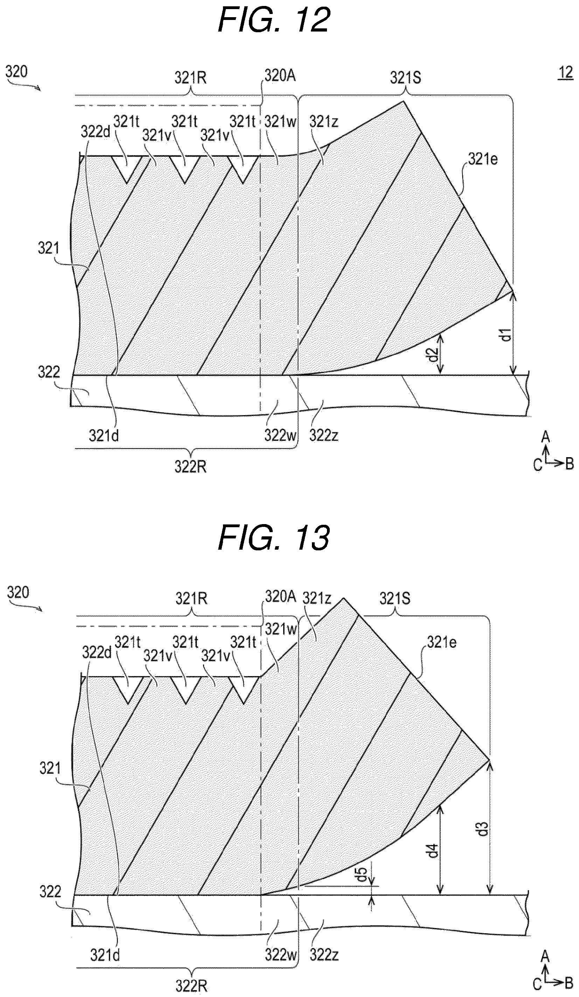

   Fig. 12 is a cross-sectional view showing a configuration of a region 12 in Fig. 11.
[Fig. 13]
   Fig. 13 is a cross-sectional view showing another form of the configuration of the region 12 in Fig. 11.
[Fig. 14]

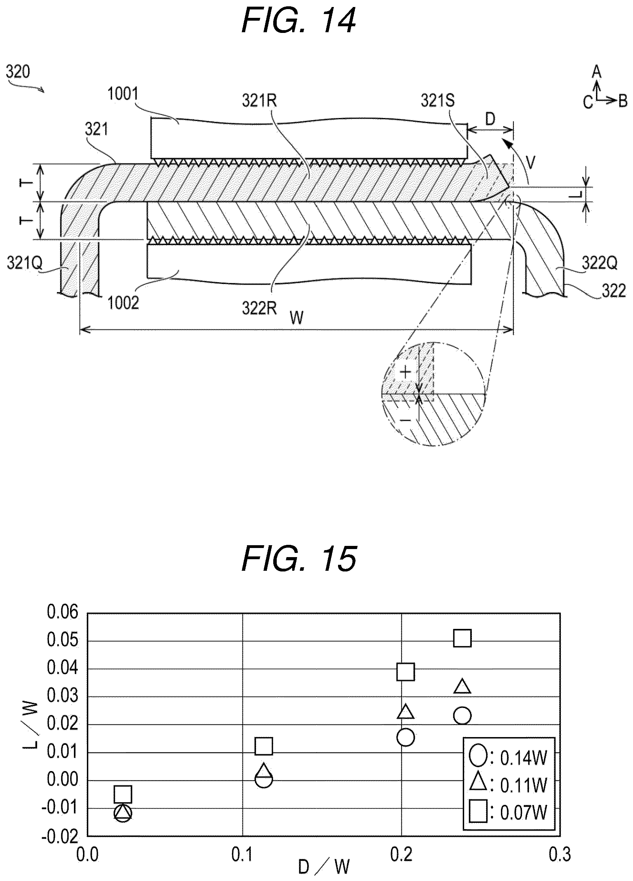

   Fig. 14 is a cross-sectional view showing a state of solid-phase bonding of the bus bar 320.
[Fig. 15]
   Fig. 15 is a view showing a relationship between L/W and D/W defined for the bus bar 320.
[Fig. 16]

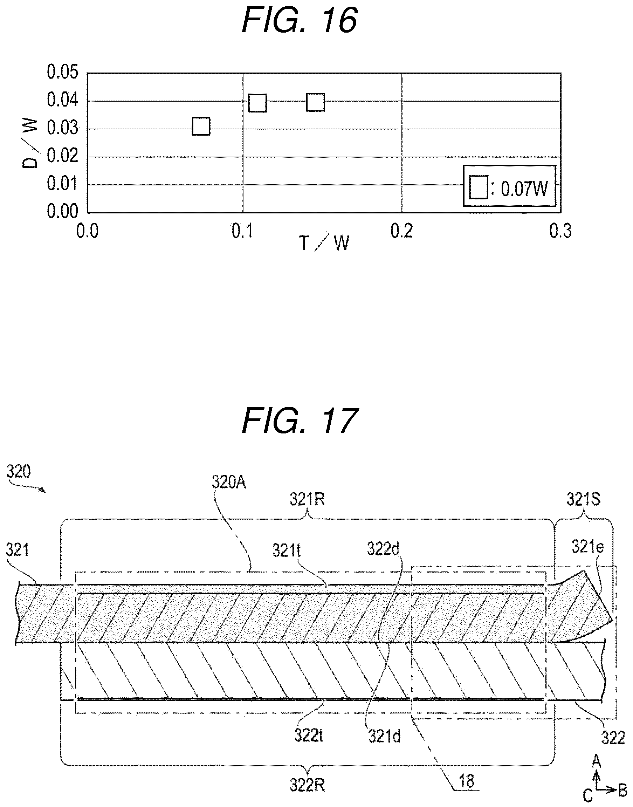

   Fig. 16 is a view showing a relationship between D/W and T/W defined for the bus bar 320.
[Fig. 17]
   Fig. 17 is a cross-sectional view schematically showing a state where the first member 311 and the second member 322 of the bus bar 320 are solid-phase bonded by friction stir.
[Fig. 18]

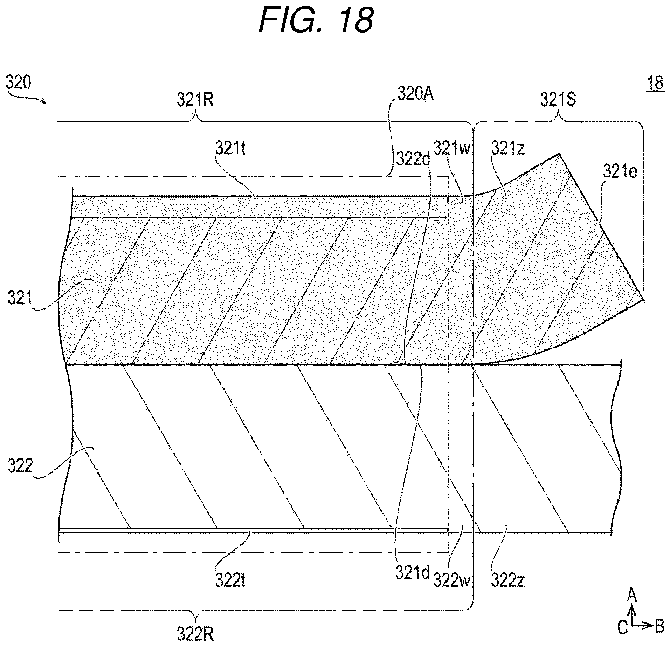

   Fig. 18 is a cross-sectional view showing a configuration of a region 18 in Fig. 17.
[Fig. 19]

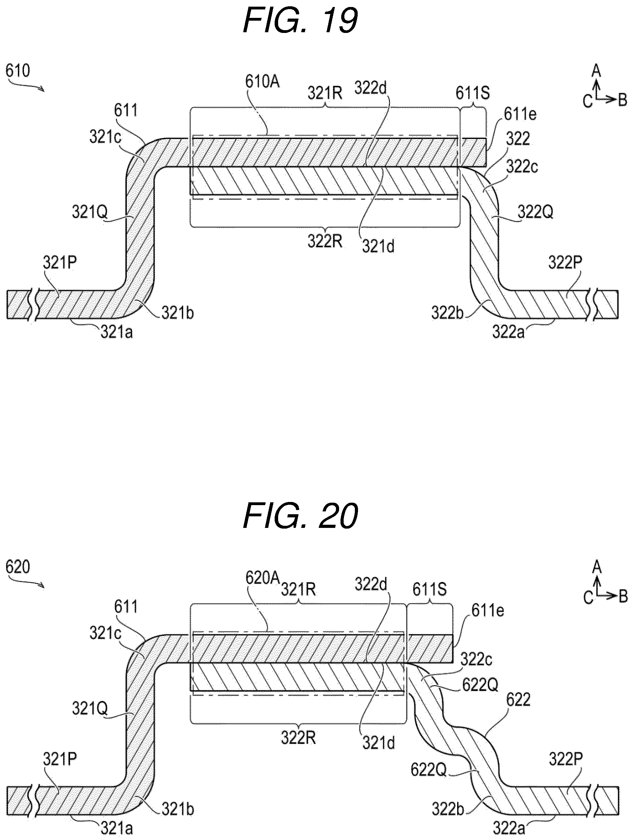

   Fig. 19 is a cross-sectional view showing a bus bar 610 of a modification 1 of the first embodiment.
[Fig. 20]
   Fig. 20 is a cross-sectional view showing a bus bar 620 of a modification 2 of the first embodiment.
[Fig. 21]

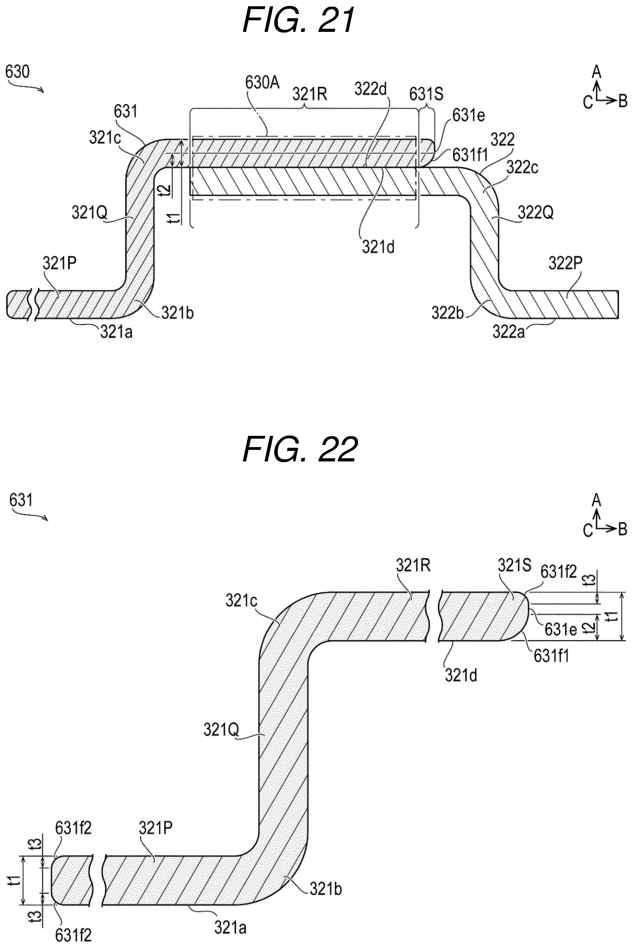

   Fig. 21 is a cross-sectional view showing a bus bar 630 of a modification 3 of the first embodiment.
[Fig. 22]
   Fig. 22 is a cross-sectional view showing a first member 631 of the bus bar 630.
[Fig. 23]

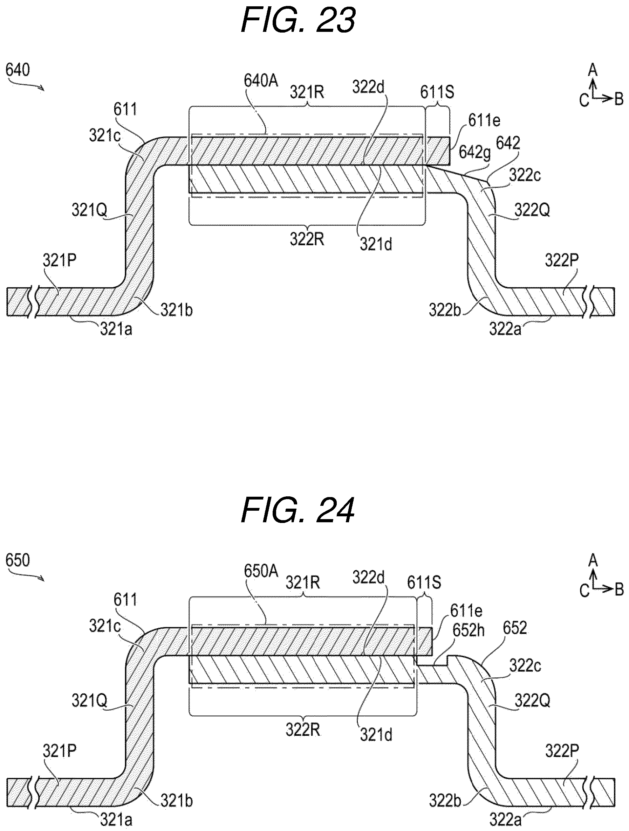

   Fig. 23 is a cross-sectional view showing a bus bar 640 of a modification 4 of the first embodiment.
[Fig. 24]
   Fig. 24 is a cross-sectional view showing a bus bar 650 of a modification 5 of the first embodiment.
[Fig. 25]

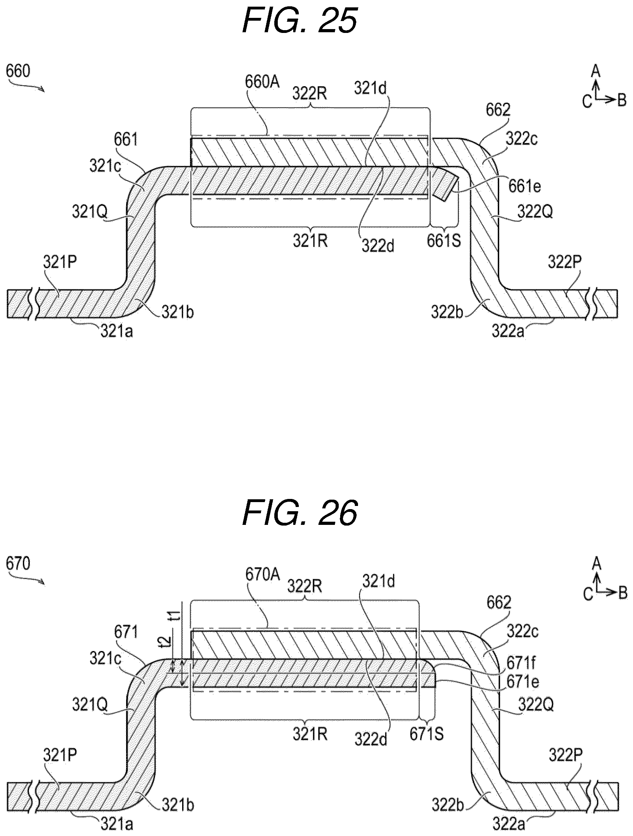

   Fig. 25 is a cross-sectional view showing a bus bar 660 of a modification 6 of the first embodiment.
[Fig. 26]
   Fig. 26 is a cross-sectional view showing a bus bar 670 of a modification 7 of the first embodiment.
[Fig. 27]

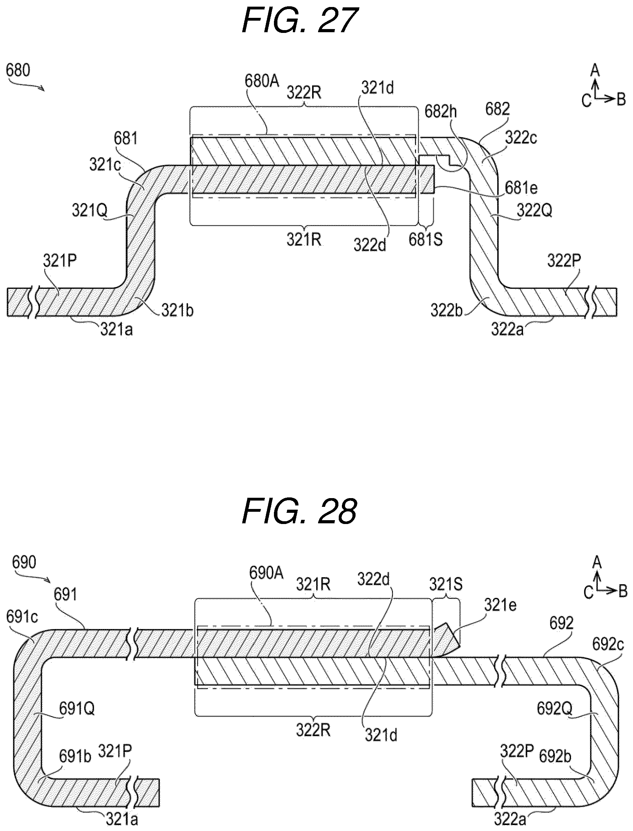

   Fig. 27 is a cross-sectional view showing a bus bar 680 of a modification 8 of the first embodiment.
[Fig. 28]
   Fig. 28 is a cross-sectional view showing a bus bar 690 of a modification 9 of the first embodiment.
[Fig. 29]

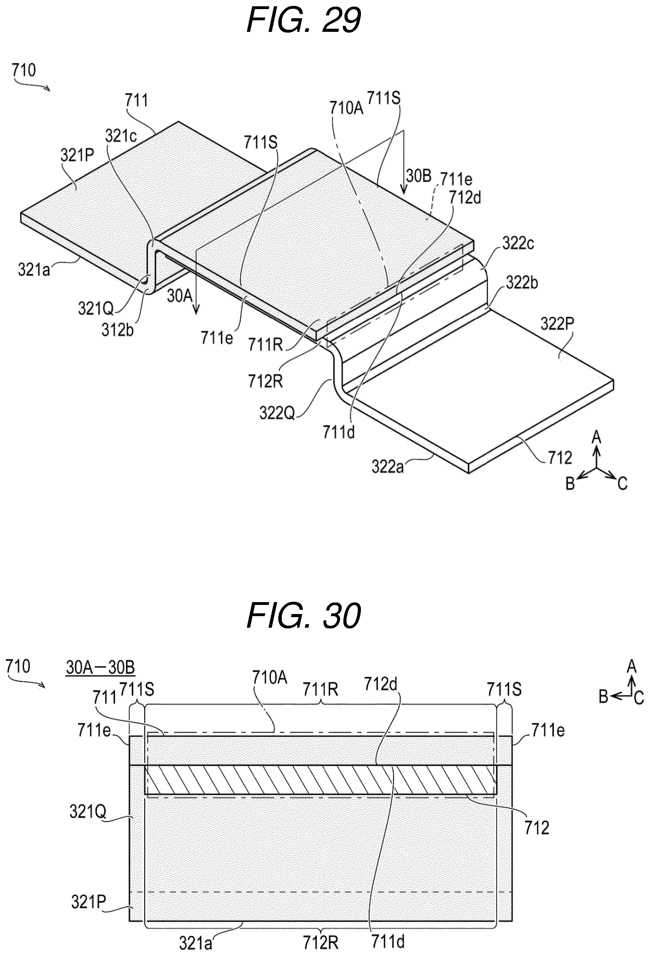

   Fig. 29 is a perspective view showing a bus bar 710 of a second embodiment.
[Fig. 30]
   Fig. 30 is a cross-sectional view showing the bus bar 710 of the second embodiment.
[Fig. 31]

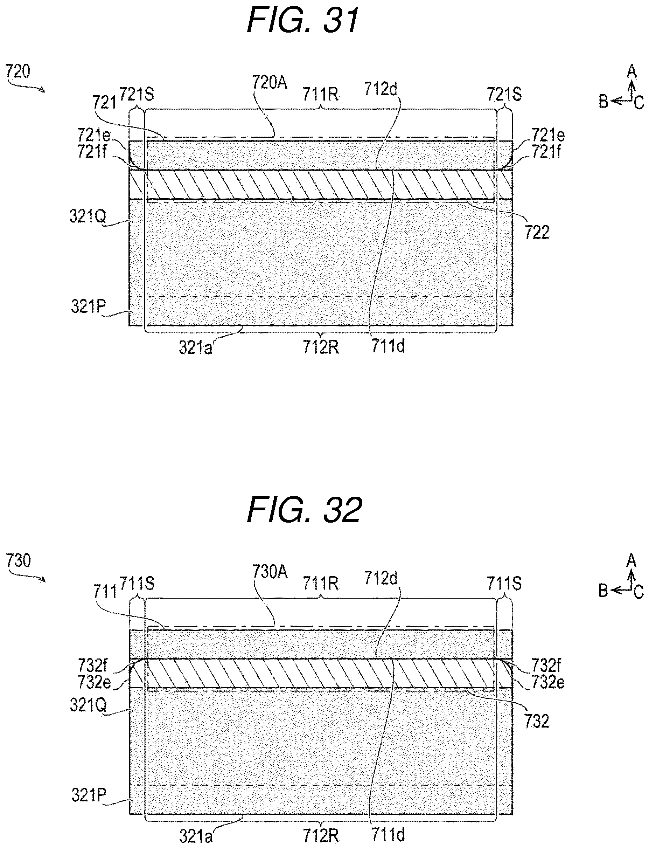

   Fig. 31 is a cross-sectional view showing a bus bar 720 of a modification 1 of the second embodiment.
[Fig. 32]
   Fig. 32 is a cross-sectional view showing a bus bar 730 of a modification 2 of the second embodiment.
[Fig. 33]

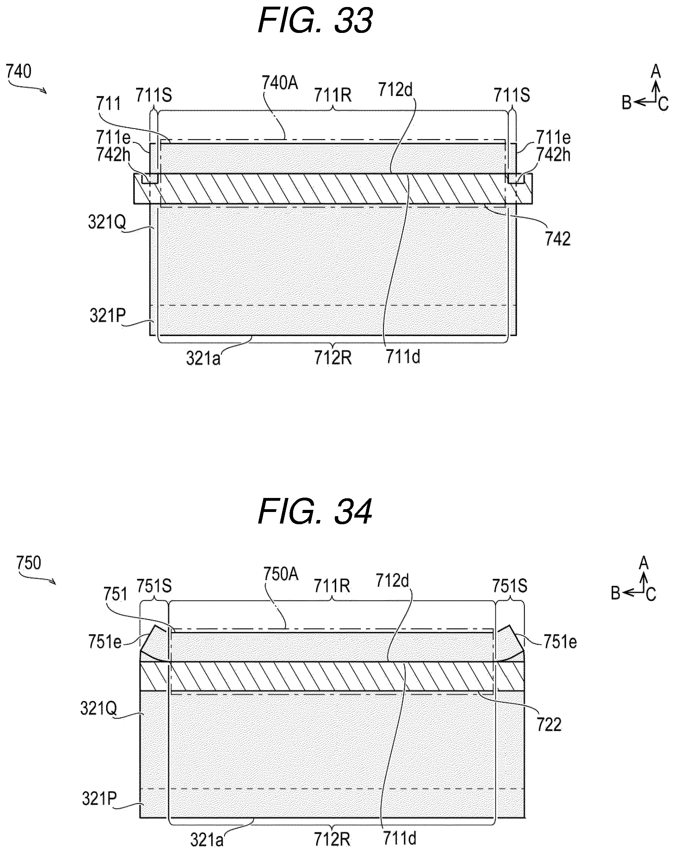

   Fig. 33 is a cross-sectional view showing a bus bar 740 of a modification 3 of the second embodiment.
[Fig. 34]
   Fig. 34 is a cross-sectional view showing a bus bar 750 of a modification 4 of the second embodiment.
[Fig. 35]

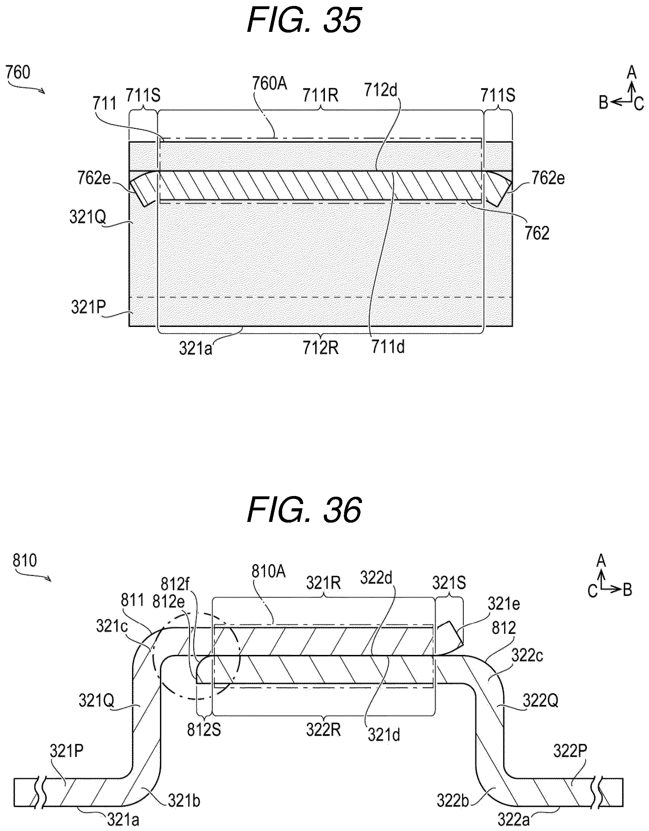

   Fig. 35 is a cross-sectional view showing a bus bar 760 of a modification 5 of the second embodiment.
[Fig. 36]
   Fig. 36 is a cross-sectional view showing a bus bar 810 of a third embodiment.
[Fig. 37]

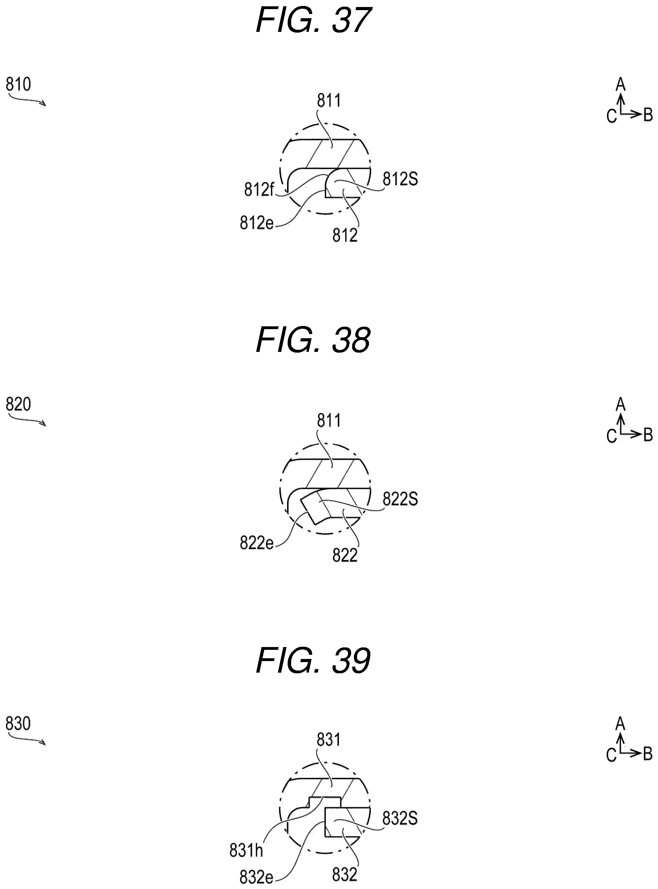

   Fig. 37 is a cross-sectional view partially showing the bus bar 810 of the third embodiment.
[Fig. 38]
   Fig. 38 is a cross-sectional view partially showing a bus bar 820 of the modification 1 of the third embodiment.
[Fig. 39]
   Fig. 39 is a cross-sectional view partially showing a bus bar 830 of the modification 2 of the third embodiment.
[Fig. 40]

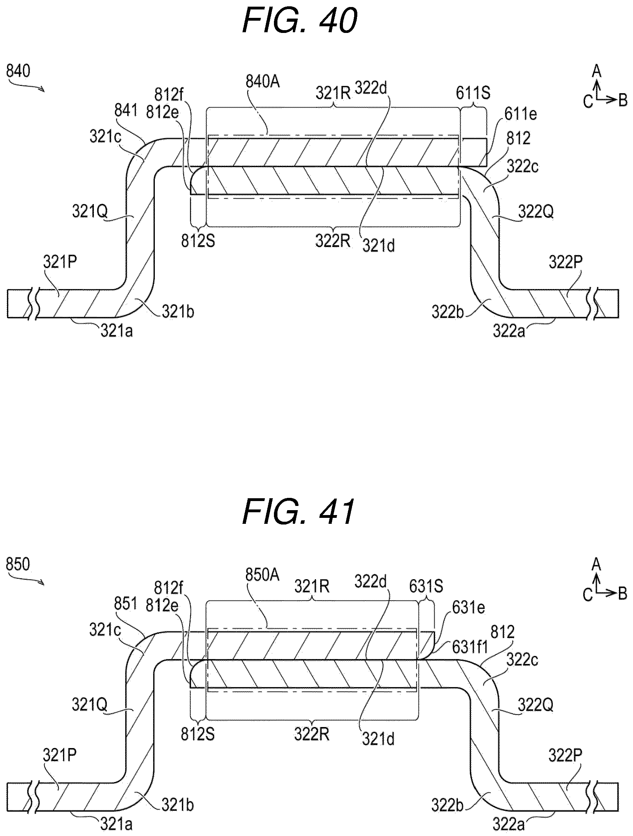

   Fig. 40 is a cross-sectional view showing a bus bar 840 of the modification 3 of the third embodiment.
[Fig. 41]
   Fig. 41 is a cross-sectional view showing a bus bar 850 of the modification 4 of the third embodiment.
[Fig. 42]

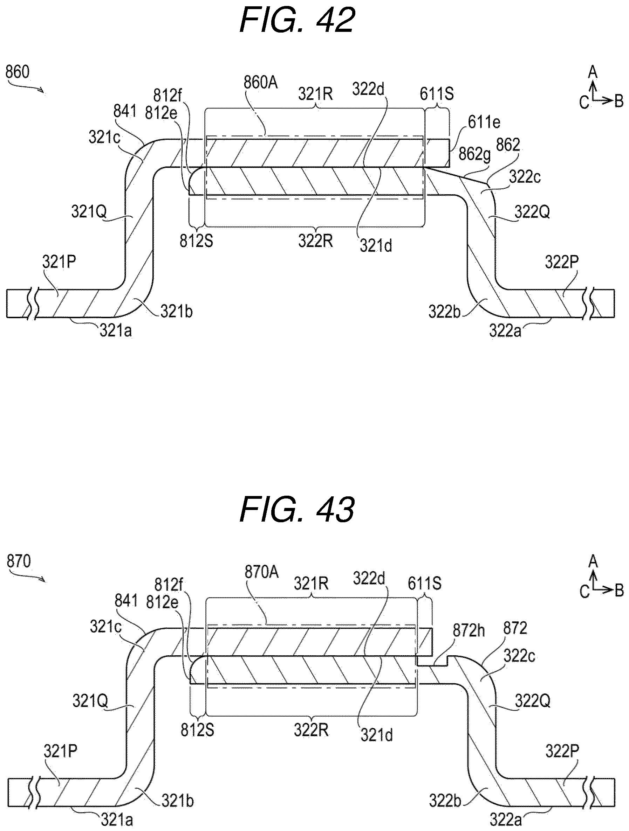

   Fig. 42 is a cross-sectional view showing a bus bar 860 of the modification 5 of the third embodiment.
[Fig. 43]
   Fig. 43 is a cross-sectional view showing a bus bar 870 of the modification 6 of the third embodiment.
[Fig. 44]

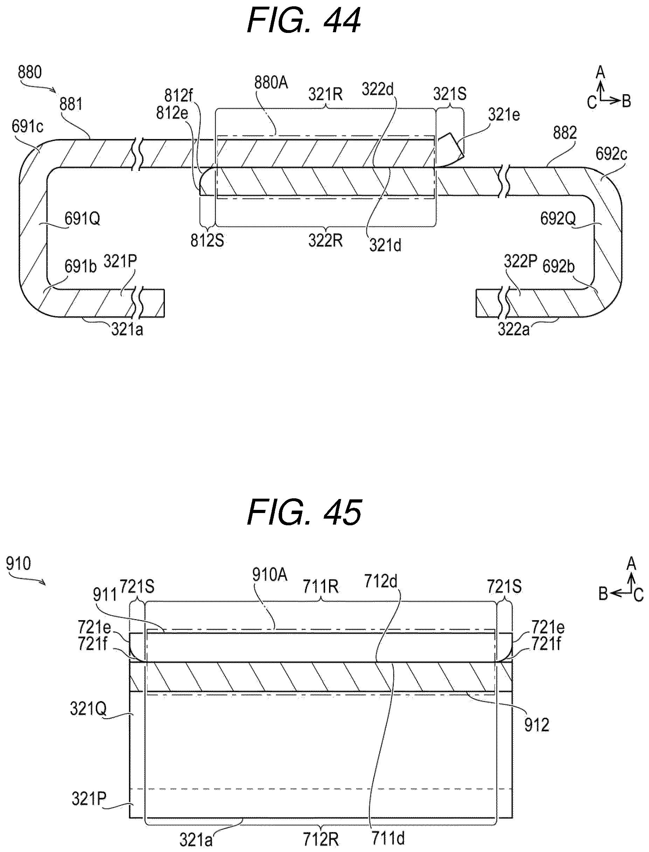

   Fig. 44 is a cross-sectional view showing a bus bar 880 of the modification 7 of the third embodiment.
[Fig. 45]
   Fig. 45 is a cross-sectional view showing a bus bar 910 of a fourth embodiment.
[Fig. 46]

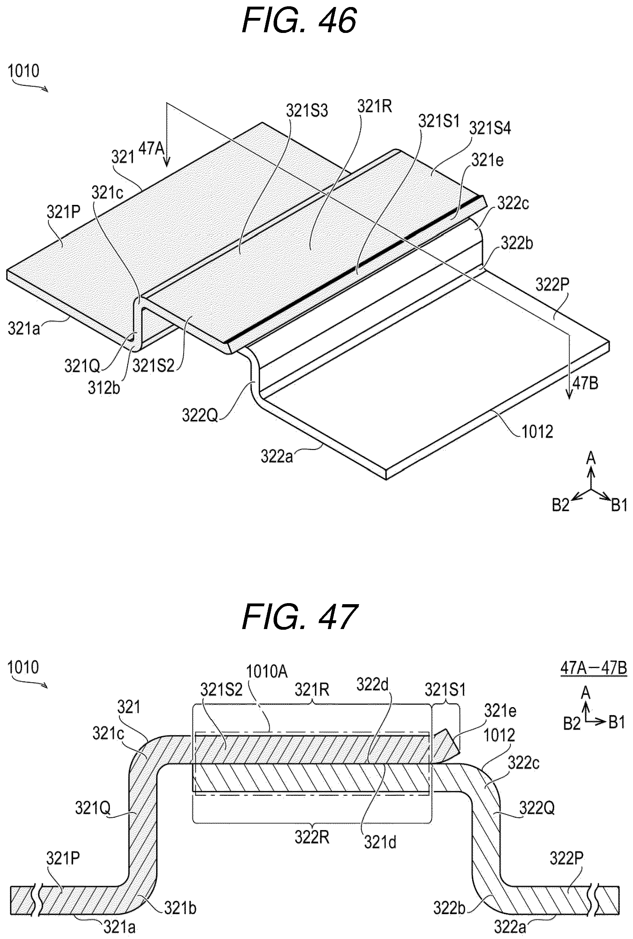

   Fig. 46 is a perspective view showing a bus bar 1010 of a fifth embodiment.
[Fig. 47]
   Fig. 47 is a cross-sectional view showing the bus bar 1010 of the fifth embodiment.
[Fig. 48]

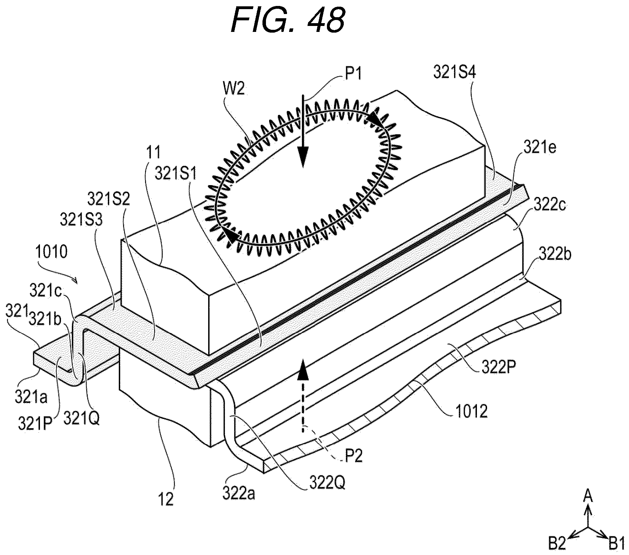

   Fig. 48 is a schematic view showing solid-phase bonding of the bus bar 1010 of the fifth embodiment.
[Fig. 49]

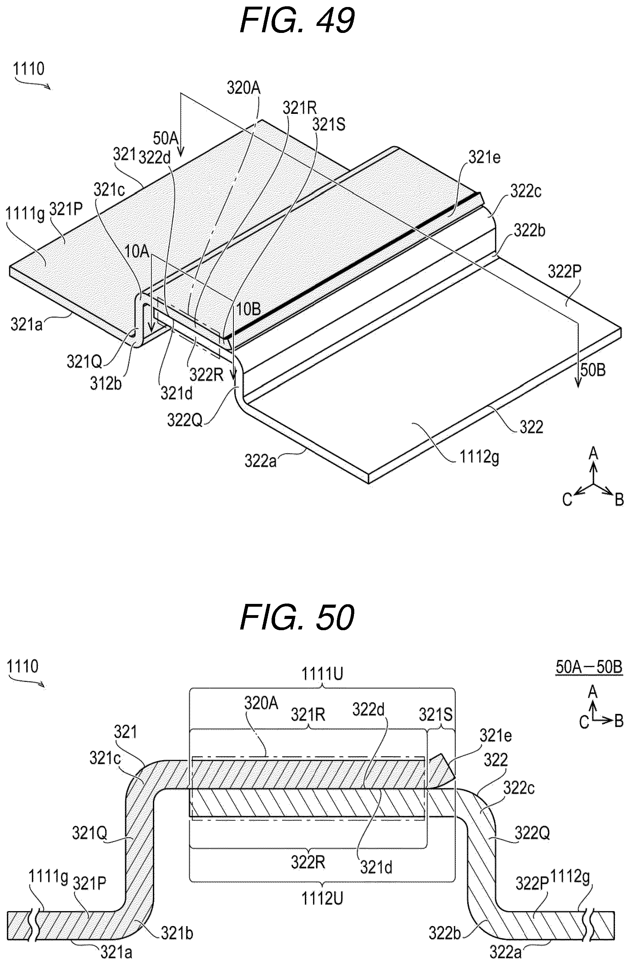

   Fig. 49 is a perspective view showing a bus bar 1110 of a sixth embodiment.
[Fig. 50]
   Fig. 50 is a cross-sectional view showing the bus bar 1110 of the sixth embodiment.

### Description of Embodiments

Embodiments for carrying out the present invention will be described with reference to the drawings. In order to facilitate understanding of each embodiment, the sizes and ratios of the components may be exaggerated in each drawing. In a case where there is a relationship in size or length between the shape or length of a first member and the shape or length of a second member, the shape or length of the first member and the shape or length of the second member may be exaggerated and changed. In each of the drawings, the same reference numerals are assigned to the same components. In each of the drawings, a lamination direction X, a width direction Y, and a height direction Z of a battery pack 1 are indicated by arrows. However, in each of the drawings, the lamination direction X, the width direction Y, and the height direction Z of the battery pack 1 indicate a relative locational relationship in the same drawing. That is, in a case where the battery pack 1 is rotated by 180 degrees to reverse the upper surface and the lower surface or where the battery pack 1 is rotated by 90 degrees to arrange the upper surface as a side surface, the lamination direction X, the width direction Y, and the height direction Z of the battery pack 1 change. The lamination direction A of a first member 321 or the like and a second member 322 or the like, a direction B along a contact surface 321d or a contact surface 322d having a solid-phase bonding portion of the first member 321 or the like and the second member 322 or the like, and a direction C orthogonal to the direction B are indicated by arrows. The direction B indicated by an arrow is for easy understanding of embodiments corresponding to the invention and is illustrative. In each of the drawings, threads on the outer peripheral surface of a fastening bolt and grooves on the inner peripheral surface of an insert nut are not shown. For example, the direction B is a vibration direction in solid-phase bonding.

### (General configuration provided in battery pack 1 of first embodiment)

A general configuration provided in a battery pack 1 of a first embodiment will be described with reference to Fig. 1 to Fig. 6.

Fig. 1 is a perspective view showing the battery pack 1 of the first embodiment. Fig. 2 is a top view of the battery pack 1 in Fig. 1 with a bus bar holder 340 removed. Fig. 3 is a perspective view showing a plurality of batteries 100 and a holding unit 200 in a state where some of components of the holding unit 200 are disassembled in the width direction Y and the lamination direction X. Fig. 4 is a perspective view of Fig. 3 in a state where a first side plate 231, a second side plate 232, and fastening bolts 241 are removed, and components of the batteries 100 and the holding unit 200 are disassembled in the lamination direction X. Fig. 5 is a perspective view showing a bus bar unit 300, a voltage detection unit 400, and a temperature measurement unit 500. Fig. 6 is a top view showing the bus bar unit 300 and the voltage detection unit 400.

The battery pack 1 is configured as, for example, a power source for operating a motor for driving a vehicle. The battery pack 1 may be configured as, for example, a power source for operating an electrical device mounted on a vehicle.

As shown in Fig. 1, the battery pack 1 includes a plurality of the batteries 100, the holding unit 200 for holding the plurality of batteries 100, and the bus bar unit 300 for electrically connecting the plurality of batteries 100. The battery pack 1 also includes the voltage detection unit 400 for detecting the voltages of the batteries 100, and the temperature measurement unit 500 for measuring the temperatures of the batteries 100. The configuration in the battery pack 1 will be described below.

### (Configuration of battery 100)

The batteries 100 shown in Fig. 1 to Fig. 4 are laminated along the lamination direction X via the holding unit 200. As shown in Fig. 2, for example, 20 batteries 100 are laminated. The battery 100 is configured, for example, by a lithium ion secondary battery. The battery 100 includes a current collector and an electrolyte. The battery 100, as shown in Fig. 4, includes a container 101, a lid 102, a positive electrode terminal 103, a negative electrode terminal 104, and a safety valve 105. The configuration in the battery 100 will be described below.

As shown in Fig. 4, the battery 100 is formed in a rectangular shape. The positive electrode terminal 103 and the negative electrode terminal 104 are provided on an upper surface 100a of the battery 100 along the lamination direction X. The upper surface 100a corresponds to the upper surface of the battery 100 in Fig. 4. The upper surface 100a is formed in a rectangular shape. The upper surface 100a has a length along the width direction Y of the battery 100 longer than a length along the lamination direction X of the batteries 100. The upper surface 100a faces the bus bar unit 300 shown in Fig. 1. Two side surfaces 100b along the lamination direction X of the batteries 100 face the upper surface 100a at right angles. The side surface 100b is formed in a rectangular shape. The side surface 100b has a length along the height direction Z of the battery 100 longer than a length along the lamination direction X of the batteries 100. Two main surfaces 100c facing each other in the lamination direction X of the batteries 100 are in contact with a cell spacer 202 or the like of the holding unit 200.

The current collector of the battery 100 corresponds to a charge/discharge body to/from which power is input/output. The current collector of the battery 100 is configured by winding or laminating a positive electrode and a negative electrode via a separator. The container 101 contains the current collector and an electrolyte. The lid 102 seals the current collector and the electrolyte together with the container 101. The lid 102 is bonded to the container 101. The positive electrode terminal 103 and the negative electrode terminal 104 relay the input/output of power between the current collector and the electrical device. The positive electrode terminal 103 and the negative electrode terminal 104 are mounted on the lid 102. As shown in Fig. 4, the positive electrode terminal 103 of one battery 100 and the negative electrode terminal 104 of another battery 100 adjacent thereto in the lamination direction X face each other in the lamination direction X. The safety valve 105 cleaves toward the outside of the battery 100 when the internal pressure of the battery 100 exceeds a predetermined value. The safety valve 105 is also referred to as a cleavage valve. The safety valve 105 is provided on, for example, the lid 102.

### (Configuration of holding unit 200)

The holding unit 200 holds the plurality of batteries 100 as shown in Fig. 1 to Fig. 4. The holding unit 200 includes a first end spacer 201, cell spacers 202, and a second end spacer 203 as shown in Fig. 4. The holding unit 200 also includes a first end block 211, a second end block 212, insulating members 221, and insert nuts 222. As shown in Fig. 3, the holding unit 200 also includes a first side plate 231, a second side plate 232, and fastening bolts 241. The configuration in the holding unit 200 will be described below.

As shown in Fig. 4, the first end spacer 201 is provided between the first end block 211 and the battery 100. The first end spacer 201 is in contact with a first battery 100 located on one end side out of the 20 laminated batteries 100. This battery 100 corresponds to the battery 100 located at the left end in Fig. 2. The first end spacer 201 insulate the first end block 211 and the battery 100. The first end spacer 201 covers each side surface of the first end block 211 and the battery 100 along the width direction Y. The first end spacer 201 covers a part of the side surface 100b along the lamination direction X of the batteries 100. The thickness of the first end spacer 201 along the lamination direction X is sufficiently thinner than the thickness of the battery 100 along the lamination direction X. The first end spacer 201 is formed of an insulating material.

As shown in Fig. 4, the cell spacer 202 is provided between adjacent batteries 100. The cell spacer 202 holds and isolates the adjacent batteries 100. The cell spacer 202 covers the respective main surfaces 100c of the adjacent batteries 100 along the width direction Y and parts of the respective side surfaces 100b of the adjacent batteries 100 along the lamination direction X. The thickness of the cell spacer 202 along the lamination direction X is sufficiently thinner than the thickness of the battery 100 along the lamination direction X. The cell spacer 202 is formed of an insulating material.

The second end spacer 203 is provided between the battery 100 and the second end block 212, as shown in Fig. 4. The second end spacer 203 is in contact with the twentieth battery 100 located on the other end side out of the 20 laminated batteries 100. This battery 100 corresponds to the battery 100 located at the right end in Fig. 2. The second end spacer 203 isolates the battery 100 from the second end block 212. The second end spacer 203 covers the respective side surfaces of the second end block 212 and the battery 100 along the width direction Y. The second end spacer 203 covers parts of the side surfaces 100b of the battery 100 along the lamination direction X. The thickness of the second end spacer 203 along the lamination direction X is sufficiently thinner than the thickness of the battery 100 along the lamination direction X. The second end spacer 203 is formed of an insulating material.

As shown in Fig. 4, the first end block 211 is laminated with the first battery 100 located on one end side out of the 20 laminated batteries 100 via the first end spacer 201. The first end block 211 extends along the width direction Y that intersects with the lamination direction X of the batteries 100. The first end block 211 is adjacent to the battery 100 located at an end portion along the lamination direction X and supports the battery 100. The first end block 211 is formed in a rectangular shape extending in the width direction Y. In the first end block 211, the fastening bolts 241 are screwed into a plurality of screw holes 211m formed on the side surface along the width direction Y shown in Fig. 3. The first end block 211 is fixed to the first side plate 231 by the fastening bolts 241 as shown in Fig. 1. Similarly, the first end block 211 is fixed to the second side plate 232 by the fastening bolts 241. The first end block 211 has insertion holes 211n formed to insert bolts or the like for fixing the battery pack 1. The first end block 211 is made of, for example, a metal or a resin.

As shown in Fig. 4, the second end block 212 is laminated with the twentieth battery 100 located on the other end side out of the laminated 20 batteries 100 via the second end spacer 203. The second end block 212 extends along the width direction Y of the battery 100. The second end block 212 is adjacent to the battery 100 located at an end portion along the lamination direction X and supports the battery 100. The second end block 212 is formed in a rectangular shape extending in the width direction Y. In the second end block 212, the fastening bolts 241 are screwed into a plurality of screw holes formed on the side surface along the width direction Y shown in Fig. 3. The second end block 212 is fixed to the first side plate 231 by the fastening bolts 241 as shown in Fig. 1. Similarly, the second end block 212 is fixed to the second side plate 232 by the fastening bolts 241. The second end block 212 has insertion holes 212n to insert bolts or the like for fixing the battery pack 1. The second end block 212 is formed of, for example, a metal or a resin.

As shown in Fig. 4, the insulating member 221 is inserted into the first end block 211. The insulating member 221 is also inserted into the second end block 212. The insulating member 221 is formed in, for example, a rectangular shape. The insulating member 221 is formed of an insulating material.

The insulating member 221 may be configured as follows. That is, the insulating member 221 may be formed integrally with the first end spacer 201, or may be separately formed from the first end spacer 201 and then bonded to the first end spacer 201. In such a case, the first end block 211 is provided with a recess on a surface facing the first end spacer 201, the recess containing the insulating member 221 along the lamination direction X. Similarly, the insulating member 221 may be formed integrally with the second end spacer 203, or may be formed separately from the second end spacer 203 and bonded to the second end spacer 203. In such a case, the second end block 212 is provided with a recess on a surface facing the second end spacer 203, the recess containing the insulating member 221 along the lamination direction X.

The insert nut 222 is embedded in a recess formed on the upper surface of the insulating member 221, as shown in Fig. 3. In the insert nut 222, for example, the fastening bolt is anchored via a bus bar that is electrically connected to an external control device.

As shown in Fig. 1, the first side plate 231 is disposed at one end portion of the plurality of batteries 100 in the width direction Y along the lamination direction X of the plurality of laminated batteries 100. The first side plate 231 holds the plurality of batteries 100 along the lamination direction X. Both ends of the first side plate 231 extending along the lamination direction X are bent toward the width direction Y. As shown in Fig. 3, in the first side plate 231, the fastening bolts 241 are inserted into a plurality of insertion holes 231m formed on the side surface along the width direction Y. The first side plate 231 is fixed to the first end block 211 and the second end block 212 by the fastening bolts 241 as shown in Fig. 1.

As shown in Fig. 1, the second side plate 232 is disposed at the other end portion of the plurality of batteries 100 in the width direction Y along the lamination direction X of the plurality of laminated batteries 100. The second side plate 232 holds the plurality of batteries 100 along the lamination direction X. Both ends of the second side plate 232 extending along the lamination direction X are bent toward the width direction Y. As shown in Fig. 3, in the second side plate 232, the fastening bolts 241 are inserted into a plurality of insertion holes 232m formed on the side surface along the width direction Y. The second side plate 232 is fixed to the first end block 211 and the second end block 212 by the fastening bolts 241 as shown in Fig. 1.

As shown in Fig. 2, the fastening bolts 241 fasten the first side plate 231 and the first end block 211 and fasten the first side plate 231 and the second end block 212. As shown in Fig. 2, the fastening bolts 241 also fastens the second side plate 232 and the first end block 211 and fasten the second side plate 232 and the second end block 212.

### (Configuration of voltage detection unit 400)

The voltage detection unit 400 shown in Fig. 1, Fig. 2, Fig. 5, and Fig. 6 detects the voltages of the batteries 100 based on, for example, control by an external control device. As shown in Fig. 5, the voltage detection unit 400 includes voltage detection terminals 401 and electric wires 402. The configuration in the voltage detection unit 400 will be described below.

As shown in Fig. 5 and Fig. 6, the voltage detection terminal 401 has conductivity and is formed in a plate shape. The voltage detection terminals 401 are bonded to a first end bus bar 310, a plurality of bus bars 320, and a second end bus bar 330 of the bus bar unit 300, respectively.

As shown in Fig. 5 and Fig. 6, the electric wires 402 are bonded to the voltage detection terminals 401. The electric wires 402 conduct the voltage detection terminals 401 and the external control device.

### (Configuration of temperature measurement unit 500)

The temperature measurement unit 500 shown in Fig. 1, Fig. 2, and Fig. 5 measures the temperatures of the batteries 100 based on, for example, control by an external control device. The temperature measurement unit 500 includes temperature sensors 501 and electric wires 502 as shown in Fig. 2. The configuration in the temperature measurement unit 500 will be described below.

The temperature sensor 501 measures the temperatures of the batteries 100. As shown in Fig. 2, the temperature sensor 501 is, for example, bonded to the lids 102 of the seventh and fourteenth batteries 100 from the first end block 211 toward the second end block 212.

The electric wire 502 is mounted on the temperature sensor 501, as shown in Fig. 2. The electric wire 502 conducts the temperature sensor 501 and the external control device.

### (Configuration of bus bar unit 300 provided in battery pack 1 of first embodiment)

The configuration of the bus bar unit 300 provided in the battery pack 1 of the first embodiment will be described with reference to Fig. 1, Fig. 2, and Fig. 5 to Fig. 18.

The bus bar unit 300 shown in Fig. 1, Fig. 2, and Fig. 5 to Fig. 18 electrically connects a plurality of batteries 100. As shown in Fig. 5, the bus bar unit 300 includes the first end bus bar 310, the plurality of bus bars 320, the second end bus bar 330, and the bus bar holder 340. The configuration in the bus bar unit 300 will be described below.

### (Configuration of first end bus bar 310)

The configuration of the first end bus bar 310 will be described with reference to Fig. 2, Fig. 5, and Fig. 6.

The first end bus bar 310 is connected to one battery 100 and is connected to an external electrical device. As shown in Fig. 2, the first end bus bar 310 is bonded to the positive electrode terminal 103 of the battery 100 closest to the first end block 211 out of the 20 laminated batteries 100. The first end bus bar 310 corresponds to a bus bar of a configuration (1). The first end bus bar 310 has a first member 311 and a second member 312, as shown in Fig. 5 and Fig. 6.

In the first end bus bar 310, the first member 311 is an electrical device, and a bus bar that is electrically connected to the external control device is bonded thereto. The first end bus bar 310 may be configured to be bonded to a bus bar connecting the battery pack 1 and the battery pack 1 in series or in parallel. The first member 311 has an insertion hole 311i formed therein. A fastening bolt is inserted into the insertion hole 311i. The first member 311 and the bus bar that is electrically connected to the external control device are bonded by the fastening bolt. Other configurations of the first member 311 are similar to configurations of a first member 321 of the bus bar 320, which will be described later. The second member 312 is bonded to the positive electrode terminal 103 of the battery 100. Other configurations of the second member 312 are similar to configurations of a second member 322 of the bus bar 320, which will be described later.

### (Configuration of bus bar 320)

The configuration of the bus bar 320 will be described with reference to Fig. 7 and Fig. 8.

Fig. 7 is a perspective view showing the bus bar 320 of the first embodiment. Fig. 8 is a cross-sectional view showing the bus bar 320 of the first embodiment.

The bus bar 320 is connected to one battery 100 and another battery 100. As shown in Fig. 2, the bus bar 320 electrically connects one battery 100 and another battery 100 adjacent to each other in the lamination direction X of the batteries 100. The bus bar 320 is bonded to the positive electrode terminal 103 of one battery 100 and the negative electrode terminal 104 of another battery 100 adjacent thereto along the lamination direction X of the batteries 100.

The bus bar 320 corresponds to the bus bar of the configuration (1). As shown in Fig. 7 and Fig. 8, the bus bar 320 has a first member 321 and a second member 322. In Fig. 7, Fig. 8, and the like, a lamination direction A of the first member 321 and the second member 322, a direction B in solid-phase bonding of the first member 321 and the second member 322, and a direction C orthogonal to the direction B are indicated by arrows. The vibration direction B is orthogonal to the lamination direction A. The direction C orthogonal to the vibration direction B is orthogonal to the lamination direction A. For example, the direction B is a direction orthogonal to the direction A. The direction B is also a desired direction along a contact surface 321d or contact surface 322d having a solid-phase bonding portion. The direction B is also a vibration direction in solid-phase bonding.

For example, one battery 100 having a negative electrode terminal 104 containing copper and another battery 100 having a positive electrode terminal 103 containing aluminum are electrically bonded by the bus bar 320. Therefore, the bus bar 320 is formed by, for example, the solid-phase bonding of a first member 321 containing copper and a second member 322 containing aluminum.

The first member 321 includes a first mounting portion 321P, a first bent portion 321Q, a first contact portion 321R, and a non-contact portion 321S, as shown in Fig. 7 and Fig. 8. In the first member 321, the first mounting portion 321P, the first bent portion 321Q, the first contact portion 321R, and the non-contact portion 321S are integrally formed in this order.

The first mounting portion 321P is mounted to the negative electrode terminal 104 (electrode terminal) of the battery 100, as shown in Fig. 2. The first mounting portion 321P is formed in a plate shape, as shown in Fig. 7 and Fig. 8. In the first mounting portion 321P, a mounting surface 321a composed of the direction B and the direction C orthogonal to the direction B is mounted on the negative electrode terminal 104. The first mounting portion 321P extends along the direction B. For example, the direction B is a direction orthogonal to the direction A. The direction B is also a desired direction along the contact surface 321d or contact surface 322d having a solid-phase bonding portion. The direction B is also a vibration direction in the solid-phase bonding. The first mounting portion 321P may have a through hole formed therein. For example, an inspection instrument is inserted into the through hole of the first mounting portion 321P, and the inspection instrument is brought into contact with the negative electrode terminal 104 to inspect the electrical characteristics of the battery 100. The corner of the first mounting portion 321P may be curved or cut out linearly. The first mounting portion 321P is, for example, laser-bonded to the negative electrode terminal 104.

The first bent portion 321Q (bent portion) is bent along the lamination direction A between the first contact portion 321R and the first mounting portion 321P, as shown in Fig. 7 and Fig. 8. The first bent portion 321Q is orthogonal to the first mounting portion 321P and the first contact portion 321R. As shown in Fig. 7, the first bent portion 321Q is formed in a plate shape. A first boundary 321b in a boundary portion between the first bent portion 321Q and the first mounting portion 321P is formed in an arc shape. A second boundary 321c in a boundary portion between the first bent portion 321Q and the first contact portion 321R is formed in an arc shape.

As shown in Fig. 7 and Fig. 8, the first bent portion 321Q is bent between the first contact portion 321R and the first mounting portion 321P from one end side to the other end side in the lamination direction A. This configuration relates to a configuration (2) of the bus bar 320 of one embodiment. One end side of the first bent portion 321Q is a side continuous with the first mounting portion 321P. The other end side of the first bent portion 321Q is a side continuous with the first contact portion 321R. One end side of the first bent portion 321Q may be a side continuous with the first contact portion 321R. The other end side of the first bent portion 321Q may be a side continuous with the first mounting portion 321P. A shape in which the first bent portion 321Q is bent from one end side to the other end side in the lamination direction A is a shape in which the first bent portion 321Q is bent from one end side to the other end side in the lamination direction A and is then not bent back from the other end side to the one end side in the lamination direction A. That is, the entire shape of the first bent portion 321Q is not a U-like shape or the like. The U-like shape corresponds to a shape in which the first bent portion 321Q is bent from one end side to the other end side in the lamination direction A and is then bent back from the other end side to the one end side in the lamination direction A as a whole. A part of the entire shape of the first bent portion 321Q may be a U-like shape or the like. That is, the first bent portion 321Q may include a U-like shape or the like in a part of a region from one end side to the other end side. One end side of the first bent portion 321Q and the other end side of the first bent portion 321Q do not exist at the same location or relatively close locations along the lamination direction A.

The first bent portion 321Q makes the location of a solid-phase bonding portion 320A and a bonding location to the negative electrode terminal 104 of the battery 100 different from each other. The first bent portion 321Q also suppresses the spring constant of the bus bar 320. Specifically, the first bent portion 321Q relaxes stress on the bus bar 320 due to the expansion/contraction of the battery 100, the vibration of the battery pack 1, or the like. The longer the length of the first bent portion 321Q along the lamination direction A, the smaller the spring constant. The shorter the length of the first bent portion 321Q, the smaller the electric resistance of a second bent portion 322Q.

The length of the first bent portion 321Q is, for example, 0.1 mm or more and 50 mm or less. The length of the first bent portion 321Q along the lamination direction A is preferably 1 mm or more and 20 mm or less, and more preferably 2 mm or more and 10 mm or less. The angle of the first bent portion 321Q is 0 degrees with respect to the lamination direction A and 90 degrees with respect to the surfaces where the solid-phase bonding portion 320A is interposed. The angle of the first bent portion 321Q is preferably 30 degrees or more and 150 degrees or less, and more preferably 45 degrees or more and 135 degrees or less. The magnitudes of the bends R of the first boundary 321b and the second boundary 321c in the first bent portion 321Q are, for example, 0.001 mm or more and 8 mm or less. The magnitudes of the bends R are preferably 0.01 mm or more and 4 mm or less, and more preferably 0.1 mm or more and 2 mm or less.

The first contact portion 321R is continuous with the first bent portion 321Q, as shown in Fig. 7 and Fig. 8. The first contact portion 321R is contact with the second member 322 in the lamination direction A. The first contact portion 321R is formed in a plate shape as shown in Fig. 7. In a case where the direction B is the vibration direction, in the first contact portion 321R, the contact surface 321d composed of the vibration direction B and the direction C orthogonal to the vibration direction B is in contact with the second member 322. The first contact portion 321R extends along the vibration direction B. The first contact portion 321R does not face the first mounting portion 321P along the lamination direction A. The first contact portion 321R extends in a direction apart from the first mounting portion 321P along the vibration direction B via the first bent portion 321Q. The first contact portion 321R is formed in parallel with the first mounting portion 321P.

The non-contact portion 321S is continuous with the first contact portion 321R, as shown in Fig. 7 and Fig. 8. The non-contact portion 321S is inclined with respect to the direction (vibration direction B) intersecting with the lamination direction A. For example, the non-contact portion 321S is inclined with respect to the direction (vibration direction B) along the contact surface 321d having a solid-phase bonding portion. Alternatively, the non-contact portion 321S is inclined with respect to the direction (vibration direction B) intersecting with the lamination direction A. The non-contact portion 321S is inclined toward a side apart from the battery 100. The angle of the inclination of the non-contact portion 321S is, for example, 0.01 degrees or more and 120 degrees or less. The angle of the inclination of the non-contact portion 321S is preferably 0.01 degrees or more and 90 degrees or less, and more preferably 0.01 degrees or more and 60 degrees or less. The angle of the inclination of the non-contact portion 321S is preferably larger than an angle at which a separation of 0.01 mm or more is generated between the non-contact portion 321S and the second member 322 along the lamination direction A.

The non-contact portion 321S is not in contact with the second member 322 in the lamination direction A. A distal end 321e of the non-contact portion 321S is separated from the second contact portion 322R of the second member 322. The non-contact portion 321S is separated from the second contact portion 322R of the second member 322. The non-contact portion 321S is located in a region relatively closer to the second contact portion 322R than a second mounting portion 322P of the second member 322 in the direction B intersecting with the lamination direction A, for example, the vibration direction. The distal end 321e of the non-contact portion 321S is located in a region relatively closer to the second contact portion 322R than the second bent portion 322Q of the second member 322. The non-contact portion 321S has no region facing the second member 322 along the direction B orthogonal to the lamination direction A, for example, along the vibration direction.

The thinner the thickness of the first member 321, the more stress on the solid-phase bonding portion 320A of the bus bar 320 is relaxed. The thicker the thickness of the first member 321, the smaller the electrical resistance of the bus bar 320. The thickness of the first member 321 is, for example, 0.1 mm or more and 3 mm or less. The thickness of the first member 321 is preferably 0.3 mm or more and 2 mm or less, and more preferably 0.4 mm or more and 1.5 mm or less. The thickness of the first member 321 may be partially decreased or increased.

The first member 321 has conductivity. The first member 321 has higher hardness than the second member 322. The first member 321 includes, for example, copper or a copper alloy. In a case where the first member 321 contains a copper alloy, for example, any one of 1000 series, 2000 series, 3000 series, 4000 series, 5000 series, 6000 series, and 7000 series alloys is used. For the first member 321, in the thermal refining of the copper alloy, for example, a material on which any treatment of F, O, 1/4H, 1/2H, 3/4H, H, EH, and SH has been performed may be used.

The first member 321 may be plated. At least a portion of the first member 321 that is solid-phase bonded with the second member 322 is plated. As the plating, for example, electrolytic nickel plating, electroless nickel plating, tin plating, zinc plating, chromium plating, gold plating, silver plating, copper plating, or rhodium plating is used. The plating is preferably, for example, nickel plating, and more preferably electrolytic nickel plating. The thickness of the plating is, for example, 0.1 *µ*m or more and 100 *µ*m or less. The thickness of the plating is preferably 0.2 *µ*m or more and 50 *µ*m or less, and more preferably 0.5 *µ*m or more and 10 *µ*m or less. The luster of the plating is, for example, 0.2 or more and less than 4. The luster of the plating is preferably 0.3 or more and less than 3, and more preferably 0.6 or more and less than 2.5.

The second member 322 includes the second mounting portion 322P, the second bent portion 322Q, and the second contact portion 322R, as shown in Fig. 7 and Fig. 8. In the second member 322, the second mounting portion 322P, the second bent portion 322Q, and the second contact portion 322R are integrally formed in this order.

The second mounting portion 322P is mounted on the positive electrode terminal 103 (electrode terminal) of the battery 100, as shown in Fig. 2. The second mounting portion 322P is formed in a plate shape, as shown in Fig. 7 and Fig. 8. In the second mounting portion 322P, a mounting surface 322a composed of the direction B along the contact surface 321d or 322d having a solid-phase bonding portion and the direction C orthogonal to the direction B is mounted on the positive electrode terminal 103. The second mounting portion 322P extends along the direction B. For example, the direction B is a desired direction along the contact surface 321d having a solid-phase bonding portion or along the contact surface 322d. The direction B is also the vibration direction. The second mounting portion 322P may have a through hole formed therein. For example, an inspection instrument is inserted into the through hole of the second mounting portion 322P, and the inspection instrument is brought into contact with the positive electrode terminal 103 to inspect the electrical characteristics of the battery 100. The corner of the second mounting portion 322P may be curved or cut out linearly. The second mounting portion 322P is, for example, laser-bonded to the positive electrode terminal 103.

The second bent portion 322Q (bent portion) is bent along the lamination direction A between the second contact portion 322R and the second mounting portion 322P, as shown in Fig. 7 and Fig. 8. The second bent portion 322Q is orthogonal to the second mounting portion 322P and the second contact portion 322R. As shown in Fig. 7, the second bent portion 322Q is formed in a plate shape. A first boundary 322b in a boundary portion between the second bent portion 322Q and the second mounting portion 322P is formed in an arc shape. A second boundary 322c in a boundary portion between the second bent portion 322Q and the second contact portion 322R is formed in an arc shape.

As shown in Fig. 7 and Fig. 8, the second bent portion 322Q is bent between the second contact portion 322R and the second mounting portion 322P from one end side to the other end side in the lamination direction A. This configuration relates to the configuration (2) of the bus bar 320 of one embodiment. One end side of the second bent portion 322Q is a side continuous with the second mounting portion 322P. The other end side of the second bent portion 322Q is a side continuous with the second contact portion 322R. A shape in which the second bent portion 322Q is bent from one end side to the other end side in the lamination direction A is a shape in which the second bent portion 322Q is bent from one end side to the other end side in the lamination direction A and is then not bent back from the other end side to the one end side in the lamination direction A. That is, the entire shape of the second bent portion 322Q is not a U-like shape or the like. The U-like shape corresponds to a shape in which the second bent portion 322Q is bent from one end side to the other end side in the lamination direction A and is then bent back from the other end side to the one end side in the lamination direction A as a whole. A part of the entire shape of the second bent portion 322Q may be configured with a U-like shape or the like. That is, the second bent portion 322Q may include a U-like shape or the like in a part of a region from one end side to the other end side. One end side of the second bent portion 322Q and the other end side of the second bent portion 322Q do not exist at the same location or relatively close locations along the lamination direction A.

The second bent portion 322Q makes the location of the solid-phase bonding portion 320A and a bonding location to the positive electrode terminal 103 of the battery 100 different from each other. The second bent portion 322Q also suppresses the spring constant of the bus bar 320. Specifically, the second bent portion 322Q relaxes stress on the bus bar 320 due to expansion/contraction of the battery 100, the vibration of the battery pack 1, and the like. The longer the length of the second bent portion 322Q along the lamination direction A, the smaller the spring constant. The shorter the length of the second bent portion 322Q is, the smaller the electric resistance of the second bent portion 322Q.

The length of the second bent portion 322Q is, for example, 0.1 mm or more and 50 mm or less. The length of the second bent portion 322Q along the lamination direction A is preferably 1 mm or more and 20 mm or less, and more preferably 2 mm or more and 10 mm or less. The angle of the second bent portion 322Q is 0 degrees with respect to the lamination direction A and 90 degrees with respect to the surfaces where the solid-phase bonding portion 320A is interposed. The angle of the second bent portion 322Q is preferably 30 degrees or more and 150 degrees or less, and more preferably 45 degrees or more and 135 degrees or less. The magnitudes of the bends R of the first boundary 322b and the second boundary 322c of the second bent portion 322Q are, for example, 0.001 mm or more and 8 mm or less. The magnitudes of the bends R are preferably 0.01 mm or more and 4 mm or less, and more preferably 0.1 mm or more and 2 mm or less.

The second contact portion 322R is continuous with the second bent portion 322Q, as shown in Fig. 7 and Fig. 8. The second contact portion 322R is in contact with the first member 321 in the lamination direction A. The second contact portion 322R is formed in a plate shape as shown in Fig. 7. In the second contact portion 322R, the contact surface 322d composed of the direction B along the contact surface 321d or 322d having a solid-phase bonding portion and the direction C orthogonal to the direction B is in contact with the first member 321. The second contact portion 322R extends along the direction B. The second contact portion 322R does not face the second mounting portion 322P along the lamination direction A. The second contact portion 322R extends in a direction apart from the second mounting portion 322P along the vibration direction B via the second bent portion 322Q. The second contact portion 322R is formed in parallel with the second mounting portion 322P. For example, the direction B is the vibration direction.

The thinner the thickness of the second member 322, the more stress on the solid-phase bonding portion 320A of the bus bar 320 is relaxed. The thicker the thickness of the second member 322, the smaller the electrical resistance of the bus bar 320. The thickness of the second member 322 is, for example, 0.1 mm or more and 3 mm or less. The thickness of the second member 322 is preferably 0.3 mm or more and 2 mm or less, and more preferably 0.4 mm or more and 1.5 mm or less. The thickness of the second member 322 may be partially decreased or increased.

The second member 322 has conductivity. The second member 322 has lower hardness than the first member 321. The second member 322 contains, for example, aluminum or an aluminum alloy. In a case where the second member 322 contains an aluminum alloy, for example, any one of 1000 series, 2000 series, 3000 series, 4000 series, 5000 series, 6000 series, 7000 series, and 8000 series alloys is used. For the second member 322, in the thermal refining of the aluminum alloy, for example, a material on which any treatment of F, O, H, W, and T has been performed may be used.

The second member 322 may be plated. At least a portion of the second member 322 that is solid-phase bonded to the first member 321 is plated. Plating that is performed on the second member 322 is similar to the plating that is performed on the first member 321.

### (Solid-phase bonding portion 320A of bus bar 320)

The solid-phase bonding portion 320A of the bus bar 320 will be described with reference to Fig. 7 and Fig. 8.

In the bus bar 320, the first contact portion 321R of the first member 321 and the second contact portion 322R of the second member 322 include a solid-phase bonding portion 320A which is solid-phase bonded. In the bus bar 320, the contact surface 321d of the first contact portion 321R of the first member 321 and the contact surface 322d of the second contact portion 322R of the second member 322 are solid-phase bonded at the boundary therebetween. The first contact portion 321R of the first member 321 and the second contact portion 322R of the second member 322 are solid-phase bonded in the vibration direction B (for example, the vibration direction) orthogonal to the lamination direction A and toward a side where the non-contact portion 321S of the first member 321 is located. The non-contact portion 321S of the first member 321 is located closer to the second mounting portion 322P of the second member 322 than the solid-phase bonding portion 320A.

The solid-phase bonding portion 320A is formed in, for example, a rectangular shape in the case of being viewed from the lamination direction A as shown in Fig. 7. The longitudinal direction of the solid-phase bonding portion 320A is, for example, a direction along the direction C intersecting with the vibration direction B in a case where the direction B is regarded as the vibration direction. The lateral direction of the solid-phase bonding portion 320A is a direction along the vibration direction B. That is, the rectangular solid-phase bonding portion 320A has a length along the direction C intersecting with the vibration direction B longer than a length along the vibration direction B, as shown in Fig. 7. The solid-phase bonding portion 320A may have the longitudinal direction in a direction along the vibration direction B and the lateral direction in a direction along the direction C intersecting with the vibration direction B. In this case, the rectangular solid-phase bonding portion 320A has a length in a direction along the vibration direction B longer than a length in the direction C intersecting with the vibration direction B. The solid-phase bonding portion 320A may be formed in a square shape. In this case, in the square solid-phase bonding portion 320A, the length in the direction along the vibration direction B and the length in the direction C intersecting with the vibration direction B become equal to each other.

The solid-phase bonding portion 320A may be formed in a circular shape, an oval shape, a parallelogram shape, a trapezoidal shape, a rhombus shape, a hexagonal shape, an octagonal shape, or other polygon shapes. The solid-phase bonding portion 320A may be formed in an arbitrary geometric shape. The solid-phase bonding portion 320A may be formed in a shape composed of the maximum region of a trajectory defined by sliding an arbitrary geometric shape in a linear or rotational direction. The solid-phase bonding portion 320A may be formed in a shape that is a part of a shape composed of the maximum region.

### (Solid-phase bonding of bus bar 320 by ultrasonic bonding)

Solid-phase bonding of the bus bar 320 by ultrasonic bonding will be described with reference to Fig. 9 to Fig. 12.

Fig. 9 is a schematic view showing the solid-phase bonding of the bus bar 320 of the first embodiment. Fig. 10 is a cross-sectional view schematically showing a state where the first member 311 and the second member 322 of the bus bar 320 have been solid-phase bonded by ultrasonic waves. Fig. 11 is a cross-sectional view showing the configuration of a region 11 in Fig. 10. Fig. 12 is a cross-sectional view showing the configuration of a region 12 in Fig. 11.

The solid-phase bonding portion 320A of the bus bar 320 is formed by applying ultrasonic vibration W1 in the vibration direction B in a case where the direction B is set to the vibration direction in a state where the first member 321 and the second member 322 are pressurized in the lamination direction A. In the solid-phase bonding by ultrasonic bonding, the first member 321 and the second member 322 are pressurized from, for example, the side of the first member 321. In this case, a horn 11 is brought into contact with the first member 321, and an anvil 12 is brought into contact with the second member 322. In the solid-phase bonding by ultrasonic bonding, the first member 321 and the second member 322 may be pressurized from the side of the second member 322. In this case, the anvil 12 is brought into contact with the first member 321, and the horn 11 is brought into contact with the second member 322.

The solid-phase bonding portion 320A is formed by applying the vibration W1 linearly in a plane in the vibration direction B in a state where the first member 321 and the second member 322 are pressurized in the lamination direction A. The horn 11 vibrates the first member 321 along the vibration direction B. The horn 11 may vibrate the first member 321 along a direction intersecting with the vibration direction B.

In the solid-phase bonding by ultrasonic bonding, the horn 11 applies the ultrasonic vibration W1 to the first member and the second member. The anvil 12 is provided to face the horn 11 via the first member and the second member, and receives the vibration W1 of the horn 11. The vibration W1 of the anvil 12 may be induced by the vibration W1 of the horn 11 via the first member 321 and the second member 322. The solid-phase bonding portion 320A is formed as an indentation on the first member 321 and the second member 322 by ultrasonic bonding or the like.

As shown in Fig. 10 to Fig. 12, for example, the shape of a plurality of protrusions formed on the horn 11 is transferred to the first contact portion 321R of the first member 321 to form a plurality of indentation portions 321t. On the first member 321, for example, the plurality of indentation portions 321t are formed in a matrix shape. In a case where, for example, a plurality of protrusions having a square pyramid shape are formed on the horn 11, a plurality of recesses having a square pyramid shape are formed on the first contact portion 321R of the first member 321. The recesses correspond to the indentation portions 321t formed on the first contact portion 321R. The indentation portions 321t on the first contact portion 321R are formed by pressurization P1 by the horn 11 and the ultrasonic vibration W1 by the horn 11. The indentation portion 321t is, for example, a square pyramid-like recess, but the shape thereof is not limited. As shown in Fig. 11 and Fig. 12, in the first contact portion 321R, a non-indentation portion 321v exists between adjacent indentation portions 321t and 321t. The non-indentation portion 321v is not essential. The first contact portion 321R of the first member 321 is in contact with the second contact portion 322R of the second member 322, but includes a non-bonding region 321w that is not bonded to the second contact portion 322R of the second member 322. The non-bonding region 321w of the first contact portion 321R is continuous with a non-bonding region 321z of the non-contact portion 321S along the vibration direction B of the ultrasonic bonding.

For example, the shape of a plurality of protrusions formed on the anvil 12 is transferred to the second contact portion 322R of the second member 322 to form a plurality of indentation portions 322t. On the second member 322, for example, the plurality of indentation portions 322t are formed in a matrix shape. In a case where, for example, a plurality of protrusions having a square pyramid shape are formed on the anvil 12, a plurality of recesses having a square pyramid shape are formed on the second contact portion 322R of the second member 322. The recesses correspond to the indentation portions 322t formed in the second contact portion 322R. The indentation portions 322t on the second contact portion 322R are formed by pressurization P2 by the anvil 12 and the pressurization P1 and the ultrasonic vibration W1 by the horn 11. The pressurization P2 by the anvil 12 may be only a reaction force against the pressurization P1 by the horn 11. The indentation portion 322t is, for example, a square pyramid-like recess, but the shape thereof is not limited. As shown in Fig. 11, in the second contact portion 322R, a non-indentation portion 322v exists between adjacent indentation portions 322t and 322t. The non-indentation portion 322v is not essential. The second contact portion 322R of the second member 322 is in contact with the first contact portion 321R of the first member 321, but includes a second non-bonding portion 322w that is not bonded to the first contact portion 321R of the first member 321. The second non-bonding portion 322w of the second contact portion 322R is continuous with a non-bonding region 322z of the second member 322 along the vibration direction B of the ultrasonic bonding.

The non-contact portion 321S of the first member 321 is separated from the second member 322, as shown in Fig. 12. The distance between the non-contact portion 321S and the second member 322 in the lamination direction A becomes longer toward the distal end 321e of the non-contact portion 321S. A first distance d1 in the lamination direction A between the distal end 321e of the non-contact portion 321S and the second member 322 is longer than a second distance d2 in the lamination direction A of a portion of the non-contact portion 321S excluding the distal end 321e and the second member 322.

### (Another form of solid-phase bonding by ultrasonic bonding of bus bar 320)

Another form of the solid-phase bonding of the bus bar 320 by ultrasonic bonding will be described with reference to Fig. 13.

Fig. 13 is a cross-sectional view showing another form of the configuration of region 12 in Fig. 11.

In the solid-phase bonding of the bus bar 320 by ultrasonic bonding, the configuration may be as shown in Fig. 13.

The non-contact portion 321S of the first member 321 is separated from the second member 322, as shown in Fig. 13. The non-bonding region 321w of the first contact portion 321R of the first member 321 is also separated from the second member 322.

The first contact portion 321R includes the non-bonding region 321w. The non-bonding regions 321w are located at both ends of the first contact portion 321R along the vibration direction B. The non-bonding region 321w may be located only at one end of the first contact portion 321R along the vibration direction B. The reason for the non-bonding region 321w of the first contact portion 321R being separated from the second member 322 is that the outer shape of the first contact portion 321R of the first member 321 plastically deform when the first member 321 and the second member 322 are solid-phase bonded by ultrasonic bonding. Plastic deformation of the outer shape of the first contact portion 321R is generated by the pressurization by the horn and ultrasonic vibration. Among the plastic deformation of the outer shape of the first contact portion 321R, plastic deformation in the non-bonding region 321w is that the first member 321 curves and deforms in the lamination direction A such that the first member 321 is separated from the second member 322. That is, at the time of the solid-phase bonding by ultrasonic bonding, the non-bonding regions 321w located at both ends of the first contact portion 321R along the vibration direction B may warp to be separated from the second member 322 along the lamination direction A.

The non-contact portion 321S of the first member 321 is further separated from the second member 322 due to the non-bonding regions 321w of the first contact portion 321R being separated from the second member 322 when the first member 321 and the second member 322 are solid-phase bonded by ultrasonic bonding.

The degree of the plastic deformation of the outer shape of the first member 321 depends on the conditions of the ultrasonic bonding. The conditions of the ultrasonic bonding are, for example, the conditions of the ultrasonic wave that is applied to the first member 321. The conditions of the ultrasonic bonding are also conditions related to the relative locational relationships of the horn, the anvil, the first member 321, and the second member 322 along the lamination direction A. Depending on the conditions of the ultrasonic bonding, the outer shape of the first member 321 may plastically deform, and the outer shape of the second member 322 may plastically deform.

The distance between the first member 321 and the second member 322 in the lamination direction A becomes longer toward the distal end 321e of the non-contact portion 321S. A first distance d3 between the distal end 321e of the non-contact portion 321S and the second member 322 in the lamination direction A is longer than a second distance d4 between a portion of the non-contact portion 321S excluding the distal end 321e and the second member 322 in the lamination direction A. The first distance d3 and the second distance d4 are longer than a second distance d5 between the non-bonding region 321w of the first contact portion 321R of the first member 321 and the second member 322 in the lamination direction A.

In the first member 321, the non-contact portion 321S continuous with the first contact portion 321R may relatively significantly warp so as to be further separated from the second member 322 along the lamination direction A than the first bent portion 321Q continuous with the first contact portion 321R.

### (Experimental results of ultrasonic bonding of bus bar 320)

Experimental results of the solid-phase bonding of the bus bar 320 will be described with reference to Fig. 14 to Fig. 16.

Fig. 14 is a cross-sectional view showing a state of the solid-phase bonding of the bus bar 320. Fig. 15 is a view showing a relationship between L/W and D/W defined for the bus bar 320. Fig. 16 is a view showing a relationship between D/W and T/W defined for the bus bar 320.

First, the relationship between L/W and D/W defined for the bus bar 320 will be described with reference to Fig. 14 and Fig. 15.

While the first member 321 and the second member 322 are pressurized by the horn 11 and the anvil 12, ultrasonic waves are applied to the first member 321 by the horn 11. As shown in Fig. 14, the non-contact portion 321S of the first member 321 may deform in a direction V apart from the second member 322 due to the application of ultrasonic waves. Here, a distance along the lamination direction A from a boundary between the contact surface 321d of the first contact portion 321R and the contact surface 322d of the second contact portion 322R at the distal end 321e of the non-contact portion 321S is defined as a first distance L. For example, in a case where the direction B is set to the vibration direction, the distance along the vibration direction B between the distal end 321e of the non-contact portion 321S and the side end portion of the horn 11 is defined as a second distance D. The distance from the center of the first bent portion 321Q of the first member 321 to the end portion of the first contact portion 321R is defined as a third distance W. The thickness of the first member 321 along the lamination direction A and the thickness of the second member 322 along the lamination direction A are each defined as a plate thickness T. Fig. 15 shows the relationship between the first distance L and the second distance D in a case where the plate thickness T is 0.07 × W, 0.11 × W, and 0.14 × W. The vertical axis of Fig. 15 shows L/W obtained by dividing the first distance L by the third distance W. The horizontal axis of Fig. 15 shows D/W obtained by dividing the second distance D by the third distance W. When the first distance L becomes 0 or less, the distal end 321e of the non-contact portion 321S comes into contact or collides with the second member 322. As shown in Fig. 15, the thinner the plate thicknesses T of the first member 321 and the second member 322, the more easily the first member 321 and the second member 322 deform. As shown in Fig. 15, when the L/W distance becomes 0 or more, the D/W distance becomes smaller.

Next, the relationship between D/W and T/W defined for the bus bar 320 will be described with reference to Fig. 14 and Fig. 16.

The vertical axis of Fig. 16 shows D/W obtained by dividing the second distance D by the third distance W. The horizontal axis of Fig. 16 shows T/W obtained by dividing the plate thickness T by the third distance W. As shown in Fig. 16, in a case where T/W is increased, the distance of D/W where the distance of L/W becomes zero tends to be saturated. As shown in Fig. 16, in a case where T/W is larger than 0.1, L/W becomes larger than zero by increasing D/W to be longer than at least 0.04. D/W may also be increased to be larger than 0.04 from the viewpoint of the safety factor. The second distance D is preferably short since the bus bar 320 becomes longer as the second distance becomes larger. In a case where T/W is larger than 0.1, the value of D/W is made to be 0.04 or more and 10 or less. In a case where T/W is larger than 0.1, the value of D/W is preferably made to be 0.04 or more and 5 or less, and more preferably made to be 0.04 or more and 1 or less. On the other hand, in a case where the plate thickness T is smaller than 0.1, D/W can be made to be 0.04 or less. As a result of calculating the relational expression, the relationship between the second distance D and the plate thickness T is expressed by an expression the second distance D ≒0.38 × the plate thickness T in a case where T/W is 0.1 or less. Accordingly, in a case where T/W is 0.1 or less, D/W is made to be, for example, 0.38 × T/W or more and 10 mm or less. In a case where T/W is 0.1 or less, D/W is preferably made to be 0.38 × T/W or more and 5 mm or less, and more preferably made to be 0.38 × T/W or more and 1 mm or less. As an example, the third distance W was considered as 5.5 mm in the calculation, but the value of W is not limited thereto and can be set to a free value depending on the shape. The plate thickness T of the first member 321, and the plate thickness T of the second member 322 are made to be similar. The deformation of the non-contact portion 321S of the first member 321 mainly depends on the plate thickness T of the first member 321 with which the horn 11 comes into contact. Since the horn 11 does not come into contact with the second member 322, the plate thickness T thereof may be changed.

### (Configuration of second end bus bar 330)

The configuration of the second end bus bar 330 will be described with reference to Fig. 2, Fig. 5, and Fig. 6.

The second end bus bar 330 is connected to one battery 100 and connected to an external electrical device. As shown in Fig. 2, the second end bus bar 330 is bonded to the negative electrode terminal 104 of the battery 100 closest to the second end block 212 among the 20 laminated batteries 100. The second end bus bar 330 has a first portion 331 and a second portion 332, as shown in Fig. 5 and Fig. 6.

In the second end bus bar 330, the first portion 331 is bonded to the negative electrode terminal 104 of the battery 100. The first portion 331 is an electrical device, and a bus bar electrically connected to an external control device is bonded to the first portion 331. The second end bus bar 330 may be bonded to a bus bar that connects the battery pack 1 and the battery pack 1 in series or in parallel. The second portion 332 has an insertion hole 332i formed therein. A fastening bolt is inserted into the insertion hole 332i. The second portion 332 and the bus bar electrically connected to the external control device are bonded by a fastening bolt. The second portion 332 is formed integrally with the first portion 331. The second end bus bar 330 is formed of, for example, copper.

As shown in Fig. 1, the bus bar holder 340 integrally holds the first end bus bar 310, the plurality of bus bars 320, and the second end bus bar 330. The bus bar holder 340 also covers and insulates the plurality of laminated batteries 100. As shown in Fig. 5, the bus bar holder 340 is formed in a plate shape. The bus bar holder 340 has a plurality of opening portions 340a formed therein. Each of the opening portions 340a exposes first bonding portions or second bonding portions of the first end bus bar 310, the plurality of bus bars 320, and the second end bus bar 330 toward the battery 100 side. Each of the opening portions 340a is larger than the first bonding portion or second bonding portion of the corresponding bus bar. The bus bar holder 340 has a plurality of holding portions 340b formed therein. Each of the holding portions 340b holds the end portions of the first bonding portions or second bonding portions of the first end bus bar 310, the plurality of bus bars 320, and the second end bus bar 330. Each of the holding portions 340b is formed at the edge of the opening portion 340a. Each of the holding portions 340b includes a linear groove along the surface of the bus bar holder 340. The end portion of the first bonding portion or the second bonding portion of the corresponding bus bar is inserted into the groove provided in each of the holding portions 340b. The bus bar holder 340 has a plurality of insertion portions 340c formed therein. An electric wire 502 of the temperature measurement unit 500 is inserted into the insertion portion 340c.

### (Configuration of solid-phase bonding by friction stir of bus bar 320)

The configuration of the solid-phase bonding by friction stir of the bus bar 320 will be described with reference to Fig. 17 and Fig. 18.

Fig. 17 is a cross-sectional view schematically showing a state where the first member 311 and the second member 322 of the bus bar 320 have been solid-phase bonded by friction stir. Fig. 18 is a cross-sectional view showing the configuration of a region 18 in Fig. 17.

The solid-phase bonding portion 320A of the bus bar 320 is formed by applying vibration of friction stir in the lamination direction A and in the direction B along the contact surface 321d or the contact surface 322d having the solid-phase bonding portion in a state where the first member 321 and the second member 322 are pressurized in the lamination direction A. For example, the direction B may be set to the vibration direction. In solid-phase bonding by friction stir bonding, the first member 321 and the second member 322 are pressurized from, for example, the first member 321 side. In this case, a bonding tool is brought into contact with the first member 321, and a holding tool is brought into contact with the second member 322.

In a case where the direction B is set to the vibration direction, the solid-phase bonding portion 320A is formed by applying vibration linearly in a plane in the vibration direction B in a state where the first member 321 and the second member 322 are pressurized in the lamination direction A. The bonding tool is vibrated along the vibration direction B. The bonding tool may be vibrated along the direction intersecting with the vibration direction B.

In the solid-phase bonding by friction stir bonding, the bonding tool applies vibration of friction stir to the first member and the second member. The holding tool is provided to face the bonding tool via the first member and the second member. The holding tool receives vibrations of the bonding tool via the first member and the second member. In a state where the holding tool is fixed, the bonding tool is scanned linearly in a direction along the contact surface 321d or contact surface 322d having a solid-phase bonding portion and along the desired direction B while being circularly rotated, thereby performing friction stir bonding on the first member 321 and the second member 322. For example, the direction B may be set to the vibration direction. In this case, the solid-phase bonding portion 320A is formed as an indentation on the first member 321 and the second member 322 by friction stir bonding or the like. In a state where the first member 321 and the second member 322 are pinched by the bonding tool and the holding tool, the bonding tool is scanned along the vibration direction B while being circularly rotated. The bonding tool is circularly rotated in a plane composed of the vibration direction B and the direction C intersecting with the vibration direction B. As the holding tool, another bonding tool having similar functions as the bonding tool may be used.

To the first contact portion 321R of the first member 321, for example, the shape of protrusions of the bonding tool moving in a direction along the contact surface 321d having a solid-phase bonding portion and along the desired direction B is transferred, whereby the rectangular indentation portions 321t are formed along the direction B, as shown in Fig. 17 and Fig. 18. For example, the direction B may be set to the vibration direction. Specifically, the indentation portions 321t of the first contact portion 321R are formed by pressurization by the bonding tool and friction stir vibration by the bonding tool. The first contact portion 321R of the first member 321 is in contact with the second contact portion 322R of the second member 322 but includes the non-bonding regions 321w that are not bonded to the second contact portion 322R of the second member 322. The non-bonding region 321w of the first contact portion 321R is continuous with the non-bonding region 321z of the non-contact portion 321S along the vibration direction B of friction stir bonding.

Rectangular indentation portions 322t may be formed on the second contact portion 322R of the second member 322 due to, for example, pressing by the holding tool. The depth of the indentation portion 322t along the lamination direction A is sufficiently smaller than the depth of the indentation portion 321t along the lamination direction A. The second contact portion 322R of the second member 322 is in contact with the first contact portion 321R of the first member 321 but includes second non-bonding portion 322w that are not bonded to the first contact portion 321R of the first member 321. The second non-bonding portion 322w of the second contact portion 322R is continued with the non-bonding region 322z of the second member 322 along the vibration direction B of friction stir bonding.

In solid-phase bonding by friction stir bonding, the first member 321 and the second member 322 may be pressurized from the side of the second member 322. In this case, the holding tool is brought into contact with the first member 321, and the bonding tool is brought into contact with the second member 322.

The solid-phase bonding using the friction stir technology may be substituted by solid-phase bonding using a friction welding technology.

### (Effects of bus bar 320 and battery pack 1 of first embodiment)

The effects of the bus bar 320 and the battery pack 1 of the first embodiment will be described.

The first member 321 of the bus bar 320 of dissimilar bonding includes the non-contact portion 321S. The non-contact portion 321S is inclined with respect to the direction B intersecting with the lamination direction A and is separated from the second contact portion 322R of the second member 322. For example, the direction B is a direction along the contact surface 321d having a solid-phase bonding portion. Alternatively, the direction B is the vibration direction. At least a distal end 322e of the non-contact portion 321S may be separated from the second contact portion 322R of the second member 322. The bus bar 320 having such a configuration enables the bus bar 320 in which the first member 321 and the second member 322 are favorably solid-phase bonded, and the battery pack 1 having the bus bar 320 to be obtained.

Specifically, for example, when the first member 321 and the second member 322 are solid-phase bonded along the direction B, the bus bar 320 including the non-contact portion 321S is capable of suppressing or preventing the first member 321 having relatively high hardness coming into contact with or colliding with the second member 322 having relatively low hardness along the direction B. For example, the direction B is a direction along the contact surface 321d having a solid-phase bonding portion and is a desired direction. Alternatively, the direction B is the vibration direction. That is, the bus bar 320 of the first embodiment is capable of suppress or prevent variations in the state of solid-phase bonding due to the first member 321 coming into contact with or colliding with the second member 322. Accordingly, the bonding state of the first member 321 and the second member 322 in each bus bar 320 can be made relatively uniform.

The bus bar 320 including the non-contact portion 321S is also capable of suppressing or preventing the second member 322 being partially deformed and separated due to the first member 321 coming into contact with or colliding with the second member 322 and the generation of a powder from the second member 322. *Specifically, the bus bar 320 is capable of suppressing or preventing the surface of the second member 322 being shaved due to the distal end of the first member 321 coming into contact with or colliding with the second member 322 and the generation of a powder. The powder is a powdery object generating the partial deformation and separation of the second member 322 and has conductivity. The powder is, for example, a metal powder. The bus bar 320 suppresses or prevents the powder adhering to the second member 322 in a state where the powder is separated from the second member 322, or adhering to a part other than the second member 322 in a state where the powder is separated from the second member 322.

The bus bar 320 including the non-contact portion 321S is also capable of suppressing or preventing the second member 322 being partially deformed or the like due to the first member 321 having relatively high hardness coming into contact with or colliding with the second member 322 having relatively low hardness and the generation of linear burrs from the second member 322. Specifically, the bus bar 320 is capable of suppressing or preventing the surface of the second member 322 extending relatively short toward the lamination direction A and being peeled off due to the distal end of the first member 321 coming into contact with or colliding with the second member 322. The linear burr is, for example, a so-called thread burr. The thread burr is a thread-like burr formed by the partial deformation or the like of the second member 322, and has conductivity. The bus bar 320 suppresses or prevents the thread burr adhering to the second member 322 in a state of being separated from the second member 322, the thread burr adhering to a part other than the second member 322 in a state of being separated from the second member 322, or the thread burr being partially connected to the second member 322.

The bus bar 320 including the non-contact portion 321S is also capable of suppressing or preventing the second member 322 being partially deformed or the like due to the first member 321 coming into contact with or colliding with the second member 322, and the generation of film-like burrs from the second member 322. Specifically, the bus bar 320 is capable of suppressing or preventing the surface of the second member 322 extending relatively long toward the lamination direction A and being peeled off due to the distal end of the first member 321 coming into contact with or colliding with the second member 322. The film-like burr is a so-called shutter burr. The shutter burr is a film-like burr formed by the partial deformation or the like of the second member 322, and has conductivity. The bus bar 320 suppresses or prevents the shutter burr adhering to the second member 322 in a state of being separated from the second member 322, the shutter burr adhering to a part other than the second member 322 in a state of being separated from the second member 322, or the shutter burr being partially connected to the second member 322.

The bus bar 320 is capable of suppressing or preventing the first member 321 from being partially deformed or the like even when the distal end of the second member 322 having relatively low hardness comes into contact with or collides with the first member 321 having relatively high hardness.

The powder and the burr correspond to foreign matters for the battery pack 1. The powder and the burr cause short-circuit, corrosion, and the like in the battery pack. Therefore, it is desirable to suppress or prevent the generation of a powder or a burr in the battery pack 1 like the bus bar 320 of the first embodiment.

The first member 321 of the bus bar 320 contains copper. The second member 322 contains aluminum. According to such a configuration, one battery 100 having the negative electrode terminal 104 containing copper and another battery 100 having the positive electrode terminal 103 containing aluminum can be sufficiently bonded electrically by the bus bar 320. That is, according to such a configuration, it is possible to configure the bus bar 320 of extremely high versatility.

For example, the non-contact portion 321S of the first member 321 of the bus bar 320 is located in a region relatively closer to the second contact portion 322R than the second mounting portion 322P of the second member 322 in the vibration direction B intersecting with the lamination direction A. According to such a configuration, the non-contact portion 321S of the first member 321 can be configured to be sufficiently short in the vibration direction B. That is, according to such a configuration, the first member 321 can be made to be relatively small or lightweight. The non-contact portion 321S of the first member 321 is located in, for example, a region of the second bent portion 322Q along the vibration direction B.

The second member 322 of the bus bar 320 includes the second bent portion 322Q bent along the lamination direction A from the second contact portion 322R between the second contact portion 322R and the second mounting portion 322P. At least the distal end 322e of the non-contact portion 321S of the first member 321 is located in a region relatively closer to the second contact portion 322R than the second bent portion 322Q of the second member 322. According to such a configuration, the non-contact portion 321S of the first member 321 can be configured to be sufficiently short in the vibration direction B. That is, according to such a configuration, the first member 321 can be made to be relatively small or lightweight.

The non-contact portion 321S of the first member 321 of the bus bar 320 has no region facing the second member 322 along the direction B orthogonal to the lamination direction A.
According to such a configuration, in a case where the direction B is set to the vibration direction, even when the non-contact portion 321S moves in the vibration direction B, interference with the second member 322 can be suppressed or prevented.

The solid-phase bonding portion 320A of the bus bar 320 is formed in a rectangular shape. The longitudinal direction of the solid-phase bonding portion 320A is a direction along the direction C intersecting with the direction B. For example, the direction B is a direction along the contact surface 321d having a solid-phase bonding portion, or the vibration direction. The first contact portion 321R of the first member 321 and the second contact portion 322R of the second member 322 are solid-phase bonded toward a side facing the longitudinal direction of the solid-phase bonding portion 320A. The first contact portion 321R of the first member 321 and the second contact portion 322R of the second member 322 are solid-phase bonded in the direction C corresponding to the longitudinal direction of the solid-phase bonding portion 320A. According to such a configuration, the ridge line of the solid-phase bonding portion 320A between the first contact portion 321R of the first member 321 and the second contact portion 322R of the second member 322 can be made to be relatively long. The ridge line of the solid-phase bonding portion 320A is a region orthogonal to the direction B. Accordingly, the first member 321 and the second member 322 can be relatively strongly solid-phase bonded. The non-contact portion 321S of the first member 321 is preferably the distal end 321e along the ultrasonic vibration direction since the influence of vibration is effectively mitigated. For example, the vibration direction is the main vibration direction in a case where there is a main vibration direction in the direction B intersecting with the lamination direction A. For example, the vibration direction is a direction in which the amount of vibration is large. In addition, regardless of the above-described fact, a non-contact region can also be formed at a desired distal end 321e. Therefore, the influence of vibration or the like at the desired distal end can be suppressed.

It is also conceivable to form at a long distal end. For example, in the first overlapping portion, the distal end formed in the non-contact region can be the distal end of the first member in the longitudinal direction in the first overlapping portion. In the above description of (the effects of the bus bar 320 and the battery pack 1 in the first embodiment), the distal end is, for example, a distal end in a desired direction along the contact surface 321d having a solid-phase bonding portion of the first member 321. Specifically, the distal end is the distal end of the first non-contact portion 321S present in the overlapping location with the second member 322 in the lamination direction A. Alternatively, the distal end is the distal end of the first member 321 in the vibration direction.

### (Bus bar 610 of modification 1 of first embodiment)

A bus bar 610 of a modification 1 of the first embodiment will be described with reference to Fig. 19. Fig. 19 is a cross-sectional view showing the bus bar 610 of the modification 1 of the first embodiment.

### (Configuration of bus bar 610 of modification 1 of first embodiment)

In Fig. 19 of the modification 1 of the first embodiment, the same configuration as that in the first embodiment is denoted by the same reference numeral as that in the first embodiment, and description thereof is omitted. In Fig. 19 of the modification 1 of the first embodiment, a different configuration from that in the first embodiment is denoted by a different reference numeral from that in the first embodiment and is described.

The same configuration includes configurations that become identical when aspect ratios are changed. For a modification 2 of the first embodiment and the subsequent embodiments as well, the same configuration includes configurations that become identical when aspect ratios are changed. The same configuration includes configurations in which only the ratio between the first contact portion and the first non-contact portion is different.

The bus bar 610 corresponds to a bus bar of dissimilar bonding. The bus bar 610 is an example of a bus bar of one embodiment corresponding to the present invention and corresponds to the bus bar of the configuration (2). As shown in Fig. 19, the bus bar 610 has a first member 611 and the second member 322.

The first contact portion 321R of the first member 611 and the second contact portion 322R of the second member 322 include a solid-phase bonding portion 610A solid-phase bonded. The material of the first member 611 is different from the material of the second member 322. The hardness of the first member 611 is higher than the hardness of the second member 322. The first member 611 contains, for example, copper. The second member 322 contains, for example, aluminum.

As shown in Fig. 19, the first member 611 includes the first mounting portion 321P, the first bent portion 321Q, the first contact portion 321R, and a non-contact portion 611S.

The non-contact portion 611S is continuous with the first contact portion 321R, as shown in Fig. 19. The non-contact portion 611S is formed linearly along the first contact portion 321R and the vibration direction B. For example, the non-contact portion 611S is formed linearly from the first contact portion 321R along the direction B intersecting with the lamination direction A. For example, the direction B is the vibration direction. In addition, for example, the non-contact portion 611S is formed at a location overlapping with the second member 321 in the lamination direction A. The non-contact portion 611S is not in contact with the second member 322 in the lamination direction A. A distal end 611e of the non-contact portion 611S is separated from the second contact portion 322R of the second member 322. The non-contact portion 611S is separated from the second contact portion 322R of the second member 322. The distal end 611e of the non-contact portion 611S is separated from and faces the second bent portion 322Q of the second member 322 in the lamination direction A. A space of, for example, 0.01 mm or more is provided between the non-contact portion 611S and the second member 322 in the lamination direction A. The space between the non-contact portion 611S and the second member 322 in the lamination direction A is preferably 0.01 mm or more and 10 mm or less, more preferably 0.15 mm or more and 5 mm or less, and more preferably 0.3 mm or more and 1 mm or less. Also, for example, a solid-phase bonding portion formed on the contact surface 321d of the first member 611 is formed at a location not overlapping with the first mounting portion 321P in the lamination direction A. Alternatively, the solid-phase bonding portion formed on the contact surface 321d of the first member 611 may be formed apart from the rear surface of the mounting surface 321a.

The non-contact portion 611S is located in a region relatively closer to the second contact portion 322R than the second mounting portion 322P of the second member 322 in the direction B intersecting with the lamination direction A. For example, direction B is the vibration direction. The protruding length of the non-contact portion 611S in the direction B is, for example, 0.2 mm. The protruding length of the non-contact portion 611S in the direction B is preferably 0.1 mm or more and 50 mm or less, more preferably 0.1 mm or more and 10 mm or less, and more preferably 0.1 mm or more and 1 mm or less. The non-contact portion 611S of the first member 611 has no region facing the second member 322 along the direction B orthogonal to the lamination direction A.

### (Effects of bus bar 610 of modification 1 of first embodiment)

The first member 611 of the bus bar 610 related to dissimilar bonding includes the non-contact portion 611S. The non-contact portion 611S is separated from and faces the second bent portion 322Q of the second member 322 in the lamination direction A. At least the distal end 611e of the non-contact portion 611S may be separated from the second bent portion 322Q of the second member 322.

The bus bar 610 having such a configuration enables the bus bar 610 in which the first member 611 and the second member 322 are favorably solid-phase bonded, and the battery pack 1 having the bus bar 610 to be obtained. Specifically, it is possible to suppress or prevent the bonding state of the first member 611 and the second member 322 becoming uneven due to the distal end of the first member 611 coming into contact with or colliding with the second member 322 during the solid-phase bonding. The bus bar 610 is also capable of suppressing or preventing the second member 322 being partially deformed, separated, and the like due to the distal end of the first member 611 coming into contact with or colliding with the second member 322 during the solid-phase bonding, and the generation of a powder, a thread burr, and a shutter burr from the second member 322.

The distal end 611e of the non-contact portion 611S of the first member 611 is separated from and faces the second bent portion 322Q of the second member 322 in the lamination direction A. According to such a configuration, the non-contact portion 611S and the second member 322 can be sufficiently separated.

### (Bus bar 620 of modification 2 of first embodiment)

A bus bar 620 of a modification 2 of the first embodiment will be described with reference to Fig. 20. Fig. 20 is a cross-sectional view showing the bus bar 620 of the modification 2 of the first embodiment.

### (Configuration of bus bar 620 of modification 2 of first embodiment)

In Fig. 20 of the modification 2 of the first embodiment, the same configuration as that in the first embodiment is denoted by the same reference numeral as that in the first embodiment, and description thereof is omitted. In Fig. 20 of the modification 2 of the first embodiment, a different configuration from that in the first embodiment is denoted by a different reference numeral from that in the first embodiment and is described.

The bus bar 620 corresponds to a bus bar of dissimilar bonding. The bus bar 620 is an example of a bus bar of one embodiment corresponding to the present invention and corresponds to the bus bar of the configuration (2). As shown in Fig. 20, the bus bar 620 has the first member 611 and a second member 622.

The first contact portion 321R of the first member 611 and the second contact portion 322R of the second member 622 include a solid-phase bonding portion 620A solid-phase bonded. The material of the first member 611 is different from the material of the second member 622. The hardness of the first member 611 is higher than the hardness of the second member 622. The first member 611 contains, for example, copper. The second member 622 contains, for example, aluminum.

As shown in Fig. 20, the second member 622 includes the second mounting portion 322P, two second bent portions 622Q, and the second contact portion 322R. In the second member 622, the second mounting portion 322P, the two second bent portions 622Q, and the second contact portion 322R are integrally formed in this order.

The two second bent portions 622Q are continuously formed between the second contact portion 322R and the second mounting portion 322P, as shown in Fig. 20.

For example, the distal end 611e of the non-contact portion 611S is separated from and faces the two second bent portions 622Q of the second member 622 in the lamination direction A. The non-contact portion 611S of the first member 611 has no region facing the second member 622 along the vibration direction B orthogonal to the lamination direction A.

### (Effects of bus bar 620 of modification 2 of first embodiment)

The first member 611 of the bus bar 620 related to dissimilar bonding includes the non-contact portion 611S. The non-contact portion 611S is separated from and faces the two second bent portions 622Q of the second member 622 in the lamination direction A. Three or more second bent portions 622Q may be formed in the bus bar 620.

The bus bar 620 having such a configuration enables the bus bar 620 in which the first member 611 and the second member 622 are favorably solid-phase bonded, and the battery pack 1 having the bus bar 620 to be obtained. Specifically, it is possible to suppress or prevent the bonding state of the first member 611 and the second member 622 becoming uneven due to the distal end of the first member 611 coming into contact with or colliding with the second member 622 during the solid-phase bonding. The bus bar 620 is also capable of suppressing or preventing the second member 622 being partially deformed, separated, and the like due to the distal end of the first member 611 coming into contact with or colliding with the second member 622 during the solid-phase bonding, and the generation of a powder, a thread burr, and a shutter burr from the second member 622.

### (Bus bar 630 of modification 3 of first embodiment)

A bus bar 630 of a modification 3 of the first embodiment will be described with reference to Fig. 21 and Fig. 22. Fig. 21 is a cross-sectional view showing the bus bar 630 of the modification 3 of the first embodiment. Fig. 22 is a cross-sectional view showing a first member 631 of the bus bar 630.

### (Configuration of bus bar 630 of modification 3 of first embodiment)

In Fig. 21 of the modification 3 of the first embodiment, the same configuration as that in the first embodiment is denoted by the same reference numeral as that in the first embodiment, and description thereof is omitted. In Fig. 21 of the modification 3 of the first embodiment, a different configuration from that in the first embodiment is denoted by a different reference numeral from that in the first embodiment and is described.

The bus bar 630 corresponds to a bus bar of dissimilar bonding. The bus bar 630 is an example of a bus bar of one embodiment corresponding to the present invention and corresponds to a bus bar of a configuration (3). As shown in Fig. 21, the bus bar 630 has the first member 631 and the second member 322.

The first contact portion 321R of the first member 631 and the second contact portion 322R of the second member 322 include a solid-phase bonding portion 630A solid-phase bonded. The material of the first member 631 is different from the material of the second member 322. The hardness of the first member 631 is higher than the hardness of the second member 322. The first member 631 contains, for example, copper. The second member 322 contains, for example, aluminum.

As shown in Fig. 21, the first member 631 includes the first mounting portion 321P, the first bent portion 321Q, the first contact portion 321R, and a non-contact portion 631S.

The non-contact portion 631S is continuous with the first contact portion 321R, as shown in Fig. 21. The non-contact portion 631S is not in contact with the second member 322 in the lamination direction A. A distal end 631e of the non-contact portion 631S is separated from the second contact portion 322R of the second member 322. The non-contact portion 631S is separated from the second contact portion 322R of the second member 322. The non-contact portion 631S is located in a region relatively closer to the second contact portion 322R than the second mounting portion 322P of the second member 322 in the direction B intersecting with the lamination direction A. The distal end 631e of the non-contact portion 631S is located in a region relatively closer to the second contact portion 322R than the second bent portion 322Q of the second member 322. For example, the direction B is the vibration direction.

The distal end 631e of the non-contact portion 631S includes a corner portion 631f1 which faces the second member 322 in the lamination direction A and is curved in an arc shape. The corner portion 631f1 may be formed to be inclined linearly. A length t2 of the corner portion 631f1 along the lamination direction A is, for example, 1/10 or more of a length t1 of the non-contact portion 631S of the first member 631 along the lamination direction A. The length t2 is, for example, 0.1 mm or more. The corner portion 631f1 of the non-contact portion 631S is located in a region relatively closer to the second contact portion 322R than the second bent portion 322Q of the second member 322. The radius of curvature of the corner portion 631f1 is, for example, 0.1 mm or more. The non-contact portion 631S of the first member 631 has no region facing the second member 322 along the direction B orthogonal to the lamination direction A. For example, the direction B is the vibration direction.

The distal end 631e of the non-contact portion 631S includes a corner portion 631f2 at a portion facing the corner portion 631f1 along the lamination direction A, as shown in Fig. 22. The corner portion 631f2 is curved in an arc shape at the distal end 631e. The arc shape of the corner portion 631f2 is smaller than the arc shape of the corner portion 631f1. The corner portion 631f2 may be formed to be inclined linearly at the distal end 631e. A length t3 of the corner portion 631f2 along the lamination direction A is shorter than the length t2 of the corner portion 631f1 along the lamination direction A. The first mounting portion 321P includes the corner portions 631f2 at both ends that are most separated from the second member 322 along the direction B orthogonal to the lamination direction A and face along the lamination direction A. For example, the direction B is the vibration direction.

### (Effects of bus bar 630 of modification 3 of first embodiment)

The first member 631 of the bus bar 630 related to dissimilar bonding includes the non-contact portion 631S. The distal end 631e of the non-contact portion 631S includes the corner portion 631f1 which faces the second member 322 in the lamination direction A and is curved in an arc shape. The corner portion 631f1 may be formed to be inclined linearly.

The bus bar 630 having such a configuration enables the bus bar 630 in which the first member 631 and the second member 322 are favorably solid-phase bonded, and the battery pack 1 having the bus bar 630 to be obtained. Specifically, it is possible to suppress or prevent the bonding state of the first member 631 and the second member 322 becoming uneven due to the distal end of the first member 631 coming into contact with or colliding with the second member 322 during the solid-phase bonding. The bus bar 630 is also capable of suppressing or preventing the second member 322 being partially deformed, separated, and the like due to the distal end of the first member 631 coming into contact with or colliding with the second member 322 during the solid-phase bonding, and the generation of a powder, a thread burr, and a shutter burr from the second member 322.

The corner portion 631f1 of the non-contact portion 631S of the first member 631 is located in a region relatively closer to the second contact portion 322R than the second bent portion 322Q of the second member 322. According to such a configuration, the non-contact portion 631S of the first member 631 can be configured to be sufficiently short in the direction B. For example, the direction B is a direction along the contact surface 321d having a solid-phase bonding portion of the first member 631. The direction B is also the vibration direction. That is, according to such a configuration, the first member 631 can be made to be relatively small or lightweight.

### (Bus bar 640 of modification 4 of first embodiment)

A bus bar 640 of a modification 4 of the first embodiment will be described with reference to Fig. 23. Fig. 23 is a cross-sectional view showing the bus bar 640 of the modification 4 of the first embodiment.

### (Configuration of bus bar 640 of modification 4 of first embodiment)

In Fig. 23 of the modification 4 of the first embodiment, the same configuration as that in the first embodiment is denoted by the same reference numeral as that in the first embodiment, and description thereof is omitted. In Fig. 23 of the modification 4 of the first embodiment, a different configuration from that in the first embodiment is denoted by a different reference numeral from that in the first embodiment and is described.

The bus bar 640 corresponds to a bus bar of dissimilar bonding. The bus bar 640 is an example of a bus bar of one embodiment corresponding to the present invention and corresponds to a bus bar of a configuration (4). As shown in Fig. 23, the bus bar 640 has the first member 611 and a second member 642.

The first contact portion 321R of the first member 611 and the second contact portion 322R of the second member 642 include a solid-phase bonding portion 640A solid-phase bonded. The material of the first member 611 is different from the material of the second member 642. The hardness of the first member 611 is higher than the hardness of the second member 642. The first member 611 contains, for example, copper. The second member 642 contains, for example, aluminum.

The second member 642 includes an inclined portion 642g inclined from the second contact portion 322R toward the direction B intersecting with the lamination direction A between the second contact portion 322R and the second mounting portion 322P. The inclined portion 642g is formed in the second bent portion 322Q. The distal end 611e of the non-contact portion 611S of the first member 611 is separated from and faces the inclined portion 642g of the second member 642 in the lamination direction A. The non-contact portion 611S of the first member 611 has no region facing the second member 642 along the direction B orthogonal to the lamination direction A. For example, the direction B is a direction along the contact surface 321d having a solid-phase bonding portion of the first member 631. The direction B is also the vibration direction.

### (Effects of bus bar 640 of modification 4 of first embodiment)

The first member 611 of the bus bar 640 related to dissimilar bonding includes the non-contact portion 611S. The non-contact portion 611S of the first member 611 is separated from and faces the inclined portion 642g of the second member 642 in the lamination direction A. At least the distal end 611e of the non-contact portion 611S of the first member 611 may be separated from and face the inclined portion 642g of the second member 642 in the lamination direction A.

The bus bar 640 having such a configuration enables the bus bar 640 in which the first member 611 and the second member 642 are favorably solid-phase bonded, and the battery pack 1 having the bus bar 640 to be obtained. Specifically, it is possible to suppress or prevent the bonding state of the first member 611 and the second member 642 becoming uneven due to the distal end of the first member 611 coming into contact with or colliding with the second member 642 during the solid-phase bonding. The bus bar 640 is also capable of suppressing or preventing the second member 642 being partially deformed, separated, and the like due to the distal end of the first member 611 coming into contact with or colliding with the second member 642 during the solid-phase bonding, and the generation of a powder, a thread burr, and a shutter burr from the second member 642.

The distal end 611e of the non-contact portion 611S of the first member 611 is separated from and faces the inclined portion 642g of the second member 642 in the lamination direction A. According to such a configuration, the non-contact portion 611S and the second member 642 can be sufficiently separated.

### (Bus bar 650 of modification 5 of first embodiment)

A bus bar 650 of a modification 5 of the first embodiment will be described with reference to Fig. 24. Fig. 24 is a cross-sectional view showing the bus bar 650 of the modification 5 of the first embodiment.

### (Configuration of bus bar 650 of modification 5 of first embodiment)

In Fig. 24 of the modification 5 of the first embodiment, the same components as those of the first embodiment are denoted by the same reference numerals as those of the first embodiment, and description thereof is omitted. In Fig. 24 of the modification 5 of the first embodiment, a different configuration from that in the first embodiment is denoted by a different reference numeral from that in the first embodiment and is described.

The bus bar 650 corresponds to a bus bar of dissimilar bonding. The bus bar 650 is an example of a bus bar of one embodiment corresponding to the present invention and corresponds to a bus bar of a configuration (5). As shown in Fig. 24, the bus bar 650 has the first member 611 and a second member 652.

The first contact portion 321R of the first member 611 and the second contact portion 322R of the second member 652 include a solid-phase bonding portion 650A solid-phase bonded. The material of the first member 611 is different from the material of the second member 652. The hardness of the first member 611 is higher than the hardness of the second member 652. The first member 611 contains, for example, copper. The second member 652 contains, for example, aluminum.

The second member 652 includes a recessed portion 652h recessed in a direction apart from the non-contact portion 611S of the first member 611 with respect to the lamination direction A between the second contact portion 322R and the second mounting portion 322P. The distal end 611e of the non-contact portion 611S of the first member 611 is separated from the recessed portion 652h of the second member 652 in the lamination direction A. The length of the recessed portion 652h along the lamination direction A is, for example, 0.05 times or more the length of the second member 652 along the lamination direction A. The length of the recessed portion 652h along the lamination direction A is preferably 0.05 times or more and 0.5 times or less, more preferably 0.07 times or more and 0.3 times or less, and more preferably 0.1 times or more and 0.2 times or less the length of the second member 652 along the lamination direction A. In the bus bar 650, the outer edge or inner edge of the recessed portion 652h may curved or inclined. The non-contact portion 611S of the first member 611 has no region facing the second member 652 along the direction B orthogonal to the lamination direction A. For example, the direction B is a direction along the contact surface 321d having a solid-phase bonding portion of the first member 631. The direction B is also the vibration direction.

### (Effects of bus bar 650 of modification 5 of first embodiment)

The first member 611 of the bus bar 650 related to dissimilar bonding includes the non-contact portion 611S. The distal end 611e of the non-contact portion 611S of the first member 611 is separated from the recessed portion 652h of the second member 652 in the lamination direction A.

The bus bar 650 having such a configuration enables the bus bar 650 in which the first member 611 and the second member 652 are favorably solid-phase bonded, and the battery pack 1 having the bus bar 650 to be obtained. Specifically, it is possible to suppress or prevent the bonding state of the first member 611 and the second member 652 becoming uneven due to the distal end of the first member 611 coming into contact with or colliding with the second member 652 during the solid-phase bonding. The bus bar 650 is also capable of suppressing or preventing the second member 652 being partially deformed, separated, and the like due to the distal end of the first member 611 coming into contact with or colliding with the second member 652 during the solid-phase bonding, and the generation of a powder, a thread burr, and a shutter burr from the second member 652.

### (Bus bar 660 of modification 6 of first embodiment)

A bus bar 660 of a modification 6 of the first embodiment will be described with reference to Fig. 25. Fig. 25 is a cross-sectional view showing the bus bar 660 of the modification 6 of the first embodiment.

### (Configuration of bus bar 660 of modification 6 of first embodiment)

In Fig. 25 of the modification 6 of the first embodiment, the same components as those of the first embodiment are denoted by the same reference numerals as those of the first embodiment, and description thereof is omitted. In Fig. 25 of the modification 6 of the first embodiment, a different configuration from that in the first embodiment is denoted by a different reference numeral from that in the first embodiment and is described.

The bus bar 660 corresponds to a bus bar of dissimilar bonding. The bus bar 660 is an example of a bus bar of one embodiment corresponding to the present invention and corresponds to the bus bar of the configuration (1). As shown in Fig. 25, the bus bar 660 has the first member 661 and a second member 662.

The first contact portion 321R of the first member 661 and the second contact portion 322R of the second member 662 include a solid-phase bonding portion 660A solid-phase bonded. The material of the first member 661 is different from the material of the second member 662. The hardness of the first member 661 is higher than the hardness of the second member 662. The first member 661 contains, for example, copper. The second member 662 contains, for example, aluminum.

As shown in Fig. 25, the first member 661 includes the first mounting portion 321P, the first bent portion 321Q, the first contact portion 321R, and a non-contact portion 661S.

In the bus bar 660, the first contact portion 321R of the first member 661 is located on a side relatively closer to the battery 100 than the second contact portion 322R of the second member 662. That is, for the first member 661 and the second member 662 of the bus bar 660, the overlapping order in the lamination direction A is reversed compared with that of the first member 321 and the second member 322 of the bus bar 320. The first contact portion 321R of the first member 661 is covered with the second contact portion 322R of the second member 662 from the outside of the battery 100. The non-contact portion 661S of the first member 661 is inclined toward the battery 100. A distal end 661e of the non-contact portion 661S is most inclined toward the battery 100. The non-contact portion 661S of the first member 661 has a region facing the second member 662 along the direction B orthogonal to the lamination direction A. The non-contact portion 661S of the first member 661 faces the second bent portion 322Q of the second member 662 along the direction B orthogonal to the lamination direction A. For example, the direction B is a direction along the contact surface 321d having a solid-phase bonding portion of the first member 631. The direction B is also the vibration direction.

### (Effects of bus bar 660 of modification 6 of first embodiment)

The first member 661 of the bus bar 660 related to dissimilar bonding includes the non-contact portion 661S. The non-contact portion 661S of the first member 661 is inclined toward the battery 100.

The bus bar 660 having such a configuration enables the bus bar 660 in which the first member 661 and the second member 662 are favorably solid-phase bonded, and the battery pack 1 having the bus bar 660 to be obtained. Specifically, it is possible to suppress or prevent the bonding state of the first member 661 and the second member 662 becoming uneven due to the distal end of the first member 661 coming into contact with or colliding with the second member 662 during the solid-phase bonding. The bus bar 660 is also capable of suppressing or preventing the second member 662 being partially deformed, separated, and the like due to the distal end of the first member 661 coming into contact with or colliding with the second member 662 during the solid-phase bonding, and the generation of a powder, a thread burr, and a shutter burr from the second member 662.

### (Bus bar 670 of modification 7 of first embodiment)

A bus bar 670 of a modification 7 of the first embodiment will be described with reference to Fig. 26. Fig. 26 is a cross-sectional view showing the bus bar 670 of the modification 7 of the first embodiment.

### (Configuration of bus bar 670 of modification 7 of first embodiment)

In Fig. 26 of the modification 7 of the first embodiment, the same components as those of the modification 6 and the like of the first embodiment are denoted by the same reference numerals as those of the modification 6 and the like of the first embodiment, and description thereof is omitted. Fig. 26 of the modification 7 of the first embodiment is described with reference to a configuration different from those of the modification 6 and the like of the first embodiment with reference to different reference numerals from those of the modification 6 and the like of the first embodiment.

The bus bar 670 corresponds to a bus bar of dissimilar bonding. The bus bar 670 is an example of a bus bar of one embodiment corresponding to the present invention and corresponds to the bus bar of the configuration (3). As shown in Fig. 26, the bus bar 670 has a first member 671 and the second member 662.

The first contact portion 321R of the first member 671 and the second contact portion 322R of the second member 662 include a solid-phase bonding portion 670A solid-phase bonded. The material of the first member 671 is different from the material of the second member 662. The hardness of the first member 671 is higher than the hardness of the second member 662. The first member 671 contains, for example, copper. The second member 662 contains, for example, aluminum.

As shown in Fig. 26, the first member 671 includes the first mounting portion 321P, the first bent portion 321Q, the first contact portion 321R, and a non-contact portion 671S.

A distal end 671e of the non-contact portion 671S includes a corner portion 671f which faces the second member 662 in the lamination direction A and is curved in an arc shape. The corner portion 671f may be formed to be inclined linearly. The length of the corner portion 671f along the lamination direction A is, for example, 1/10 or more of the length of the contact portion 671R of the first member 671 along the lamination direction A. The non-contact portion 671S is not in contact with the second member 662 in the lamination direction A.

In the bus bar 670, the first contact portion 321R of the first member 671 is located on a side relatively closer to the battery 100 than the second contact portion 322R of the second member 662. That is, for the first member 671 and the second member 662 of the bus bar 670, the overlapping order in the lamination direction A is reversed compared with that of the first member 321 and the second member 322 of the bus bar 320 of the first embodiment. The first contact portion 321R of the first member 671 is covered with the second contact portion 322R of the second member 662 from the outside of the battery 100. The non-contact portion 671S of the first member 671 has a region facing the second member 662 along the direction B orthogonal to the lamination direction A. The non-contact portion 671S of the first member 671 faces the second bent portion 322Q of the second member 662 along the direction B orthogonal to the lamination direction A. For example, the direction B is a direction along the contact surface 321d having a solid-phase bonding portion of the first member 631. The direction B is also the vibration direction.

### (Effects of bus bar 670 of modification 7 of first embodiment)

The first member 671 of the bus bar 670 related to dissimilar bonding includes the non-contact portion 671S. The distal end 671e of the non-contact portion 671S includes the corner portion 671f which faces the second member 662 in the lamination direction A and is curved in an arc shape. The corner portion 671f may be formed to be inclined linearly.

The bus bar 670 having such a configuration enables the bus bar 670 in which the first member 671 and the second member 662 are favorably solid-phase bonded, and the battery pack 1 having the bus bar 670 to be obtained. Specifically, it is possible to suppress or prevent the bonding state of the first member 671 and the second member 662 becoming uneven due to the distal end of the first member 671 coming into contact with or colliding with the second member 662 during the solid-phase bonding. The bus bar 670 is also capable of suppressing or preventing the second member 662 being partially deformed, separated, and the like due to the distal end of the first member 671 coming into contact with or colliding with the second member 662 during the solid-phase bonding, and the generation of a powder, a thread burr, and a shutter burr from the second member 662.

### (Bus bar 680 of modification 8 of first embodiment)

A bus bar 680 of a modification 8 of the first embodiment will be described with reference to Fig. 27. Fig. 27 is a cross-sectional view showing the bus bar 680 of the modification 8 of the first embodiment.

### (Configuration of bus bar 680 of modification 8 of first embodiment)

In Fig. 27 of the modification 8 of the first embodiment, the same components as those of the modification 6 and the like of the first embodiment are denoted by the same reference numerals as those of the modification 6 and the like of the first embodiment, and description thereof is omitted. Fig. 27 of the modification 8 of the first embodiment is described with reference to a configuration different from those of the modification 6 and the like of the first embodiment with reference to different reference numerals from those of the modification 6 and the like of the first embodiment.

The bus bar 680 corresponds to a bus bar of dissimilar bonding. The bus bar 680 is an example of a bus bar of one embodiment corresponding to the present invention and corresponds to the bus bar of the configuration (5). As shown in Fig. 27, the bus bar 680 has a first member 681 and a second member 682.

The first contact portion 321R of the first member 681 and the second contact portion 322R of the second member 682 include a solid-phase bonding portion 680A solid-phase bonded. The material of the first member 681 is different from the material of the second member 682. The hardness of the first member 681 is higher than the hardness of the second member 682. The first member 681 contains, for example, copper. The second member 682 contains, for example, aluminum.

As shown in Fig. 27, the first member 681 includes the first mounting portion 321P, the first bent portion 321Q, the first contact portion 321R, and a non-contact portion 681S. As shown in Fig. 27, the second member 682 includes the second mounting portion 322P, the second bent portion 322Q, and the second contact portion 322R.

The second member 682 includes a recessed portion 682h recessed in a direction apart from the non-contact portion 681S of the first member 681 with respect to the lamination direction A between the second contact portion 322R and the second mounting portion 322P. A distal end 681e of the non-contact portion 681S of the first member 681 is separated from the recessed portion 682h of the second member 682 in the lamination direction A.

In the bus bar 680, the first contact portion 321R of the first member 681 is located on a side relatively closer to the battery 100 than the second contact portion 322R of the second member 682. The first contact portion 321R of the first member 681 is covered with the second contact portion 322R of the second member 682 from the outside of the battery 100. The non-contact portion 681S of the first member 681 has a region facing the second member 682 along the direction B orthogonal to the lamination direction A. The non-contact portion 681S of the first member 681 faces the second bent portion 322Q of the second member 682 along the direction B orthogonal to the lamination direction A. For example, the direction B is a direction along the contact surface 321d having a solid-phase bonding portion of the first member 631. The direction B is also the vibration direction.

### (Effects of bus bar 680 of modification 8 of first embodiment)

The first member 681 of the bus bar 680 related to dissimilar bonding includes the non-contact portion 681S. The distal end 681e of the non-contact portion 681S of the first member 681 is separated from the recessed portion 682h of the second member 682 with respect to the lamination direction A.

The bus bar 680 having such a configuration enables the bus bar 680 in which the first member 681 and the second member 682 are favorably solid-phase bonded, and the battery pack 1 having the bus bar 680 to be obtained. Specifically, it is possible to suppress or prevent the bonding state of the first member 681 and the second member 682 becoming uneven due to the distal end of the first member 681 coming into contact with or colliding with the second member 682 during the solid-phase bonding. The bus bar 680 is also capable of suppressing or preventing the second member 682 being partially deformed, separated, and the like due to the distal end of the first member 681 coming into contact with or colliding with the second member 682 during the solid-phase bonding, and the generation of a powder, a thread burr, and a shutter burr from the second member 682.

### (Bus bar 690 of modification 9 of first embodiment)

A bus bar 690 of a modification 9 of the first embodiment will be described with reference to Fig. 28. Fig. 28 is a cross-sectional view showing the bus bar 690 of the modification 9 of the first embodiment.

### (Configuration of bus bar 690 of modification 9 of first embodiment)

In Fig. 28 of the modification 9 of the first embodiment, the same components as those of the first embodiment are denoted by the same reference numerals as those of the first embodiment, and description thereof is omitted. In Fig. 28 of the modification 9 of the first embodiment, a different configuration from that in the first embodiment is denoted by a different reference numeral from that in the first embodiment and is described.

The bus bar 690 corresponds to a bus bar of dissimilar bonding. The bus bar 690 is an example of a bus bar of one embodiment corresponding to the present invention and corresponds to the bus bar of the configuration (1). As shown in Fig. 28, the bus bar 690 has a first member 691 and a second member 692.

The first contact portion 321R of the first member 691 and the second contact portion 322R of the second member 692 include a solid-phase bonding portion 690A solid-phase bonded. The material of the first member 691 is different from the material of the second member 692. The hardness of the first member 691 is higher than the hardness of the second member 692. The first member 691 contains, for example, copper. The second member 692 contains, for example, aluminum.

As shown in Fig. 28, the first member 691 includes the first mounting portion 321P, a first bent portion 691Q, the first contact portion 321R, and the non-contact portion 321S. As shown in Fig. 28, the second member 692 includes the second mounting portion 322P, a second bent portion 692Q, and the second contact portion 322R.

The first bent portion 691Q (bent portion) of the first member 691 is curved toward the same direction along the direction B in which a first boundary 691b and a second boundary 691c intersect with the lamination direction A, as shown in Fig. 28. The first contact portion 321R of the first member 691 extends in the same direction as the first mounting portion 321P along the direction B via the first bent portion 691Q. The first contact portion 321R is formed in parallel with the first mounting portion 321P. The second bent portion 692Q (bent portion) of the second member 692 is curved toward the same direction in which the first boundary 692b and the second boundary 692c are along the direction B, as shown in Fig. 28. The second contact portion 322R of the second member 692 extends in the same direction as the second mounting portion 692P along the direction B via the second bent portion 692Q. The second contact portion 692R is formed in parallel with the second mounting portion 692P. The non-contact portion 321S of the first member 691 has no region facing the second member 692 along the direction B orthogonal to the lamination direction A. For example, the direction B is a direction along the contact surface 321d having a solid-phase bonding portion of the first member 631. The direction B is also the vibration direction.

### (Effects of the bus bar 690 of modification 9 of first embodiment)

The first member 691 of the bus bar 690 related to dissimilar bonding includes the non-contact portion 321S. The non-contact portion 321S is inclined with respect to the direction B intersecting with the lamination direction A and is separated from the second contact portion 322R of the second member 692. At least the distal end 321e of the non-contact portion 321S may be apart from the second contact portion 322R of the second member 692. For example, the direction B is a direction along the contact surface 321d having a solid-phase bonding portion of the first member 631. The direction B is also the vibration direction.

The bus bar 690 having such a configuration enables the bus bar 690 in which the first member 691 and the second member 692 are favorably solid-phase bonded, and the battery pack 1 having the bus bar 690 to be obtained. Specifically, it is possible to suppress or prevent the bonding state of the first member 691 and the second member 692 becoming uneven due to the distal end of the first member 691 coming into contact with or colliding with the second member 692 during the solid-phase bonding. The bus bar 690 is also capable of suppressing or preventing the second member 692 being partially deformed, separated, and the like due to the distal end of the first member 691 coming into contact with or colliding with the second member 692 during the solid-phase bonding, and the generation of a powder, a thread burr, and a shutter burr from the second member 692.

### (Bus bar 710 of second embodiment)

A bus bar 710 of a second embodiment will be described with reference to Fig. 29 and Fig. 30. Fig. 29 is a perspective view showing the bus bar 710 of the second embodiment. Fig. 30 is a cross-sectional view showing the bus bar 710 of the second embodiment.

### (Configuration of bus bar 710 of second embodiment)

In Fig. 29 and Fig. 30 of the second embodiment, the same configuration as that in the first embodiment is denoted by the same reference numeral as that in the first embodiment, and description thereof is omitted. In Fig. 29 and Fig. 30 of the second embodiment, a different configuration from that in the first embodiment is denoted by a different reference numeral from that in the first embodiment and is described.

The bus bar 710 corresponds to a bus bar of dissimilar bonding. The bus bar 710 is an example of a bus bar of one embodiment corresponding to the present invention and corresponds to the bus bar of the configuration (2). As shown in Fig. 29 and Fig. 30, the bus bar 710 has a first member 711 and a second member 712.

A first contact portion 711R of the first member 711 and a second contact portion 712R of the second member 712 include a solid-phase bonding portion 710A solid-phase bonded. The material of the first member 711 is different from the material of the second member 712. The hardness of the first member 711 is higher than the hardness of the second member 712. The first member 711 contains, for example, copper. The second member 712 contains, for example, aluminum.

As shown in Fig. 29 and Fig. 30, the first member 711 includes the first mounting portion 321P, the first bent portion 321Q, the first contact portion 711R, and a pair of non-contact portions 711S. As shown in Fig. 29 and Fig. 30, the second member 712 includes the second mounting portion 322P, the second bent portion 322Q, and a contact portion 722R.

As shown in Fig. 29 and Fig. 30, the first contact portion 711R of the first member 711 is continuous with the first bent portion 321Q. The first contact portion 711R is in contact with the second member 712 in the lamination direction A. The first contact portion 711R is formed in a plate shape. In the first contact portion 711R, a contact surface 711d composed of the direction B and the direction C orthogonal to the direction B is in contact with the second member 712. The first contact portion 711R extends along the direction B. The first contact portion 711R does not face the first mounting portion 321P along the lamination direction A. The first contact portion 711R extends in a direction apart from the first mounting portion 321P via the first bent portion 321Q. The first contact portion 711R is formed in parallel with the first mounting portion 321P.

As shown in Fig. 29 and Fig. 30, the pair of non-contact portions 711S of the first member 711 are continuous with the first contact portion 711R. The non-contact portions 711S are formed linearly along the first contact portion 711R and the direction B. The non-contact portions 711S are not in contact with the second member 712 in the lamination direction A. Distal ends 711e of the non-contact portions 711S are separated from the second contact portion 712R of the second member 712. The non-contact portions 711S are separated from the second contact portion 712R of the second member 712. The non-contact portions 711S have no region facing the second member 712 along the direction B orthogonal to the lamination direction A. The pair of non-contact portions 711S of the first member 711 are formed on both sides of the first contact portion 711R of the first member 711. The pair of non-contact portions 711S of the first member 711 are each separated from the second member 712.

As shown in Fig. 29 and Fig. 30, the second contact portion 712R of the second member 712 is continuous with the second bent portion 322Q. The second contact portion 712R is in contact with the first member 711 in the lamination direction A. The first contact portion 711R is formed in a plate shape. In the second contact portion 712R, a contact surface 712d composed of the direction B and the direction C orthogonal to the direction B is in contact with the first member 711. The second contact portion 712R extends along the direction B. The second contact portion 712R does not face the second mounting portion 322P along the lamination direction A. The second contact portion 712R extends in a direction apart from the second mounting portion 322P along the direction B via the second bent portion 322Q. The second contact portion 712R is formed in parallel with the second mounting portion 322P.

The solid-phase bonding portion 710A is formed in, for example, a rectangular shape in the case of being viewed from the lamination direction A as shown in Fig. 29. The longitudinal direction of the solid-phase bonding portion 710A is a direction along the direction C intersecting with the direction B. The lateral direction of the solid-phase bonding portion 710A is a direction along the direction B. That is, the rectangular solid-phase bonding portion 710A has a length along the direction C intersecting with the direction B longer than a length along the direction B, as shown in Fig. 29. The solid-phase bonding portion 710A may have the longitudinal direction in a direction along the direction B and the lateral direction in a direction along the direction C intersecting with the direction B. In this case, the rectangular solid-phase bonding portion 710A has a length in a direction along the direction B longer than a length in the direction C intersecting with the direction B. The solid-phase bonding portion 710A may be formed in a square shape. In this case, in the square solid-phase bonding portion 710A, the length in the direction along the direction B and the length in the direction C intersecting with the direction B become equal to each other.

### (Effects of bus bar 710 of second embodiment)

The pair of non-contact portions 711S of the first member 711 of the bus bar 710 related to dissimilar bonding are formed on both sides of the first contact portion 711R of the first member 711. The pair of non-contact portions 711S of the first member 711 are each separated from the second member 712. At least the distal ends of the pair of non-contact portions 711S may be each separated from the second member 712.

The bus bar 710 having such a configuration enables the bus bar 710 in which the first member 711 and the second member 712 are favorably solid-phase bonded, and the battery pack 1 having the bus bar 710 to be obtained. Specifically, it is possible to suppress or prevent the bonding state of the first member 711 and the second member 712 becoming uneven due to the distal end of the first member 711 coming into contact with or colliding with the second member 712 during the solid-phase bonding. The bus bar 710 is also capable of suppressing or preventing the second member 712 being partially deformed, separated, and the like due to the distal end of the first member 711 coming into contact with or colliding with the second member 712 during the solid-phase bonding, and the generation of a powder, a thread burr, and a shutter burr from the second member 712.

The solid-phase bonding portion 710A of the bus bar 710 is formed in a rectangular shape. The longitudinal direction of the solid-phase bonding portion 710A is a direction along the direction B. The first contact portion 711R of the first member 711 and the second contact portion 712R of the second member 712 are solid-phase bonded toward a side facing the longitudinal direction of the solid-phase bonding portion 710A. The first contact portion 711R of the first member 711 and the second contact portion 712R of the second member 712 are solid-phase bonded toward the direction B corresponding to the longitudinal direction of the solid-phase bonding portion 710A. According to such a configuration, the ridge line of the solid-phase bonding portion 710A between the first contact portion 711R of the first member 711 and the second contact portion 712R of the second member 712 can be made to be relatively long. The ridge line of the solid-phase bonding portion 710A is a region orthogonal to the direction B. Accordingly, the first member 711 and the second member 712 can be relatively strongly solid-phase bonded. In the above description of the second embodiment, for example, the direction B is a direction intersecting with the lamination direction A. The direction B is a direction along the contact surface 321d having a solid-phase bonding portion of the first member 631. The direction B is also the vibration direction.

### (Bus bar 720 of modification 1 of second embodiment)

A bus bar 720 of a modification 1 of the second embodiment will be described with reference to Fig. 31. Fig. 31 is a cross-sectional view showing the bus bar 720 of the modification 1 of the second embodiment.

### (Configuration of bus bar 720 of modification 1 of second embodiment)

In Fig. 31 of the modification 1 of the second embodiment, the same configuration as that in the first embodiment or the second embodiment is denoted by the same reference numeral as that in the first embodiment or the second embodiment, and description thereof is omitted. In Fig. 31 of the modification 1 of the second embodiment, a different configuration from that in the first embodiment or the second embodiment is denoted by a different reference numeral from that in the first embodiment or the second embodiment and is described.

The bus bar 720 corresponds to a bus bar of dissimilar bonding. The bus bar 720 is an example of a bus bar of one embodiment corresponding to the present invention and corresponds to a bus bar of a configuration (6). As shown in Fig. 31, the bus bar 720 has a first member 721 and a second member 722.

The first contact portion 711R of the first member 721 and the second contact portion 712R of the second member 722 include a solid-phase bonding portion 720A solid-phase bonded. The material of the first member 721 is different from the material of the second member 722. The hardness of the first member 721 is higher than the hardness of the second member 722. The first member 721 contains, for example, copper. The second member 722 contains, for example, aluminum.

As shown in Fig. 31, the first member 721 includes the first mounting portion 321P, the first bent portion 321Q, the first contact portion 711R, and a pair of non-contact portions 721S. As shown in Fig. 31, the second member 722 includes the second mounting portion 322P, the second bent portion 322Q, and the contact portion 722R. The length of the first member 721 along the direction B is the same as the length of the second member 722 along the direction B.

Distal ends 721e of the pair of non-contact portions 721S of the first member 721 include corner portions 721f which face the second member 722 in the lamination direction A and are curved in an arc shape. The corner portion 721f may be formed to be inclined linearly. The length of the corner portion 721f along the lamination direction A is, for example, 1/10 or more of the length of the first contact portion 711R of the first member 721 along the lamination direction A. The radius of curvature of the corner portion 721f is, for example, 0.1 mm or more. The non-contact portion 721S of the first member 721 has no region facing the second member 722 along the direction B orthogonal to the lamination direction A.

### (Effects of bus bar 720 of modification 1 of second embodiment)

The distal end 721e of the non-contact portion 721S of the first member 721 is separated from the second member 722. The distal end 721e of the non-contact portion 721S includes the corner portion 721f which faces the second member 722 in the lamination direction A and is curved in an arc shape. The corner portion 721f may be formed to be inclined linearly.

The bus bar 720 having such a configuration enables the bus bar 720 in which the first member 721 and the second member 722 are favorably solid-phase bonded, and the battery pack 1 having the bus bar 720 to be obtained. Specifically, it is possible to suppress or prevent the bonding state of the first member 721 and the second member 722 becoming uneven due to the distal end of the first member 721 coming into contact with or colliding with the second member 722 during the solid-phase bonding. The bus bar 720 is also capable of suppressing or preventing the second member 722 being partially deformed, separated, and the like due to the distal end of the first member 721 coming into contact with or colliding with the second member 722 during the solid-phase bonding, and the generation of a powder, a thread burr, and a shutter burr from the second member 722.

### (Bus bar 730 of modification 2 of second embodiment)

A bus bar 730 of a modification 2 of the second embodiment will be described with reference to Fig. 32. Fig. 32 is a cross-sectional view showing the bus bar 730 of the modification 2 of the second embodiment.

### (Configuration of bus bar 730 of modification 2 of second embodiment)

In Fig. 32 of the modification 2 of the second embodiment, the same configuration as that in the first embodiment or the second embodiment is denoted by the same reference numeral as that in the first embodiment or the second embodiment, and description thereof is omitted. In Fig. 32 of the modification 2 of the second embodiment, a different configuration from that in the first embodiment or the second embodiment is denoted by a different reference numeral from that in the first embodiment or the second embodiment and is described.

The bus bar 730 corresponds to a bus bar of dissimilar bonding. The bus bar 730 is an example of a bus bar of one embodiment corresponding to the present invention and corresponds to the bus bar of the configuration (6). As shown in Fig. 32, the bus bar 730 has the first member 711 and a second member 732.

The first contact portion 711R of the first member 711 and the second contact portion 732R of the second member 732 include a solid-phase bonding portion 730A solid-phase bonded. The material of the first member 711 is different from the material of the second member 732. The hardness of the first member 711 is higher than the hardness of the second member 732. The first member 711 contains, for example, copper. The second member 732 contains, for example, aluminum.

As shown in Fig. 32, the second member 732 includes the second mounting portion 322P, the second bent portion 322Q, and the second contact portion 732R. The length of the second member 732 along the direction B is the same as the length of the first member 711 along the direction B.

Distal ends 732e at both ends along the vibration direction B of the second contact portion 732R of the second member 732 include corner portions 732f which face the first member 711 in the lamination direction A and are curved in an arc shape. The corner portion 732f may be formed to be inclined linearly. The length of the corner portion 732f along the lamination direction A is, for example, 1/10 or more of the length of the second contact portion 732R of the second member 732 along the lamination direction A. The radius of curvature of the corner portion 732f is, for example, 0.1 mm or more. The non-contact portion 711S of the first member 711 is separated from the corner portion 732f of the second member 732 along the lamination direction A. The non-contact portion 711S of the first member 711 has no region facing the second member 732 along the direction B orthogonal to the lamination direction A.

### (Effects of bus bar 730 of modification 2 of second embodiment)

In the bus bar 730 related to dissimilar bonding, the pair of non-contact portions 711S of the first member 711 are separated from the distal ends 732e of the second contact portion 732R of the second member 732. The distal end 732e of the second contact portion 732R includes the corner portion 732f which faces the first member 711 in the lamination direction A and is curved in an arc shape. The corner portion 732f may be formed to be inclined linearly.

The bus bar 730 having such a configuration enables the bus bar 730 in which the first member 711 and the second member 732 are favorably solid-phase bonded, and the battery pack 1 having the bus bar 730 to be obtained. Specifically, it is possible to suppress or prevent the bonding state of the first member 711 and the second member 732 becoming uneven due to the distal end of the first member 711 coming into contact with or colliding with the second member 732 during the solid-phase bonding. The bus bar 730 is also capable of suppressing or preventing the second member 732 being partially deformed, separated, and the like due to the distal end of the first member 711 coming into contact with or colliding with the second member 732 during the solid-phase bonding, and the generation of a powder, a thread burr, and a shutter burr from the second member 732.

### (Bus bar 740 of modification 3 of second embodiment)

A bus bar 740 of a modification 3 of the second embodiment will be described with reference to Fig. 33. Fig. 33 is a cross-sectional view showing the bus bar 740 of the modification 3 of the second embodiment.

### (Configuration of bus bar 740 of modification 3 of second embodiment)

In Fig. 33 of the modification 3 of the second embodiment, the same configuration as that in the first embodiment or the second embodiment is denoted by the same reference numeral as that in the first embodiment or the second embodiment, and description thereof is omitted. In Fig. 33 of the modification 3 of the second embodiment, a different configuration from that in the first embodiment or the second embodiment is denoted by a different reference numeral from that in the first embodiment or the second embodiment and is described.

The bus bar 740 corresponds to a bus bar of dissimilar bonding. The bus bar 740 is an example of a bus bar of one embodiment corresponding to the present invention and corresponds to the bus bar of the configuration (6). As shown in Fig. 33, the bus bar 740 has the first member 711 and a second member 742.

The first contact portion 711R of the first member 711 and the second contact portion 712R of the second member 742 include a solid-phase bonding portion 740A solid-phase bonded. The material of the first member 711 is different from the material of the second member 742. The hardness of the first member 711 is higher than the hardness of the second member 742. The first member 711 contains, for example, copper. The second member 742 contains, for example, aluminum.

The second member 742 includes recessed portions 742h recessed in directions apart from the pair of non-contact portions 711S of the first member 711 with respect to the lamination direction A. Distal ends 711e of the non-contact portions 711S of the first member 711 are separated from the recessed portions 742h of the second member 742 in the lamination direction A. The length of the recessed portion 742h along the lamination direction A is, for example, 0.05 times or more of the length of the second contact portion 712R of the second member 742 along the lamination direction A. The length of the recessed portion 742h along the lamination direction A is preferably 0.05 times or more and 0.5 times or less, more preferably 0.07 times or more and 0.3 times or less, and more preferably 0.1 times or more and 0.2 times or less the length of the second member 742 along the lamination direction A. In the bus bar 740, the outer edge or inner edge of the recessed portion 742h may curved or inclined. The non-contact portion 711S of the first member 711 has no region facing the second member 742 along the direction B orthogonal to the lamination direction A.

### (Effects of bus bar 740 of modification 3 of second embodiment)

In the bus bar 740 related to dissimilar bonding, the pair of non-contact portions 711S of the first member 711 are separated from the recessed portions 742h of the second member 742 in the lamination direction A.
At least the distal ends of the pair of non-contact portions 711S are separated from the recessed portions 742h of the second member 742, respectively.

The bus bar 740 having such a configuration enables the bus bar 740 in which the first member 711 and the second member 742 are favorably solid-phase bonded, and the battery pack 1 having the bus bar 740 to be obtained. Specifically, it is possible to suppress or prevent the bonding state of the first member 711 and the second member 742 becoming uneven due to the distal end of the first member 711 coming into contact with or colliding with the second member 742 during the solid-phase bonding. The bus bar 740 is also capable of suppressing or preventing the second member 742 being partially deformed, separated, and the like due to the distal end of the first member 711 coming into contact with or colliding with the second member 742 during the solid-phase bonding, and the generation of a powder, a thread burr, and a shutter burr from the second member 742.

### (Bus bar 750 of modification 4 of second embodiment)

A bus bar 750 of a modification 4 of the second embodiment will be described with reference to Fig. 34. Fig. 34 is a cross-sectional view showing the bus bar 750 of the modification 4 of the second embodiment.

### (Configuration of bus bar 750 of modification 4 of second embodiment)

In Fig. 34 of the modification 4 of the second embodiment, the same configuration as that in the first embodiment or the second embodiment is denoted by the same reference numeral as that in the first embodiment or the second embodiment, and description thereof is omitted. In Fig. 34 of the modification 4 of the second embodiment, a different configuration from that in the first embodiment or the second embodiment is denoted by a different reference numeral from that in the first embodiment or the second embodiment and is described.

The bus bar 750 corresponds to a bus bar of dissimilar bonding. The bus bar 750 is an example of a bus bar of one embodiment corresponding to the present invention and corresponds to the bus bar of the configuration (1). As shown in Fig. 34, the bus bar 750 has a first member 751 and the second member 722.

The first contact portion 711R of the first member 751 and the second contact portion 712R of the second member 722 include a solid-phase bonding portion 750A solid-phase bonded. The material of the first member 751 is different from the material of the second member 722. The hardness of the first member 751 is higher than the hardness of the second member 722. The first member 751 contains, for example, copper. The second member 722 contains, for example, aluminum.

In the bus bar 750, a pair of non-contact portions 751S of the first member 751 are inclined in a direction apart from the second member 722. Distal ends 751e of the non-contact portions 751S are most inclined toward the direction apart from the second member 722. The non-contact portion 751S is inclined so as to rise toward the lamination direction A from the direction B. The non-contact portions 751S of the first member 751 have no region facing the second member 722 along the direction B orthogonal to the lamination direction A.

### (Effects of bus bar 750 of modification 4 of second embodiment)

The first member 751 of the bus bar 750 related to dissimilar bonding includes the pair of non-contact portions 751S. The non-contact portions 751S of the first member 751 are inclined toward the direction apart from the second member 722.

The bus bar 750 having such a configuration enables the bus bar 750 in which the first member 751 and the second member 722 are favorably solid-phase bonded, and the battery pack 1 having the bus bar 750 to be obtained. Specifically, it is possible to suppress or prevent the bonding state of the first member 751 and the second member 722 becoming uneven due to the distal end of the first member 751 coming into contact with or colliding with the second member 722 during the solid-phase bonding. The bus bar 750 is also capable of suppressing or preventing the second member 722 being partially deformed, separated, and the like due to the distal end of the first member 751 coming into contact with or colliding with the second member 722 during the solid-phase bonding, and the generation of a powder, a thread burr, and a shutter burr from the second member 722.

### (Bus bar 760 of modification 5 of second embodiment)

A bus bar 760 of a modification 5 of the second embodiment will be described with reference to Fig. 35. Fig. 35 is a cross-sectional view showing the bus bar 760 of the modification 5 of the second embodiment.

### (Configuration of bus bar 760 of modification 5 of second embodiment)

In Fig. 35 of the modification 5 of the second embodiment, the same configuration as that in the first embodiment or the second embodiment is denoted by the same reference numeral as that in the first embodiment or the second embodiment, and description thereof is omitted. In Fig. 35 of the modification 5 of the second embodiment, a different configuration from that in the first embodiment or the second embodiment is denoted by a different reference numeral from that in the first embodiment or the second embodiment and is described.

The bus bar 760 corresponds to a bus bar of dissimilar bonding. The bus bar 760 is an example of a bus bar of one embodiment corresponding to the present invention and corresponds to the bus bar of the configuration (6). As shown in Fig. 35, the bus bar 760 has the first member 711 and a second member 762.

The first contact portion 711R of the first member 711 and the second contact portion 712R of the second member 762 include a solid-phase bonding portion 760A solid-phase bonded. The material of the first member 711 is different from the material of the second member 762. The hardness of the first member 711 is higher than the hardness of the second member 762. The first member 711 contains, for example, copper. The second member 762 contains, for example, aluminum.

In the second member 762, a pair of distal ends 762e facing the pair of non-contact portions 711S of the first member 711 in the lamination direction A are inclined toward the battery 100. The non-contact portion 711S of the first member 711 has no region facing the second member 762 along the direction B orthogonal to the lamination direction A.

### (Effects of bus bar 760 of modification 5 of second embodiment)

In the bus bar 760 related to dissimilar bonding, the pair of non-contact portions 711S of the first member 711 of the bus bar 760 are separated from the pair of distal ends 762e of the second member 762 inclined toward the direction apart from the first member 711.

The bus bar 760 having such a configuration enables the bus bar 760 in which the first member 711 and the second member 762 are favorably solid-phase bonded, and the battery pack 1 having the bus bar 760 to be obtained. Specifically, it is possible to suppress or prevent the bonding state of the first member 711 and the second member 762 becoming uneven due to the distal end of the first member 711 coming into contact with or colliding with the second member 762 during the solid-phase bonding. The bus bar 760 is also capable of suppressing or preventing the second member 762 being partially deformed, separated, and the like due to the distal end of the first member 711 coming into contact with or colliding with the second member 762 during the solid-phase bonding, and the generation of a powder, a thread burr, and a shutter burr from the second member 762.

### (Bus bar 810 of third embodiment)

A bus bar 810 of a third embodiment will be described with reference to Fig. 36 and Fig. 37. Fig. 36 is a cross-sectional view showing the bus bar 810 of the third embodiment. Fig. 37 is a cross-sectional view partially showing the bus bar 810 of the third embodiment.

### (Configuration of bus bar 810 of third embodiment)

In Fig. 36 and Fig. 37 of the third embodiment, the same configuration as that in the first embodiment or the second embodiment is denoted by the same reference numeral as that in the first embodiment or the second embodiment, and description thereof is omitted. In Fig. 36 and Fig. 37 of the third embodiment, a different configuration from that in the first embodiment or the second embodiment is denoted by a different reference numeral from that in the first embodiment or the second embodiment and is described.

The bus bar 810 corresponds to a bus bar of the same kind of bonding. The bus bar 810 is an example of bus bars of two embodiments corresponding to the present invention and corresponds to the bus bar of the configuration (1) and a bus bar of a configuration (7). As shown in Fig. 36 and Fig. 37, the bus bar 810 has a first member 811 and a second member 812.

The first contact portion 321R of the first member 811 and the second contact portion 322R of the second member 812 include a solid-phase bonding portion 810A solid-phase bonded. The material of the first member 811 is the same as the material of the second member 812. The hardness of the first member 811 is the same as the hardness of the second member 812. The first member 811 and the second member 812 each contain, for example, aluminum. The first member 811 and the second member 812 may each contain copper.

As shown in Fig. 36, the first member 811 includes the first mounting portion 321P, the first bent portion 321Q, the first contact portion 321R, and the non-contact portion 321S (first non-contact portion). The second member 812 includes the second mounting portion 322P, the second bent portion 322Q, the second contact portion 322R, and a non-contact portion 812S (second non-contact portion).

As shown in Fig. 36, the non-contact portion 812S is continuous with the first contact portion 321R. A distal end 812e of the non-contact portion 812S includes a corner portion 812f which faces the first member 811 in the lamination direction A and is curved in an arc shape. The corner portion 812f (corner portion) may be formed to be inclined linearly. The length of the corner portion 812f along the lamination direction A is, for example, 1/10 or more of the length of the second contact portion 322R of the second member 812 along the lamination direction A.

The second contact portion 322R of the second member 812 is covered by the first contact portion 321R of the first member 811 from the outside of the battery 100. The non-contact portion 321S of the first member 811 has no region facing the second member 812 along the direction B orthogonal to the lamination direction A. The non-contact portion 812S of the second member 812 has a region facing the first member 811 along the direction B orthogonal to the lamination direction A. The non-contact portion 812S of the second member 812 faces the first bent portion 321Q of the first member 811 along the direction B orthogonal to the lamination direction A.

The non-contact portion 321S of the first member 811 and the non-contact portion 322S of the second member 812 face each other along the direction B orthogonal to the lamination direction A via the solid-phase bonding portion 810A.
In the above description of the modifications of the second embodiment, for example, the direction B is a direction intersecting with the lamination direction A. The direction is also a direction along the contact surface 321d having a solid-phase bonding portion of the first member 631. The direction B is also the vibration direction.

### (Effects of bus bar 810 of third embodiment)

The first member 811 of the bus bar 810 related to the same kind of bonding includes the non-contact portion 321S. The non-contact portion 321S is inclined with respect to the direction B intersecting with the lamination direction A and is separated from the second contact portion 322R of the second member 812. At least the distal end 321e of the non-contact portion 321S may be separated from the second contact portion 322R of the second member 812. The second member 812 of the bus bar 810 includes the non-contact portion 812S. The distal end 812e of the non-contact portion 812S includes the corner portion 812f which faces the first member 811 in the lamination direction A and is curved in an arc shape. The corner portions 812f may be formed to be inclined linearly.

The bus bar 810 having such a configuration enables the bus bar 810 in which the first member 811 and the second member 812 are favorably solid-phase bonded, and the battery pack 1 having the bus bar 810 to be obtained. Specifically, it is possible to suppress or prevent the bonding state of the first member 811 and the second member 812 becoming uneven due to the distal end of the first member 811 coming into contact with or colliding with the second member 812 during the solid-phase bonding. The bus bar 810 is also capable of suppressing or preventing the second member 812 being partially deformed, separated, and the like due to the distal end of the first member 811 coming into contact with or colliding with the second member 812 during the solid-phase bonding, and the generation of a powder, a thread burr, and a shutter burr from the second member 812. Similarly, the bus bar 810 is capable of suppressing or preventing the distal end of the second member 812 coming into contact with or colliding with the first member 811.

The first member 811 and the second member 812 each contain, for example, aluminum. The first member 811 and the second member 812 may each contain copper. According to such a configuration, the first end bus bar 310 may be formed by the first member 811 and the second member 812 each containing aluminum. Also, the second end bus bar 330 may be formed by the first member 811 and the second member 812 each containing copper.

### (Bus bar 820 of modification 1 of third embodiment)

A bus bar 820 of a modification 1 of the third embodiment will be described with reference to Fig. 38. Fig. 38 is a cross-sectional view partially showing the bus bar 820 of the modification 1 of the third embodiment.

The bus bar 820 corresponds to a bus bar of the same kind of bonding. The bus bar 820 is an example of bus bars of two embodiments corresponding to the present invention and corresponds to the bus bar of the configuration (1) and a bus bar of a configuration (8). As shown in Fig. 38, the bus bar 820 has the first member 811 and a second member 822.

The first contact portion 321R of the first member 811 and the second contact portion 322R of the second member 822 include a solid-phase bonding portion 810A solid-phase bonded. The material of the first member 811 is the same as the material of the second member 822. The hardness of the first member 811 is the same as the hardness of the second member 822. The first member 811 and the second member 822 each contain, for example, aluminum. The first member 811 and the second member 822 may each contain copper.

At least a distal end 822e of a second non-contact portion 822S of the second member 822 is inclined with respect to the direction B intersecting with the lamination direction A and is separated from the first contact portion 321R of the first member 811.

### (Effects of bus bar 820 of modification 1 of third embodiment)

In the bus bar 820 related to the same kind of bonding, at least the distal end 822e of the second non-contact portion 822S of the second member 822 is inclined with respect to the direction B intersecting with the lamination direction A and is separated from the first contact portion 321R of the first member 811.

The bus bar 820 having such a configuration enables the bus bar 820 in which the first member 811 and the second member 822 are favorably solid-phase bonded, and the battery pack 1 having the bus bar 820 to be obtained. Specifically, it is possible to suppress or prevent the bonding state of the first member 811 and the second member 822 becoming uneven due to the distal end of the first member 811 coming into contact with or colliding with the second member 822 during the solid-phase bonding. The bus bar 820 is also capable of suppressing or preventing the second member 822 being partially deformed, separated, and the like due to the distal end of the first member 811 coming into contact with or colliding with the second member 822 during the solid-phase bonding, and the generation of a powder, a thread burr, and a shutter burr from the second member 822. Similarly, the bus bar 820 is capable of suppressing or preventing the distal end of the second member 822 coming into contact with or colliding with the first member 811.

### (Bus bar 830 of modification 2 of third embodiment)

A bus bar 830 of a modification 2 of the third embodiment will be described with reference to Fig. 39. Fig. 39 is a cross-sectional view partially showing the bus bar 830 of the modification 2 of the third embodiment.

The bus bar 830 corresponds to a bus bar of the same kind of bonding. The bus bar 830 is an example of bus bars of two embodiments corresponding to the present invention and corresponds to the bus bar of the configuration (1) and a bus bar of a configuration (9). As shown in Fig. 39, the bus bar 830 has a first member 831 and a second member 832.

The first contact portion 321R of the first member 831 and the second contact portion 322R of the second member 832 include a solid-phase bonding portion 810A solid-phase bonded. The material of the first member 831 is the same as the material of the second member 832. The hardness of the first member 831 is the same as the hardness of the second member 832. The first member 831 and the second member 832 each contain, for example, aluminum. The first member 831 and the second member 832 may each contain copper.

The first member 831 includes a recessed portion 831h recessed in a direction apart from the second non-contact portion 832S of the second member 832 with respect to the lamination direction A between the first contact portion 321R and the first mounting portion 321P. At least a distal end 832e of the second non-contact portion 832S of the second member 832 is separated from the recessed portion 831h of the first member 831.

### (Effects of bus bar 830 of modification 2 of third embodiment)

In the bus bar 830 related to the same kind of bonding, at least the distal end 832e of the second non-contact portion 832S of the second member 832 is separated from the recessed portion 831h of the first member 831.

The bus bar 830 having such a configuration enables the bus bar 830 in which the first member 831 and the second member 832 are favorably solid-phase bonded, and the battery pack 1 having the bus bar 830 to be obtained. Specifically, it is possible to suppress or prevent the bonding state of the first member 831 and the second member 832 becoming uneven due to the distal end of the first member 831 coming into contact with or colliding with the second member 832 during the solid-phase bonding. The bus bar 830 is also capable of suppressing or preventing the second member 832 being partially deformed, separated, and the like due to the distal end of the first member 831 coming into contact with or colliding with the second member 832 during the solid-phase bonding, and the generation of a powder, a thread burr, and a shutter burr from the second member 832. Similarly, the bus bar 830 is capable of suppressing or preventing the distal end of the second member 832 coming into contact with or colliding with the first member 831.

### (Bus bar 840 of modification 3 of third embodiment)

A bus bar 840 of a modification 3 of the third embodiment will be described with reference to Fig. 40. Fig. 40 is a cross-sectional view showing the bus bar 840 of the modification 3 of the third embodiment.

### (Configuration of bus bar 840 of modification 3 of third embodiment)

In Fig. 40 of the modification 3 of the third embodiment, the same configuration as that in the first embodiment or the second embodiment is denoted by the same reference numeral as that in the first embodiment or the second embodiment, and description thereof is omitted. In Fig. 40 of the modification 3 of the third embodiment, a different configuration from that in the first embodiment or the second embodiment is denoted by a different reference numeral from that in the first embodiment or the second embodiment and is described.

The bus bar 840 corresponds to a bus bar of the same kind of bonding. The bus bar 840 is an example of bus bars of two embodiments corresponding to the present invention and corresponds to the bus bars of the configuration (2) and the configuration (7). As shown in Fig. 40, the bus bar 840 has a first member 841 and the second member 812.

The first contact portion 321R of the first member 841 and the second contact portion 322R of the second member 812 include a solid-phase bonding portion 840A solid-phase bonded. The material of the first member 841 is the same as the material of the second member 812. The hardness of the first member 841 is the same as the hardness of the second member 812. The first member 841 and the second member 812 each contain, for example, aluminum. The first member 841 and the second member 812 may each contain copper.

As shown in Fig. 40, the first member 841 includes the first mounting portion 321P, the first bent portion 321Q, the first contact portion 321R, and the non-contact portion 611S (first non-contact portion).

The non-contact portion 611S is formed linearly along the first contact portion 321R and the direction B. The non-contact portion 611S is not in contact with the second member 812 in the lamination direction A.

The second contact portion 322R of the second member 812 is covered with the first contact portion 321R of the first member 841 from the outside of the battery 100. The non-contact portion 611S of the first member 841 has no region facing the second member 812 along the direction B orthogonal to the lamination direction A.

A distal end 812e of the non-contact portion 812S of the second member 812 includes a corner portion 812f which faces the first member 841 in the lamination direction A and is curved in an arc shape. The corner portion 812f may be formed to be inclined linearly.

The non-contact portion 611S of the first member 841 and the non-contact portion 812S of the second member 812 face each other along the direction B orthogonal to the lamination direction A via the solid-phase bonding portion 840A.

### (Effects of bus bar 840 of modification 3 of third embodiment)

The first member 841 of the bus bar 840 related to the same kind of bonding includes the non-contact portion 611S. The non-contact portion 611S is not in contact with the second member 812 in the lamination direction A. The non-contact portion 611S is formed linearly along, for example, the first contact portion 321R and the direction B. The second member 812 of the bus bar 840 includes the non-contact portion 812S. The distal end 812e of the non-contact portion 812S includes the corner portion 812f which faces the first member 841 in the lamination direction A and is curved in an arc shape. The corner portion 812f may be formed to be inclined linearly.

The bus bar 840 having such a configuration enables the bus bar 840 in which the first member 841 and the second member 812 are favorably solid-phase bonded, and the battery pack 1 having the bus bar 840 to be obtained. Specifically, it is possible to suppress or prevent the bonding state of the first member 841 and the second member 812 becoming uneven due to the distal end of the first member 841 coming into contact with or colliding with the second member 812 during the solid-phase bonding. The bus bar 840 is also capable of suppressing or preventing the second member 812 being partially deformed, separated, and the like due to the distal end of the first member 841 coming into contact with or colliding with the second member 812 during the solid-phase bonding, and the generation of a powder, a thread burr, and a shutter burr from the second member 812. Similarly, the bus bar 840 is capable of suppressing or preventing the distal end of the second member 812 coming into contact with or colliding with the first member 841.

### (Bus bar 850 of modification 4 of third embodiment)

A bus bar 850 of a modification 4 of the third embodiment will be described with reference to Fig. 41. Fig. 41 is a cross-sectional view showing the bus bar 850 of the modification 4 of the third embodiment.

### (Configuration of bus bar 850 of modification 4 of third embodiment)

In Fig. 41 of the modification 4 of the third embodiment, the same configuration as that in the first embodiment or the second embodiment is denoted by the same reference numeral as that in the first embodiment or the second embodiment, and description thereof is omitted. In Fig. 41 of the modification 4 of the third embodiment, a different configuration from that in the first embodiment or the second embodiment is denoted by a different reference numeral from that in the first embodiment or the second embodiment and is described.

The bus bar 850 corresponds to a bus bar of the same kind of bonding. The bus bar 850 is an example of bus bars of two embodiments corresponding to the present invention and corresponds to the bus bars of the configuration (3) and the configuration (7). As shown in Fig. 41, the bus bar 850 has a first member 851 and the second member 812.

The first contact portion 321R of the first member 851 and the second contact portion 322R of the second member 812 include a solid-phase bonding portion 850A solid-phase bonded. The material of the first member 851 is the same as the material of the second member 812. The hardness of the first member 851 is the same as the material of the second member 812. The first member 851 and the second member 812 each contain, for example, aluminum. The first member 851 and the second member 812 may each contain copper.

As shown in Fig. 41, the first member 851 includes the first mounting portion 321P, the first bent portion 321Q, the first contact portion 321R, and a non-contact portion 631S (first non-contact portion).

A distal end 631e of the non-contact portion 631S includes a corner portion 631f1 which faces the second member 812 in the lamination direction A and is curved in an arc shape. The corner portion 631f1 may be formed to be inclined linearly. The non-contact portion 631S is not in contact with the second member 812 in the lamination direction A.

The second contact portion 322R of the second member 812 is covered with the first contact portion 321R of the first member 851 from the outside of the battery 100. The non-contact portion 631S of the first member 851 has no region facing the second member 812 along the direction B orthogonal to the lamination direction A.

The non-contact portion 631S of the first member 851 and the non-contact portion 812S of the second member 812 face each other along the direction B orthogonal to the lamination direction A via the solid-phase bonding portion 850A.

### (Effects of bus bar 850 of modification 4 of third embodiment)

The first member 851 of the bus bar 850 related to the same kind of bonding includes the non-contact portion 631S. The distal end 631e of the non-contact portion 631S includes the corner portion 631f1 which faces the second member 812 in the lamination direction A and is curved in an arc shape. The corner portion 631f1 may be formed to be inclined linearly. The second member 812 of the bus bar 850 includes the non-contact portion 812S. The distal end 812e of the non-contact portion 812S includes the corner portion 812f which faces the first member 851 in the lamination direction A and is curved in an arc shape. The corner portion 812f may be formed to be inclined linearly.

The bus bar 850 having such a configuration enables the bus bar 850 in which the first member 851 and the second member 812 are favorably solid-phase bonded, and the battery pack 1 having the bus bar 850 to be obtained. Specifically, it is possible to suppress or prevent the bonding state of the first member 851 and the second member 812 becoming uneven due to the distal end of the first member 851 coming into contact with or colliding with the second member 812 during the solid-phase bonding. The bus bar 850 is also capable of suppressing or preventing the second member 812 being partially deformed, separated, and the like due to the distal end of the first member 851 coming into contact with or colliding with the second member 812 during the solid-phase bonding, and the generation of a powder, a thread burr, and a shutter burr from the second member 812. Similarly, the bus bar 850 is capable of suppressing or preventing the distal end of the second member 812 coming into contact with or colliding with the first member 851.

### (Bus bar 860 of modification 5 of third embodiment)

A bus bar 860 of a modification 5 of the third embodiment will be described with reference to Fig. 42. Fig. 42 is a cross-sectional view showing the bus bar 860 of the modification 5 of the third embodiment.

### (Configuration of bus bar 860 of modification 5 of third embodiment)

In Fig. 42 of the modification 5 of the third embodiment, the same configuration as that in the first embodiment or the second embodiment is denoted by the same reference numeral as that in the first embodiment or the second embodiment, and description thereof is omitted. In Fig. 42 of the modification 5 of the third embodiment, a different configuration from that in the first embodiment or the second embodiment is denoted by a different reference numeral from that in the first embodiment or the second embodiment and is described.

The bus bar 860 corresponds to a bus bar of the same kind of bonding. The bus bar 860 is an example of bus bars of two embodiments corresponding to the present invention and corresponds to the bus bars of the configuration (4) and the configuration (7). As shown in Fig. 42, the bus bar 860 has the first member 841 and a second member 862.

The first contact portion 321R of the first member 841 and the second contact portion 322R of the second member 862 include a solid-phase bonding portion 860A solid-phase bonded. The material of the first member 841 is the same as the material of the second member 862. The hardness of the first member 841 is the same as the hardness of the second member 862. The first member 841 and the second member 862 each contain, for example, aluminum. The first member 841 and the second member 862 may each contain copper.

The second member 862 includes an inclined portion 862g (second inclined portion) inclined from the second contact portion 322R toward the direction B intersecting with the lamination direction A between the second contact portion 322R and the second mounting portion 322P. The inclined portion 862g is formed in the second bent portion 322Q. The distal end 611e of the non-contact portion 611S (first non-contact portion) of the first member 841 is separated from and faces the inclined portion 862g of the second member 862 in the lamination direction A.

The second contact portion 322R of the second member 862 is covered with the first contact portion 321R of the first member 841 from the outside of the battery 100. The non-contact portion 611S of the first member 841 has no region facing the second member 862 along the direction B orthogonal to the lamination direction A.

The non-contact portion 611S of the first member 841 and the non-contact portion 812S of the second member 862 face each other along the direction B orthogonal to the lamination direction A via the solid-phase bonding portion 860A.

### (Effects of bus bar 860 of modification 5 of third embodiment)

The first member 841 of the bus bar 860 related to the same kind of bonding includes the non-contact portion 611S. The distal end 611e of the non-contact portion 611S (first non-contact portion) of the first member 841 is separated from and faces the inclined portion 862g of the second member 862 in the lamination direction A. The second member 862 of the bus bar 860 includes the non-contact portion 812S. The distal end 812e of the non-contact portion 812S includes the corner portion 812f which faces the first member 841 in the lamination direction A and is curved in an arc shape. The corner portion 812f may be formed to be inclined linearly.

The bus bar 860 having such a configuration enables the bus bar 860 in which the first member 841 and the second member 862 are favorably solid-phase bonded, and the battery pack 1 having the bus bar 860 to be obtained. Specifically, it is possible to suppress or prevent the bonding state of the first member 841 and the second member 862 becoming uneven due to the distal end of the first member 841 coming into contact with or colliding with the second member 862 during the solid-phase bonding. The bus bar 860 is also capable of suppressing or preventing the second member 862 being partially deformed, separated, and the like due to the distal end of the first member 841 coming into contact with or colliding with the second member 862 during the solid-phase bonding, and the generation of a powder, a thread burr, and a shutter burr from the second member 862. Similarly, the bus bar 860 is capable of suppressing or preventing the distal end of the second member 862 coming into contact with or colliding with the first member 841.

### (Bus bar 870 of modification 6 of third embodiment)

A bus bar 870 of a modification 6 of the third embodiment will be described with reference to Fig. 43. Fig. 43 is a cross-sectional view showing the bus bar 870 of the modification 6 of the third embodiment.

### (Configuration of bus bar 870 of modification 6 of third embodiment)

In Fig. 43 of the modification 6 of the third embodiment, the same configuration as that in the first embodiment or the second embodiment is denoted by the same reference numeral as that in the first embodiment or the second embodiment, and description thereof is omitted. In Fig. 43 of the modification 6 of the third embodiment, a different configuration from that in the first embodiment or the second embodiment is denoted by a different reference numeral from that in the first embodiment or the second embodiment and is described.

The bus bar 870 corresponds to a bus bar of the same kind of bonding. The bus bar 870 is an example of bus bars of two embodiments corresponding to the present invention and corresponds to the bus bars of the configuration (5) and the configuration (7). As shown in Fig. 43, the bus bar 870 has a first member 841 and a second member 872.

The first contact portion 321R of the first member 841 and the second contact portion 322R of the second member 872 include a solid-phase bonding portion 870A solid-phase bonded. The material of the first member 841 is the same as the material of the second member 872. The hardness of the first member 841 is the same as the hardness of the second member 872. The first member 841 and the second member 872 each contain, for example, aluminum. The first member 841 and the second member 872 may each contain copper.

The second member 872 includes a recessed portion 872h recessed in a direction apart from the non-contact portion 611S (first non-contact portion) of the first member 841 with respect to the lamination direction A between the second contact portion 322R and the second mounting portion 322P. The distal end 611e of the non-contact portion 611S of the first member 841 is separated from a recessed portion 872h of the second member 872 in the lamination direction A.

The second contact portion 322R of the second member 872 is covered with the first contact portion 321R of the first member 841 from the outside of the battery 100.

The non-contact portion 611S of the first member 841 and the non-contact portion 812S of the second member 872 face each other along the direction B orthogonal to the lamination direction A via the solid-phase bonding portion 870A.

### (Effects of bus bar 870 of modification 6 of third embodiment)

The first member 841 of the bus bar 870 related to the same kind of bonding includes the non-contact portion 611S. The distal end 611e of the non-contact portion 611S of the first member 841 is separated from the recessed portion 872h of the second member 872 in the lamination direction A. The second member 872 of the bus bar 870 includes the non-contact portion 812S. The distal end 812e of the non-contact portion 812S includes the corner portion 812f which faces the first member 841 in the lamination direction A and is curved in an arc shape. The corner portion 812f may be formed to be inclined linearly.

The bus bar 870 having such a configuration enables the bus bar 870 in which the first member 841 and the second member 872 are favorably solid-phase bonded, and the battery pack 1 having the bus bar 870 to be obtained. Specifically, it is possible to suppress or prevent the bonding state of the first member 841 and the second member 872 becoming uneven due to the distal end of the first member 841 coming into contact with or colliding with the second member 872 during the solid-phase bonding. The bus bar 870 is also capable of suppressing or preventing the second member 872 being partially deformed, separated, and the like due to the distal end of the first member 841 coming into contact with or colliding with the second member 872 during the solid-phase bonding, and the generation of a powder, a thread burr, and a shutter burr from the second member 872. Similarly, the bus bar 870 is capable of suppressing or preventing the distal end of the second member 872 coming into contact with or colliding with the first member 841.

### (Bus bar 880 of modification 7 of third embodiment)

A bus bar 880 of a modification 7 of the third embodiment will be described with reference to Fig. 44. Fig. 44 is a cross-sectional view showing the bus bar 880 of the modification 7 of the third embodiment.

### (Configuration of bus bar 880 of modification 7 of third embodiment)

In Fig. 44 of the modification 7 of the third embodiment, the same configuration as that in the first embodiment or the second embodiment is denoted by the same reference numeral as that in the first embodiment or the second embodiment, and description thereof is omitted. In Fig. 44 of the modification 7 of the third embodiment, a different configuration from that in the first embodiment or the second embodiment is denoted by a different reference numeral from that in the first embodiment or the second embodiment and is described.

The bus bar 880 corresponds to a bus bar of the same kind of bonding. The bus bar 880 is an example of bus bars of two embodiments corresponding to the present invention and corresponds to the bus bars of the configuration (1) and the configuration (7). As shown in Fig. 44, the bus bar 880 has a first member 881 and a second member 882.

The first contact portion 321R of the first member 881 and the second contact portion 322R of the second member 882 include a solid-phase bonding portion 880A solid-phase bonded. The material of the first member 881 is the same as the material of the second member 882. The hardness of the first member 881 is the same as the hardness of the second member 882. The first member 881 and the second member 882 each contain, for example, aluminum. The first member 881 and the second member 882 may each contain copper.

As shown in Fig. 44, the first member 881 includes the first mounting portion 321P, the first bent portion 691Q, the first contact portion 321R, and the non-contact portion 321S (first non-contact portion). As shown in Fig. 44, the second member 882 includes the second mounting portion 322P, the second bent portion 692Q, the second contact portion 322R, and the non-contact portion 812S.

The non-contact portion 321S (first non-contact portion) of the first member 881 and the non-contact portion 812S of the second member 882 face each other along the direction B orthogonal to the lamination direction A via the solid-phase bonding portion 880A.

### (Effects of bus bar 880 of modification 7 of third embodiment)

The first member 881 of the bus bar 880 related to the same kind of bonding includes the non-contact portion 321S. The non-contact portion 321S is inclined with respect to the direction B intersecting with the lamination direction A and is separated from the second contact portion 322R of the second member 882. At least the distal end 321e of the non-contact portion 321S may be separated from the second contact portion 322R of the second member 882. The second member 882 of the bus bar 880 includes the non-contact portion 812S. The distal end 812e of the non-contact portion 812S includes the corner portion 812f which faces the first member 881 in the lamination direction A and is curved in an arc shape. The corner portion 812f may be formed to be inclined linearly.

The bus bar 880 having such a configuration enables the bus bar 880 in which the first member 881 and the second member 882 are favorably solid-phase bonded, and the battery pack 1 having the bus bar 880 to be obtained. Specifically, it is possible to suppress or prevent the bonding state of the first member 881 and the second member 882 becoming uneven due to the distal end of the first member 881 coming into contact with or colliding with the second member 882 during the solid-phase bonding. The bus bar 880 is also capable of suppressing or preventing the second member 882 being partially deformed, separated, and the like due to the distal end of the first member 881 coming into contact with or colliding with the second member 882 during the solid-phase bonding, and the generation of a powder, a thread burr, and a shutter burr from the second member 882. Similarly, the bus bar 880 is capable of suppressing or preventing the distal end of the second member 882 coming into contact with or colliding with the first member 881.
In the above description of the third embodiment (including the modifications), for example, the direction B is a direction intersecting with the lamination direction A. The direction B is also a direction along the contact surface 321d having a solid-phase bonding portion of the first member 631. The direction B is also the vibration direction.

### (Bus bar 910 of fourth embodiment)

A bus bar 910 of a fourth embodiment will be described with reference to Fig. 45. Fig. 45 is a cross-sectional view showing the bus bar 910 of the fourth embodiment.

### (Configuration of bus bar 910 of fourth embodiment)

In Fig. 45 of the fourth embodiment, the same configuration as that in the first embodiment, the second embodiment, or the third embodiment is denoted by the same reference numeral as that in the first embodiment, the second embodiment, or the third embodiment, and description thereof is omitted. In Fig. 45 of the fourth embodiment, a different configuration from that in the first embodiment, the second embodiment, or the third embodiment is denoted by a different reference numeral from that in the first embodiment, the second embodiment, or the third embodiment and is described.

The bus bar 910 corresponds to a bus bar of the same kind of bonding. The bus bar 910 is an example of bus bars of two embodiments corresponding to the present invention and corresponds to the bus bars of the configuration (1) and the configuration (6). As shown in Fig. 45, the bus bar 910 has a first member 911 and a second member 912.

The first contact portion 711R of the first member 911 and the second contact portion 712R of the second member 912 include a solid-phase bonding portion 910A solid-phase bonded. The material of the first member 911 is the same as the material of the second member 912. The hardness of the first member 911 is the same as the hardness of the second member 912. The first member 911 and the second member 912 each contain, for example, aluminum. The first member 911 and the second member 912 may each contain copper.

As shown in Fig. 45, the first member 911 includes the first mounting portion 321P, the first bent portion 321Q, the first contact portion 711R, and a pair of the non-contact portions 721S. As shown in Fig. 31, the second member 912 includes the second mounting portion 322P, the second bent portion 322Q, and the second contact portion 712R. The length of the first member 911 along the direction B is the same as the length of the second member 912 along the direction B.

Distal ends 721e of the pair of non-contact portions 721S of the first member 911 include the corner portions 721f which face the second member 912 in the lamination direction A and are curved in an arc shape. The corner portion 721f may be formed to be inclined linearly. The length of the corner portion 721f along the lamination direction A is, for example, 1/10 or more of the length of the first contact portion 711R of the first member 911 along the lamination direction A. The radius of curvature of the corner portion 721f is, for example, 0.1 mm or more. The non-contact portions 721S of the first member 911 have no region facing the second member 912 along the direction B orthogonal to the lamination direction A.

### (Effects of bus bar 910 of fourth embodiment)

The distal ends 721e of the non-contact portions 721S of the first member 911 are separated from the second member 912. The distal end 721e of the non-contact portion 721S includes the corner portion 721f which faces the second member 912 in the lamination direction A and is curved in an arc shape. The corner portion 721f may be formed to be inclined linearly.

The configuration of the first member 911 and the second member 912 of the bus bar 910 of the fourth embodiment may be replaced by the configuration of the first member and the second member of any of the modification 2 to modification 5 of the third embodiment.

The bus bar 910 having such a configuration enables the bus bar 910 in which the first member 911 and the second member 912 are favorably solid-phase bonded, and the battery pack 1 having the bus bar 910 to be obtained. Specifically, it is possible to suppress or prevent the bonding state of the first member 911 and the second member 912 becoming uneven due to the distal end of the first member 911 coming into contact with or colliding with the second member 912 during the solid-phase bonding. The bus bar 910 is also capable of suppressing or preventing the second member 912 being partially deformed, separated, and the like due to the distal end of the first member 911 coming into contact with or colliding with the second member 912 during the solid-phase bonding, and the generation of a powder, a thread burr, and a shutter burr from the second member 912. Similarly, the bus bar 910 is capable of suppressing or preventing the distal end of the second member 912 coming into contact with or colliding with the first member 911.
In the above description of the fourth embodiment, for example, the direction B is a direction intersecting with the lamination direction A. The direction B is also a direction along the contact surface 321d having a solid-phase bonding portion of the first member 631. The direction B is also the vibration direction.

### (Configuration of bus bar 1010 of fifth embodiment)

In Fig. 46 and Fig. 47 of a fifth embodiment, the same configuration as that in the first embodiment, the second embodiment, the third embodiment, or the fourth embodiment is denoted by the same reference numeral as that in the first embodiment, the second embodiment, the third embodiment, or the fourth embodiment, and description thereof is omitted. In Fig. 46 and Fig. 47 of the fifth embodiment, a different configuration from that in the first embodiment, the second embodiment, the third embodiment, or the fourth embodiment is denoted by a different reference numeral from that in the first embodiment, the second embodiment, the third embodiment, or the fourth embodiment and is described.

Fig. 46 is a perspective view showing a bus bar 1010 of the fifth embodiment. Fig. 47 is a cross-sectional view showing the bus bar 1010 of the fifth embodiment.

The bus bar 1010 corresponds to a bus bar of dissimilar bonding. The bus bar 1010 is an example of bus bars of three embodiments corresponding to the present invention. As shown in Fig. 46 and Fig. 47, the bus bar 1010 has the first member 321 and a second member 1012.

The first contact portion 321R of the first member 321 and the second contact portion 322R of a second member 1012 include a solid-phase bonding portion 1010A solid-phase bonded. The material of the first member 321 is different from the material of the second member 1012. The hardness of the first member 321 is higher than the hardness of the second member 1012. The first member 321 contains, for example, copper. The second member 1012 contains, for example, aluminum.

The non-contact portion of the first member 321 is annularly continuous with the first contact portion 321R from the outside of the first contact portion 321R on the surface of the first contact portion 321R intersecting with the lamination direction A. The non-contact portion of the first member 321 includes an annular portion that is not in contact with the second member 1012 in the lamination direction A. The non-contact portion of the first member 321 includes a first non-contact portion 321S1, a second non-contact portion 321S2, a third non-contact portion 321S3, and a fourth non-contact portion 321S4. The non-contact portion of the first member 321 annularly surrounds the edge of the second contact portion 322R of the second member 1012 on the surface intersecting with the lamination direction A. The non-contact portion of the first member 321 is, the first non-contact portion 321S1, the second non-contact portion 321S2, the third non-contact portion 321S3, and the fourth non-contact portion 321S4, annularly continuous with the first contact portion 321R from the outside of the first contact portion 321R. The first non-contact portion 321S1 and the third non-contact portion 321S3 face each other in a first vibration direction B1. The first vibration direction B1 is the same direction as the vibration direction B of the first embodiment. The second non-contact portion 321S2 and the fourth non-contact portion 321S4 face each other in a second vibration direction B2. The second vibration direction B2 is the same direction as the direction C intersecting with the vibration direction B of the first embodiment.

The second member 1012 includes the second contact portion 322R in contact with the first contact portion 321R of the first member 321 in the lamination direction. The second member 1012 is configured so that the width of the second member 1012 in the second vibration direction B2 is made to be relatively short. The length of the second contact portion 322R of the second member 1012 in the first vibration direction B1 is shorter than the length of the first contact portion 321R of the first member 321 in the first vibration direction B1. Both ends in the first vibration direction B1 of the second contact portion 322R of the second member 1012 are located inside both ends in the first vibration direction B1 of the first contact portion 321R of the first member 321 in the first vibration direction B1. The length of the second contact portion 322R of the second member 1012 in the second vibration direction B2 is shorter than the length of the first contact portion 321R of the first member 321 in the second vibration direction B2. Both ends in the second vibration direction B2 of the second contact portion 322R of the second member 1012 are located inside both ends in the second vibration direction B2 of the first contact portion 321R of the first member 321 in the second vibration direction B2. The second contact portion 322R of the second member 1021 is separated from the first non-contact portion 321S1, the second non-contact portion 321S2, the third non-contact portion 321S3, and the fourth non-contact portion 321S4 of the first member 321.

The first contact portion 321R of the first member 321 and the second contact portion 322R of the second member 1012 of the bus bar 1010 include the solid-phase bonding portion 1010A. The solid-phase bonding portion 1010A is formed on the first contact portion 321R located inside the non-contact portion of the first member 321 and the second contact portion 322R of the second member 1012 along a region where the non-contact portion of the first member 321 is located on a surface intersecting with the lamination direction A.

### (Solid-phase bonding by ultrasonic bonding of bus bar 1010)

Solid-phase bonding by ultrasonic bonding of the bus bar 1010 will be described with reference to Fig. 48. The Solid-phase bonding by ultrasonic bonding described with reference to Fig. 9 will be omitted.

Fig. 48 is a schematic view showing the solid-phase bonding of the bus bar 1010 of the fifth embodiment.

The solid-phase bonding portion 1010A of the bus bar 1010 is formed by applying ultrasonic vibration W2 in the first vibration direction B1 and in the second vibration direction B2 in an arc shape in a state where the first member 321 and the second member 1012 are pressurized in the lamination direction A. The vibration shape of the vibration W2 is, for example, a perfect circle shape. The vibration shape of the vibration W2 may be a long oval shape along the second vibration direction B2. The vibration shape of the vibration W2 may be a long oval shape along the first vibration direction B1. The vibration shape of the vibration W2 may be an arbitrary two-dimensional geometric shape. In the solid-phase bonding by ultrasonic bonding, the first member 321 and the second member 1012 are pressurized from, for example, the side of the first member 321. In this case, the horn 11 is brought into contact with the first member 321, and the anvil 12 is brought into contact with the second member 1012. In the solid-phase bonding by ultrasonic bonding, the first member 321 and the second member 1012 may be pressurized from the side of the second member 1012. In this case, the anvil 12 is brought into contact with the first member 321, and the horn 11 is brought into contact with the second member 1012.

### (Effects of bus bar 1010 of fifth embodiment)

The non-contact portion of the first member 321 is annularly continuous with the first contact portion 321R from the outside of the first contact portion 321R on the surface of the first contact portion 321R intersecting with the lamination direction A. The non-contact portion of the first member 321 includes the first non-contact portion 321S1, the second non-contact portion 321S2, the third non-contact portion 321S3, and the fourth non-contact portion 321S4. The non-contact portion of the first member 321 annularly surrounds the second contact portion 322R of the second member 1012 on the surface intersecting with the lamination direction A. The first non-contact portion 321S1, the second non-contact portion 321S2, the third non-contact portion 321S3, and the fourth non-contact portion 321S4 which correspond to the distal end of the first member 321 are separated from the second contact portion 322R of the second member 1021.

The bus bar 1010 having such a configuration enables the bus bar 1010 in which the first member 321 and the second member 1012 are favorably solid-phase bonded, and the battery pack 1 having the bus bar 1010 to be obtained. Specifically, it is possible to suppress or prevent the bonding state of the first member 321 and the second member 1012 becoming uneven due to the distal end of the first member 321 coming into contact with or colliding with the second member 1012 during the solid-phase bonding. The bus bar 1010 is also capable of suppressing or preventing the second member 1012 being partially deformed, separated, and the like due to the distal end of the first member 321 coming into contact with or colliding with the second member 1012 during the solid-phase bonding, and the generation of a powder, a thread burr, and a shutter burr from the second member 1012. Similarly, the bus bar 1010 is capable of suppressing or preventing the distal end of the second member 1012 coming into contact with or colliding with the first member 321.

The configuration of the first member 321 and the second member 1012 of the bus bar 1010 of the fifth embodiment may be replaced by the configuration of the first member and the second member of a modification of the first embodiment. The configuration of the first member 321 and the second member 1012 of the bus bar 1010 of the fifth embodiment may be replaced by the configuration of the first member and the second member of the second embodiment or a modification of the second embodiment. In those configurations, the length of the second contact portion of the second member in the first vibration direction B1 is configured to be shorter than the length of the first contact portion of the first member in the first vibration direction B1. Both ends of the second contact portion of the second member in the first vibration direction B1 are located inside both ends of the first contact portion of the first member in the first vibration direction B1. The length of the second contact portion of the second member in the second vibration direction B2 is configured to be shorter than the length of the first contact portion of the first member in the second vibration direction B2. Both ends of the second contact portion of the second member in the second vibration direction B2 are located inside both ends of the first contact portion of the first member in the second vibration direction B2.

### (Bus bar 1110 of sixth embodiment)

A bus bar 1110 of a sixth embodiment will be described with reference to Fig. 49 and Fig. 50. Fig. 49 is a perspective view showing the bus bar 1110 of the sixth embodiment. Fig. 50 is a cross-sectional view showing the bus bar 1110 of the sixth embodiment.

The bus bar 1110 is an example of a bus bar of an embodiment corresponding to the present invention. The first mounting portion 321P is mounted on the negative electrode terminal 104 (electrode terminal) of the battery 100. The first mounting portion 321P connected to the negative electrode terminal of the battery has a mounting surface 321a of the first mounting portion 321P which faces the battery negative electrode terminal and has a negative electrode connection surface connected to the battery negative electrode terminal, and a rear surface 1111g of the first mounting portion 321P having a negative electrode connection rear surface located on the opposite side (rear surface side) of the mounting surface 321a of the first mounting portion 321P.

The second mounting portion 322P is mounted on the positive electrode terminal 103 (electrode terminal) of the battery 100. The second mounting portion 322P connected to the positive electrode terminal of the battery has a mounting surface 322a of the second mounting portion 322P which faces the battery positive electrode terminal and has a positive electrode connection surface connected to the battery positive electrode terminal, and a rear surface 1112g of the second mounting portion 322P having a positive electrode connection rear surface located on the opposite side (rear surface side) of the mounting surface 322a of the second mounting portion 322P.

The first member 321 and the second member 322 have the following configuration when viewed in the direction A which is the overlapping direction of the second member 322 and the first member 321. The first member 321 and the second member 322 have a first overlapping portion 1111U and a second overlapping portion 1112U where parts of the first member 321 and the second member 322 overlap with each other.

Between the first member overlapping portion 1111U and the second member overlapping portion 1112U of the bus bar 1110, overlapping surfaces facing each other are formed. Specifically, the first member overlapping portion 1111U has the contact surface 321d facing the second member overlapping portion 1112U. The second member overlapping portion 1112U has the contact surface 322d facing the first member overlapping portion 1111U.

The first member overlapping portion 1111U of the first member 321 has the solid-phase bonding portion 320A with the second member overlapping portion 1112U on the second member 322 side. Similarly, the second member overlapping portion 1112U of the second member 322 has the solid-phase bonding portion 320A with the first member overlapping portion 1111U on the first member 321 side.

The contact surface 321d of the first member 321 has the solid-phase bonding portion 320A bonded to the contact surface 322d of the second member. Similarly, the contact surface 322d of the second member 322 has the solid-phase bonding portion 320A bonded to the contact surface 321d of the first member.

The first member overlapping portion 1111U has the first contact portion 321R of the first member and the non-contact portion 321S of the first member. The second member overlapping portion 1112U has the second contact portion 322R and the non-contact portion 322S of the second member.

The non-contact portion 321S may be used in the sense of a region not in contact with the second member overlapping portion 1112U in the first member overlapping portion 1111U. The non-contact portion 322S may be used in the sense of a region not in contact with the first member overlapping portion 1111U in the second member overlapping portion 1112U.

For example, when the second overlapping portion 1112U and the first overlapping portion 1111U extending at an angle of about 90° in a direction toward the adjacent positive electrode and negative electrode from the rising direction of the second bent portion 322Q and the first bent portion 321Q are provided, the contact surface 322d on the positive electrode side of the second overlapping portion 1112U and the contact surface 321d on the negative electrode side of the first overlapping portion 1111U can be provided almost in parallel with the lamination direction of the battery 100. The slope of the second overlapping portion 1112U or the first overlapping portion 1111U may not be about 90° and can also be a predetermined slope closer to the slope of the surface of the second mounting portion 322P or the first mounting portion 321P than the slope of the second bent portion 322Q or the first bent portion 321Q.

In a case where the contact surface 321d and the contact surface 322d are provided, for example, in parallel with the lamination direction of the batteries 100, the orientation of stress applied to the contact surface 321d and the contact surface 322d of the bus bar 1110 becomes the shear direction during the charge and discharge of the batteries or during the expansion/contraction of the batteries due to, for example, a long-term use of the batteries. In this case, it is known that the static strength becomes several times larger than that in a case where stress is applied in the peeling direction. Therefore, a bus bar less likely to undergo fatigue failure or shear failure can be realized.

The second bent portion 322Q and the first bent portion 321Q also have an advantage of changing the heights of the second overlapping portion 1112U and the first overlapping portion 1111U. Examples of the advantage include the following.

That is, for example, in a case where a solvent is incorporated or a case where the positive electrode terminal 103, the negative electrode terminal 104, the second overlapping portion 1112U, and the first overlapping portion 1111U are all the same in height, there is a problem in that the solvent is likely to stay since a place where the solvent drips is limited.

On the other hand, in a case where the positive electrode terminal 103, the negative electrode terminal 104, and the second overlapping portion 1112U and the first overlapping portion 1111U are different in height, the solvent flows since the solvent tends to drip toward a low potential energy, and there is an advantage in that corrosion is less likely to occur on the contact surface 322d of the second overlapping portion 1112U and the contact surface 321d of the first overlapping portion 1111U, where there is a bonding surface between the second overlapping portion 1112U and the first overlapping portion 1111U.

It is generally known that in a case where a solvent is brought into contact with the bonding surface of dissimilar metals, the corrosion rate is several times higher than that of corrosion on a single metal. Therefore, as a configuration for suppressing corrosion, an effect of changing the height of the bonding surface of dissimilar metals can also be imparted.

The example in which the contact surface 321d and the contact surface 322d of the second overlapping portion 1112U and the first overlapping portion 1111U are made to be higher than the surfaces of the positive electrode terminal 103 and the negative electrode terminal 104 is one example, and even in a case where the contact surface 321d of the first overlapping portion 1111U and the contact surface 322d of the second overlapping portion 1112U of the second overlapping portion 1112U and the first overlapping portion 1111U are made to be lower than the positive electrode terminal 103 and the negative electrode terminal 104, the stress relaxation effect can be obtained.

The magnitudes of bends R between the first mounting portion 321P and the first bent portion 321Q and between the second mounting portion 322P and the second bent portion 322Q and the magnitudes of bends R between the second bent portion 322Q and the second overlapping portion 1112U and between the first bent portion 321Q and the first overlapping portion 1111U are also not particularly limited.

That is, in the study of the present embodiment, it was found that the effect of the present embodiment can be obtained even when the bend R is large or small. Similarly, it was found that there is an effect of relaxing stress on the contact surface 322d of the second overlapping portion 1112U and on the contact surface 321d of the first overlapping portion 1111U. The magnitudes of the bends R are preferably 0.001 mm or more and 8 mm or less, more preferably 0.01 mm or more and 4 mm or less, and most preferably 0.1 mm or more and 2 mm or less.

The rising locations of the second bent portion 322Q and the first bent portion 321Q rising from the first mounting portion 321P and the first mounting portion 321P can also be adjusted. That is, in a case where the distance between the positive electrode terminal 103 and the negative electrode terminal 104 of the battery is fixed, it becomes easy to freely adjust the areas of the bonding surface between the second overlapping portion 1112U and the first overlapping portion 1111U, and the contact surface 321d or the contact surface 322d including the bonding portion.

For example, it is possible to widen the contact area of the positive electrode terminal 103 and the negative electrode terminal 104 and the second mounting portion 322P or the first mounting portion 321P and narrow the overlapping area of the contact surface 321d and the contact surface 322d of the first overlapping portion 1111U and the second overlapping portion 1112U.

As another example, it is possible to narrow the contact areas between the positive electrode terminal 103 and the negative electrode terminal 104 and the second mounting portion 322P and the first mounting portion and widen the overlapping areas of the contact surface 321d and the contact surface 322d of the second overlapping portion 1112U and the first overlapping portion 1111U.

These means that the desired rising locations may be determined depending on stress that is applied to the contact surface 321d and the contact surface 322d of the second overlapping portion 1112U and the first overlapping portion 1111U of the bus bar 1110. Particularly, in the present embodiment, the overlapping area of the contact surface 321d and the contact surface 322d of the second member 322 and the first member 321 was made to be large. However, the configuration may be different as long as the effect of the present embodiment can be obtained.

In the case of widening the overlapping area of the contact surface 321d and the contact surface 322d of the second member 322 and the first member 321, since the distance between the positive electrode terminal 103 and the negative electrode terminal 104 is fixed, it is also important to cover the upper surfaces of the electrodes with the second bent portion 322Q and the first bent portion 321Q without letting the contact surfaces be in contact with parts of the upper surfaces of the adjacent electrode terminals.

However, the locational relationship between the second bent portion 322Q and the first bent portion 321Q is an example, and any locational relationship may be accepted as long as the configuration in the present embodiment can be satisfied. That is, the locations of the second bent portion 322Q and the first bent portion 321Q may be provided at any locations as long as a desired overlapping area between the contact surface 321d and the contact surface 322d is obtained and a desired strength can be obtained.

For example, the second bent portion 322Q and the first bent portion 321Q may be provided to cover at least only a part of the upper surface of one electrode terminal of adjacent electrode terminals without coming into physical contact therewith, and the second bent portion 322Q and the first bent portion 321Q may be provided in such a locational relationship that the second bent portion 322Q and the first bent portion 321Q rise from the upper surface of the other battery terminal while covering the upper surface.

As long as the contact area with the electrode terminal can be ensured, the first bent portion 321Q and the second bent portion 322Q may cover and be in physical contact with both adjacent electrode terminals. The ratio of the area where the second mounting portion 322P and the first mounting portion 321P of the second member 322 and the first member 321 cover and are physically and electrically connected to the upper surfaces of the electrode terminals may be any ratio as long as the electrical connections between the electrode terminals and the bus bar 1110 are obtained and the contact area becomes a desired value, but is preferably 20% or more, more preferably 50% or more, and still more preferably 70% or more.

In addition, in a case where the electrical resistance value of the bus bar 1110 or the bonding strength with the electrode terminal fits into a desired value, in order to reduce the material of the bus bar 1110, not all of the terminal surfaces of the electrode terminals may be covered by narrowing not all of the terminal surfaces of the adjacent electrode terminals in the upper surfaces of the electrode terminals, but, for example, the width of the bus bar 1110.

### (Effects of bus bar 1110 of sixth embodiment)

A bus bar that is mounted on a battery pack has a first member having conductivity, a second member having conductivity, an overlapping portion where the first member and a part of the second member are overlapped, and a solid-phase bonding portion formed on the overlapping portion, and the first member has a first mounting portion having a first mounting surface connected to any of a first battery or an electrical device and a first rear surface located on the opposite side of the first mounting surface, a first overlapping portion configuring the overlapping portion, and a solid-phase bonding portion formed on the first overlapping portion and disposed apart from the first rear surface. The second member has a second mounting portion having a second mounting surface connected to any of a second battery or an electrical device in a case where the first member is connected to the first battery or the first battery in a case where the first member is connected to the electrical device, a second rear surface located on the opposite side of the second mounting surface, a second overlapping portion configuring the overlapping portion, and a solid-phase bonding portion formed on the second overlapping portion and disposed apart from the second rear surface. The first overlapping portion has a non-contact portion located apart from the second overlapping portion in an overlapping direction of the first overlapping portion and the second overlapping portion, and a distal end formed in the non-contact portion. This prevents, for example, a distal end (also referred to as an end portion or a distal end edge portion) present at an overlapping portion of a metal plate having large hardness from coming into contact with an overlapping portion of the other metal plate, and it is thus possible to suppress the distal end shaving the other metal plate. In a metal member having an overlapping portion formed thereon, when one member has a distal end, the distal end comes into contact with an overlapping surface of the other member, whereby shaving, friction, or stress is applied. The present feature makes it possible to suppress the application of unnecessary heat and stress and to provide a product having a highly reliable bonding structure.

Although what has been described above is about a product in which metal members having different hardness are overlapped with each other, even when the hardness is the same, it is possible to provide a product having a highly reliable bonding structure by suppressing the above-described influence of one distal end present in the overlapping portion on the other metal plate.

It is preferable that the distal end of the overlapping portion in the non-contact portion is preferably a distal end in an ultrasonic vibration direction in the direction B intersecting with the lamination direction A since the influence of vibration is effectively relaxed. The vibration direction is the main vibration direction in a case where there is the main vibration direction. The vibration direction is, for example, a direction in which the amount of vibration is large. Regardless of that, the desired distal end can also be formed in the non-contact region. An influence of vibration or the like at the desired distal end can be suppressed.
The direction B is, for example, a direction along the contact surface 321d having a solid-phase bonding portion or the contact surface.

For example, the formation of a long distal end is also conceivable. For example, in the first overlap portion, the distal end formed in the non-contact region can be a distal end in the longitudinal direction of the first member in the first overlapping portion.

Since the solid-phase bonding portion is provided at a location apart from the rear surface of the mounting portion toward the battery electrode, the degree of freedom of management or bonding shape of the mounting portion that is connected to the battery or the mounting surface thereof becomes high. A battery pack having a highly reliable connection can be configured.
In addition, the solid-phase bonding portion may be provided at a location that does not overlap with the mounting portion with the electrode of the battery in the lamination direction A of the first member and the second member.

In the first overlapping portion 1111U, all of the distal ends 321e may not have the non-contact portion 321S. For example, a predetermined range of the distal ends 321e may be formed on the non-contact portion 321S.

As an example, the first member is a first metal plate formed of a first metal material. For example, the first member has a copper-based metal containing copper. The second member is a second metal plate formed of a second metal material having smaller hardness than that of the first metal plate. The second member has, for example, an aluminum-based metal containing aluminum.

The first overlapping portion 1111U and the second overlapping portion 1112U can have the following relationship. The first overlapping portion 1111U is disposed further apart from the battery 100 than the second overlapping portion 1112U. Alternatively, the second overlapping portion 1112U is disposed further apart from the battery than the first overlapping portion 1111U. This makes it possible to save the space around the battery electrode terminal and contributes to the size reduction of the battery pack.

Any of the second overlapping portion 1112U of the second member 322 and the first overlapping portion 1111U of the first member 321 can be on a side apart from the battery to which the second member 322 or the first member 321 is connected. For example, the first overlapping portion 1112U can be on a side apart from the battery.

In a case where the first overlapping portion 1111U is provided with the distal end 321e having the non-contact portion 321S, it becomes easy to confirm the state of the distal end 321e.

For example, the distal end may be provided on a side where the first member overlapping portion 1111U is close to the battery. In a case where the first overlapping portion 1111U is provided with the distal end 321e having the non-contact portion 321S, since the distal end is located on the battery side, it is difficult for an external foreign matter or the like to enter. A battery pack having a highly reliable connection state can be provided.

The above-described features preferably include at least one of the following configurations (1), (2), (3), (4), and (5).
(1) The non-contact portion of the first member has the first portion and the second portion closer to the distal end than the first portion between the solid-phase bonding portion and the distal end, and in the second portion, the interval between the first overlapping portion and the second overlapping portion in the overlapping direction has a larger interval than the first portion. Specifically, one example is the contents described in the first embodiment (for example, Fig. 12 and Fig. 13 and description thereof).

Configuration (2): The first overlapping portion has the first contact surface that includes a solid-phase bonding portion and is in contact with the second overlapping portion, the second overlapping portion has the second contact surface that includes a solid-phase bonding portion and is in contact with the first overlapping portion, and the second overlapping portion of the second member has a bent portion that is bent in a direction apart from the first contact surface in the overlapping direction between the solid-phase bonding portion and the distal end. Specifically, one example is the contents described in the modifications 1 and 2 (for example, Fig. 19 and Fig. 20 and description thereof).

Configuration (3): In a case where the distal end of the first overlapping portion includes the first corner portion having an arc shape or an inclined shape on the second overlapping portion side and has the second corner portion having an arc shape or an inclined shape formed on the surface side of the distal end opposite to the second overlapping portion side or the third corner portion having an arc shape or an inclined shape formed on the distal end of the first mounting portion, the length of the first corner portion is longer than the length of the second corner portion or the third corner portion in the overlapping direction. Specifically, one example is the contents described in the modification 3 (for example, Fig. 21 and Fig. 22 and description thereof).

Configuration (4): The second overlapping portion includes a recessed portion recessed in a direction apart from the first overlapping portion or an inclined portion, the recessed portion or the inclined portion is disposed to overlap with the distal end in the overlapping direction, and the first overlapping portion has a distal end disposed not in contact with the recessed portion or the inclined portion. Specifically, one example is the contents described in the modifications 4 and 5 (for example, Fig. 23, Fig. 24 and description thereof).

Configuration (5): The first overlapping portion has a first contact surface that includes a solid-phase bonding portion and is in contact with the second overlapping portion, the second overlapping portion has a second contact surface that includes a solid-phase bonding portion and is in contact with the first overlapping portion, the first overlapping portion has an inclined portion inclined to a side apart from the second contact surface in a portion of the solid-phase bonding portion on the distal end side in the overlapping direction, and the inclined portion has a non-contact portion located apart from the second contact surface and a distal end formed in the non-contact portion. Specifically, one example is the contents described in the first embodiment.

The t2 of the corner portion 631f1 is longer than the t3 of the corner portion 631f2 or any t3 of any corner portion of the distal end of the first mounting portion 321P. A bus bar having a high quality can be efficiently manufactured by intensively machining a corner portion located in the first overlapping portion 1111U and adjacent to the second member 322. More preferably, the t2 of the corner portion 631f1 is longer than the t3 of the corner portion 631f2 and any t3 of the distal end of the first mounting portion 321P.

### (Battery packs of other embodiments)

The battery pack of the present invention is not limited to the configurations of the battery packs described in the embodiments, and can be configured as appropriate based on the contents described in the claims.

The above-described embodiments are detailed or simple descriptions for making the present invention easily understood, do not necessarily including all of the described configurations, and may include configurations not shown. Also, some of the configurations of the embodiments may be replaced by the configurations of other embodiments or combined with the configurations of other embodiments. For example, the bus bar 820 of the modification 1 of the third embodiment shown in Fig. 38 and the bus bar 840 of the modification 3 of the third embodiment shown in Fig. 40 may be combined together.

The number of the batteries 100 included in the battery pack 1 is not limited to 20. The number of the batteries 100 may be, for example, 2 to 19 or 21 or more. The battery 100 is not limited to lithium-ion batteries. As the battery 100, for example, a nickel hydrogen battery, a nickel-cadmium battery, or a lead battery can be applied. To the battery 100, a power storage element, for example, a lithium-ion capacitor or an electrolytic double layer capacitor, can be applied. The battery 100 is not limited to secondary batteries. To the battery 100, for example, a primary battery can be applied.

### Reference Signs List

- 1: Battery pack
- 11: Horn
- 12: Anvil
- 100: Battery
- 101: Container
- 102: Lid
- 103: Positive electrode terminal
- 104: Negative electrode terminal
- 105: Safety valve
- 200: Holding unit
- 201: First end spacer
- 202: Cell spacer
- 203: Second end spacer
- 211: First end block
- 212: Second end block
- 221: Insulating member
- 222: Insert nut
- 231: First side plate
- 232: Second side plate
- 241: Fastening bolt
- 300: Bus bar unit
- 310: First end bus bar
- 311: First member
- 312: Second member
- 320: Bus bar
- 320A: Solid-phase bonding portion
- 321: First member
- 321P: First mounting portion
- 321Q: First bent portion
- 321R: first contact portion
- 321S: Non-contact portion
- 321S1: First non-contact portion
- 321S2: Second non-contact portion
- 321S3: Third non-contact portion
- 321S4: Fourth non-contact portion
- 321a: Mounting surface
- 321b: First boundary
- 321c: Second boundary
- 321d: Contact surface
- 321e: Distal end
- 321t: Indentation portion
- 321v: Non-indentation portion
- 321w: Non-bonding region
- 321z: Non-bonding region
- 322: Second member
- 322P: Second mounting portion
- 322Q: Second bent portion
- 322R: Second contact portion
- 322S: Non-contact portion
- 322a: Mounting surface
- 322b: First boundary
- 322c: Second boundary
- 322d: Contact surface
- 322e: Distal end
- 322t: Indentation portion
- 322v: Non-indentation portion
- 322w: Non-bonding region
- 322z: Non-bonding region
- 330: Second end bus bar
- 331: First portion
- 332: Second portion
- 332i: Insertion hole
- 340: Bus bar holder
- 340a: Opening portion
- 340b: Holding portion
- 340c: Insertion portion
- 400: Voltage detection unit
- 401: Voltage detection terminal
- 402: Electric wire
- 500: Temperature measurement unit
- 501: Temperature sensor
- 502: Electric wire
- 610: Bus bar
- 610A: Solid-phase bonding portion
- 611: First member
- 611S: Non-contact portion
- 611e: Distal end
- 620: Bus bar
- 620A: Solid-phase bonding portion
- 622: Second member
- 622Q: Second bent portion
- 630: Bus bar
- 630A: Solid-phase bonding portion
- 631: First member
- 631S: Non-contact portion
- 631e: Distal end
- 631f1: Corner portion
- 631f2: Corner portion
- 640: Bus bar
- 640A: Solid-phase bonding portion
- 642: Second member
- 642g: Inclined portion
- 650: Bus bar
- 650A: Solid-phase bonding portion
- 652: Second member
- 652h: Recessed portion
- 660: Bus bar
- 660A: Solid-phase bonding portion
- 661: First member
- 661S: Non-contact portion
- 661e: Distal end
- 662: Second member
- 670: Bus bar
- 670A: Solid-phase bonding portion
- 671: First member
- 671R: Contact portion
- 671S: Non-contact portion
- 671e: Distal end
- 671f: Corner portion
- 680: Bus bar
- 680A: Solid-phase bonding portion
- 681: First member
- 681S: Non-contact portion
- 681e: Distal end
- 682: Second member
- 682h: Recessed portion
- 690: Bus bar
- 690A: Solid-phase bonding portion
- 691: First member
- 691Q: First bent portion
- 691b: First boundary
- 692: Second member
- 692P: Second mounting portion
- 692Q: Second bent portion
- 692R: Second contact portion
- 692b: First boundary
- 692c: Second boundary
- 710: Bus bar
- 710A: Solid-phase bonding portion
- 711: First member
- 711R: First contact portion
- 711S: Non-contact portion
- 711d: Contact surface
- 711e: Distal end
- 712: Second member
- 712R: Second contact portion
- 712d: Contact surface
- 720: Bus bar
- 720A: Solid-phase bonding portion
- 721: First member
- 721S: Non-contact portion
- 721e: Distal end
- 721f: Corner portion
- 722: Second member
- 722R: Contact portion
- 730: Bus bar
- 730A: Solid-phase bonding portion
- 732: Second member
- 732R: Second contact portion
- 732e: Distal end
- 732f: Corner portion
- 740: Bus bar
- 740A: Solid-phase bonding portion
- 742: Second member
- 742h: Recessed portion
- 750: Bus bar
- 750A: Solid-phase bonding portion
- 751: First member
- 751S: Non-contact portion
- 751e: Distal end
- 760: Bus bar
- 760A: Solid-phase bonding portion
- 762: Second member
- 762e: Distal end
- 810: Bus bar
- 810A: Solid-phase bonding portion
- 811: First member
- 812: Second member
- 812S: Non-contact portion
- 812e: Distal end
- 812f: Corner portion
- 820: Bus bar
- 822: Second member
- 822S: Second non-contact portion
- 822e: Distal end
- 830: Bus bar
- 831: First member
- 831h: Recessed portion
- 832: Second member
- 832S: Second non-contact portion
- 832e: Distal end
- 840: Bus bar
- 840A: Solid-phase bonding portion
- 841: First member
- 850: Bus bar
- 850A: Solid-phase bonding portion
- 851: First member
- 860: Bus bar
- 860A: Solid-phase bonding portion
- 862: Second member
- 862g: Inclined portion
- 870: Bus bar
- 870A: Solid-phase bonding portion
- 872: Second member
- 872h: Recessed portion
- 880: Bus bar
- 880A: Solid-phase bonding portion
- 881: First member
- 882: Second member
- 910: Bus bar
- 910A: Solid-phase bonding portion
- 911: First member
- 912: Second member
- 1010: Bus bar
- 1010A: Solid-phase bonding portion
- 1012: Second member
- 1110: Bus bar
- 1110: Bus bar
- 1111U: Overlapping portion
- 1111g: Rear surface
- 1112U: Overlapping portion
- 1112g: Rear surface
- X: Lamination direction (of battery pack 1)
- Y: Width direction (of battery pack 1)
- Z: Height direction (of battery pack 1)
- A: Lamination direction (of first member 321 or like and second member 322 or like)
- B: Vibration direction (in solid-phase bonding of first member 321 or like and second member 322 or like)
- B1: First vibration direction
- B2: Second vibration direction
- C: Direction orthogonal to vibration direction B

## Claims

1. A battery pack comprising:
a plurality of batteries; and
a bus bar connected to one of the batteries and another of the batteries or connected to one of the batteries and connected to an external electrical device, wherein
the bus bar has
a first member having conductivity, and
a second member having conductivity, being laminated and bonded with the first member, and having lower hardness than the first member,
the first member includes
a first mounting portion mounted on an electrode terminal of the one battery or the electrical device,
a first contact portion that is continuous with the first mounting portion and is in contact with the second member in a lamination direction, and
a non-contact portion that is continuous with the first contact portion and is at least partially not in contact with the second member in the lamination direction,
the second member includes
a second mounting portion mounted on an electrode terminal of the another battery, and
a second contact portion that is continuous with the second mounting portion and is in contact with the first contact portion of the first member in the lamination direction,
the first contact portion of the first member and the second contact portion of the second member include a solid-phase bonding portion, the non-contact portion of the first member is located closer to the second mounting portion of the second member than the solid-phase bonding portion,
the bas bar has at least one or more configurations of the following configuration (1), configuration (2), configuration (3), configuration (4), configuration (5) and configuration (6) are included,
in the configuration (1),
at least a distal end of the non-contact portion of the first member is inclined with respect to a direction intersecting with the lamination direction and is separated from the second contact portion of the second member,
in the configuration (2),
the first member has the solid-phase bonding portion formed at a place that does not overlap with the first mounting portion in the lamination direction,
the second member includes a bent portion that is bent from the second contact portion from one end toward the other end in the lamination direction between the second contact portion and the second mounting portion, and
at least the distal end of the non-contact portion of the first member is separated from the bent portion of the second member,
in the configuration (3),
the distal end of the non-contact portion of the first member includes a curved or inclined corner portion facing the second member in the lamination direction, and
a length of the corner portion of the first member along the lamination direction is 1/10 or more of a length of the non-contact portion of the first member along the lamination direction or 0.1 mm or more,
in the configuration (4),
the second member includes an inclined portion that is inclined from the second contact portion toward the direction intersecting with the lamination direction between the second contact portion and the second mounting portion, and
at least the distal end of the non-contact portion of the first member is separated from the inclined portion of the second member,
in the configuration (5),
the second member includes a recessed portion that is recessed in a direction apart from the non-contact portion of the first member with respect to the lamination direction between the second contact portion and the second mounting portion, and
at least the distal end of the non-contact portion of the first member is separated from the recessed portion of the second member, and
in the configuration (6),
a pair of the non-contact portions of the first member are formed on both sides of the first contact portion of the first member, and
at least distal ends of the pair of non-contact portions of the first member are each separated from the second member.

2. The battery pack according to claim 1, wherein
the first member contains copper, and
the second member contains aluminum.

3. The battery pack according to claim 1, wherein
in the configuration (1), the configuration (2), the configuration (3),
the configuration (4), and the configuration (5),
the non-contact portion of the first member is located in a region relatively closer to the second contact portion than the second mounting portion of the second member in a direction intersecting with the lamination direction.

4. The battery pack according to claim 1, wherein
in the configuration (1),
the second member includes a bent portion bent along the lamination direction from the second contact portion between the second contact portion and the second mounting portion, and
at least the distal end of the non-contact portion of the first member is located in a region relatively closer to the second contact portion than the bent portion of the second member.

5. The battery pack according to claim 1, wherein
in the configuration (2),
the distal end of the non-contact portion of the first member is separated from and faces the bent portion of the second member in the lamination direction.

6. The battery pack according to claim 1, wherein
in the configuration (2),
two or more bent portions are continuously included in the second member.

7. The battery pack according to claim 1, wherein
in the configuration (3),
the second member includes a bent portion bent along the lamination direction from the second contact portion between the second contact portion and the second mounting portion, and
the corner portion of the first member is located in a region relatively closer to the second contact portion than the bent portion of the second member.

8. The battery pack according to claim 1, wherein
in the configuration (4),
the distal end of the non-contact portion of the first member is separated from and faces the inclined portion of the second member in the lamination direction.

9. The battery pack according to claim 1, wherein
in the configuration (1), the configuration (2), the configuration (3),
the configuration (4), and the configuration (5),
the non-contact portion of the first member has no region facing the second member along a direction orthogonal to the lamination direction.

10. The battery pack according to claim 1, wherein
in the configuration (1), the configuration (3), and the configuration (5),
the non-contact portion of the first member has a region facing the second member along a direction orthogonal to the lamination direction.

11. The battery pack according to claim 1, wherein
the solid-phase bonding portion is formed in a rectangular shape, and
the first contact portion of the first member and the second contact portion of the second member are solid-phase bonded in the direction intersecting with the lamination direction and on a side where the non-contact portion of the first member is located and a side facing a longitudinal direction of the solid-phase bonding portion.

12. A battery pack comprising:
a plurality of batteries; and
a bus bar connected to one of the batteries and another of the batteries or connected to one of the batteries and connected to an external electrical device, wherein
the bus bar includes
a first member having conductivity, and
a second member having conductivity, being laminated and bonded with the first member, and being made of the same material as the first member,
the first member includes
a first mounting portion mounted on an electrode terminal of the one battery or the electrical device,
a first contact portion that is continuous with the first mounting portion and is in contact with the second member in a lamination direction, and
a first non-contact portion that is continuous with the first contact portion and is at least partially not in contact with the second member in the lamination direction,
the second member includes
a second mounting portion mounted on an electrode terminal of the another battery,
a second contact portion that is continuous with the second mounting portion and is in contact with the first contact portion of the first member in the lamination direction, and
a second non-contact portion that is continuous with the second contact portion and is at least partially not in contact with the first contact portion of the first member in the lamination direction,
the first contact portion of the first member and the second contact portion of the second member include a solid-phase bonding portion,
the first non-contact portion of the first member is located closer to the second mounting portion of the second member than the solid-phase bonding portion,
the second non-contact portion of the second member is located closer to the first mounting portion of the first member than the solid-phase bonding portion, and
bas bar has at least one or more configurations of the following configuration (1), configuration (2), configuration (3), configuration (4), configuration (5), and configuration (6) and at least one or more configurations of the following configuration (7), configuration (8),
and configuration (9) are included,
in the configuration (1),
at least a distal end of the first non-contact portion of the first member is inclined with respect to a direction intersecting with the lamination direction and is separated from the second contact portion of the second member,
in the configuration (2),
the first member has the solid-phase bonding portion formed at a place that does not overlap with the first mounting portion in the lamination direction,
the second member includes a second bent portion that is bent along the lamination direction from the second contact portion between the second contact portion and the second mounting portion, and
at least a distal end of the first non-contact portion of the first member is separated from the second bent portion of the second member,
in the configuration (3),
a distal end of the first non-contact portion of the first member includes a curved or inclined corner portion facing the second member in the lamination direction, and
a length of the corner portion of the first member along the lamination direction is 1/10 or more of a length of the first non-contact portion of the first member along the lamination direction or 0.1 mm or more,
in the configuration (4),
the second member includes a second inclined portion that is inclined from the second contact portion toward the direction intersecting with the lamination direction between the second contact portion and the second mounting portion, and
at least a distal end of the first non-contact portion of the first member is separated from the second inclined portion of the second member,
in the configuration (5),
the second member includes a recessed portion that is recessed in a direction apart from the first non-contact portion of the first member with respect to the lamination direction between the second contact portion and the second mounting portion, and
at least a distal end of the first non-contact portion of the first member is separated from the recessed portion of the second member,
in the configuration (6),
a pair of the first non-contact portions of the first member are formed on both sides of the first contact portion of the first member, and
at least distal ends of the pair of first non-contact portions of the first member are each separated from the second member,
in the configuration (7),
a distal end of the second non-contact portion of the second member includes a curved or inclined corner portion facing the first member in the lamination direction, and
a length of the corner portion of the second member along the lamination direction is 1/10 or more of a length of the second non-contact portion of the second member along the lamination direction or 0.1 mm or more,
in the configuration (8),
at least a distal end of the second non-contact portion of the second member is inclined with respect to the direction intersecting with the lamination direction and is separated from the first contact portion of the first member, and
in the configuration (9),
the first member includes a recessed portion that is recessed in the direction apart from the second non-contact portion of the second member with respect to the lamination direction between the first contact portion and the first mounting portion, and
at least a distal end of the second non-contact portion of the second member is separated from the recessed portion of the first member.

13. The battery pack according to claim 11, wherein
the first member and the second member each contain aluminum or copper.

14. The battery pack according to claim 1 or 12, wherein
the first contact portion of the first member and the second contact portion of the second member include a solid-phase bonding portion solid-phase bonded in a direction that intersects with the lamination direction and includes at least a side where the first non-contact portion of the first member and the second non-contact portion of the second member are located.

15. A battery pack comprising:
a plurality of batteries; and
a bus bar connected to one of the batteries and another of the batteries or connected to one of the batteries and connected to an external electrical device, wherein
the bus bar has
a first member having conductivity, and
a second member having conductivity, being laminated and bonded with the first member, and having lower hardness than the first member,
the first member includes
a first contact portion in contact with the second member in a lamination direction, and
a non-contact portion that is annularly continuous with the first contact portion from the outside of the first contact portion on a surface of the first contact portion that intersects with the lamination direction and includes an annular portion that is not contact with the second member in the lamination direction,
the second member includes a second contact portion that is in contact with the first contact portion of the first member in the lamination direction,
the non-contact portion of the first member annularly surrounds the second contact portion of the second member on a surface intersecting with the lamination direction, and
the first contact portion of the first member and the second contact portion of the second member include a solid-phase bonding portion annularly solid-phase bonded on a surface intersecting with the lamination direction and along a region where the non-contact portion of the first member is located.

16. A battery pack comprising:
a plurality of laminated batteries each including an electrode terminal; and
a bus bar connected to an electrode terminal of a first battery, an electrode terminal of a second battery electrically connected to the first battery, or an external electrical device, wherein
the bus bar has
a first member having conductivity, a second member having conductivity,
an overlapping portion in which the first member and the second member are partially overlapped, and a solid-phase bonding portion formed on the overlapping portion,
the first member has
a first mounting portion having a first mounting surface connected to any of the first battery or the electrical device and a first rear surface located on an opposite side of the first mounting surface,
a first overlapping portion configuring the overlapping portion, and
the solid-phase bonding portion formed on the first overlapping portion and disposed apart from the first rear surface,
the second member has
a second mounting portion having a second mounting surface connected to any of the second battery or the electrical device in a case where the first member is connected to the first battery or the first battery in a case where the first member is connected to the electrical device, and a second rear surface located on an opposite side of the second mounting surface,
a second overlapping portion configuring the overlapping portion, and
the solid-phase bonding portion formed on the second overlapping portion and disposed apart from the second rear surface, and
the first overlapping portion has
a non-contact portion located apart from the second overlapping portion in an overlapping direction of the first overlapping portion and the second overlapping portion, and
a distal end formed in the non-contact portion.

17. The battery pack according to claim 16, wherein
the first member is a first metal plate formed of a first metal material, and
the second member is a second metal plate formed of a second metal material having smaller hardness than hardness of the first metal plate.

18. The battery pack according to claim 17, wherein
the first overlapping portion is disposed further apart from the battery than the second overlapping portion, or
the second overlapping portion is disposed further apart from the battery than the first overlapping portion.

19. The battery pack according to claim 17, wherein
in the first overlapping portion, the non-contact portion has a first non-contact portion located apart from the second contact surface in the overlapping direction,
the distal end has a first distal end formed in the first non-contact portion,
the second overlapping portion has, in the overlapping direction,
a second non-contact portion located apart from the first connection surface, and a second distal end formed on the second non-contact portion, and
in the overlapping direction,
the first overlapping portion has the first distal end in which a length from the second contact surface to the first distal end is longer than a length from the first contact surface to the second distal end.

20. The battery pack according to any one of claims 16 to 19, comprising at least one configuration of the following (1), (2), (3), (4), and (5):
(1) the non-contact portion of the first member has, between the solid-phase bonding portion and the distal end, a first portion and a second portion closer to the distal end than the first portion, in which in the second portion, an interval between the first overlapping portion and the second overlapping portion in the overlapping direction has a larger interval than the first portion;
(2) the first overlapping portion has a first contact surface that includes the solid-phase bonding portion and is in contact with the second overlapping portion,
the second overlapping portion has a second contact surface that includes the solid-phase bonding portion and is in contact with the first overlapping portion, and
the second overlapping portion of the second member has a bent portion that is bent in a direction apart from the first contact surface in the overlapping direction between the solid-phase bonding portion and the distal end;
(3) the distal end of the first overlapping portion includes a first corner portion having an arc shape or an inclined shape on the second overlapping portion side,
in a case where the distal end has the second corner portion having an arc shape or an inclined shape formed on a surface side of the distal end opposite to the second overlapping portion side, or a third corner portion having an arc shape or an inclined shape formed at a distal end of the first mounting portion,
in the overlapping direction, a length of the first corner portion is longer than a length of the second corner portion or the third corner portion;
(4) the second overlapping portion includes a recessed portion that is recessed in a direction apart from the first overlapping portion or an inclined portion,
the recessed portion or the inclined portion is disposed to overlap with the distal end in the overlapping direction, and
the first overlapping portion has the distal end disposed not in contact with the recessed portion or the inclined portion; and
(5) the first overlapping portion has a first contact surface that includes the solid-phase bonding portion and is in contact with the second overlapping portion,
the second overlapping portion has a second contact surface that includes the solid-phase bonding portion and is in contact with the first overlapping portion,
the first overlapping portion has, in the overlapping direction,
an inclined portion inclined to a side apart from the second contact surface at a portion of the solid-phase bonding portion on the distal end side, and
the inclined portion has the non-contact portion located apart from the second contact surface and the distal end formed on the non-contact portion.
